# EUROPÄISCHE PATENTSCHRIFT

(11) **EP 2 513 201 B1**
(45) Veröffentlichungstag und Bekanntmachung des Hinweises auf die Patenterteilung: **16.07.2014**
(21) Anmeldenummer: 10792912.7
(22) Anmeldetag: 15.12.2010
(51) Int. Cl.: C08G 83/00, C08G 73/06

(54) **FUNKTIONALISIERTE HOCHVERZWEIGTE MELAMIN-POLYAMIN-POLYMERE**
FUNCTIONALISED HYPERBRANCHED MELAMINE-POLYAMINE POLYMERS
POLYMÈRE DE POLYAMINE MÉLAMINÉ FONCTIONNALISÉ HYPERRAMIFIÉ

(30) Priorität: 16.12.2009 EP 09179490
(43) Veröffentlichungstag der Anmeldung: 24.10.2012
(73) Patentinhaber: BASF SE, 67056 Ludwigshafen (DE)
(72) Erfinder: PERETOLCHIN, Maxim, 68161 Mannheim (DE); REINOSO GARCIA, Marta, 69221 Dossenheim (DE); TÜRK, Holger, 68161 Mannheim (DE); SCHÖNFELDER, Daniel, B-1000 Bruxelles (BE); EBERT, Sophia, 68165 Mannheim (DE)
(86) Internationale Anmeldenummer: PCT/EP2010/069735
(87) Internationale Veröffentlichungsnummer: WO 2011/073246

(56) Entgegenhaltungen:
- WO-A1-2008/148766
- WO-A1-2009/080787

## Beschreibung

Die vorliegende Erfindung betrifft ein Verfahren zur Herstellung von amphiphilen funktionalisierten hochverzweigten Melamin-Polyamin-Polymeren durch Kondensation von Melamin und gegebenenfalls eines Melaminderivats mit wenigstens einem davon verschiedenen Amin mit wenigstens zwei primären Aminogruppen und gegebenenfalls außerdem noch mit Harnstoff und/oder wenigstens einem Hamstoffderivat und/oder mit wenigstens einem wenigstens difunktionellen Di- oder Polyisocyanat und/oder wenigstens einer Carbonsäure mit wenigstens zwei Carboxylgruppen oder wenigstens einem Derivat davon, optional Quaternisierung eines Teils der Aminogruppen des dabei erhaltenen Polymerabschnitts, Umsetzung des erhaltenen Polymerabschnitts mit wenigstens einer Verbindung, die mit Aminogruppen eine Kondensations- oder Additionsreaktion eingehen kann, und optional Quaternisierung wenigstens eines Teils der Aminogruppen des im ersten Schritt erhaltenen Polymerabschnitts. Außerdem betrifft die Erfindung die durch das erfindungsgemäße Verfahren erhältlichen amphiphilen funktionalisierten hochverzweigten Melamin-Polyamin-Polymere und deren Verwendung als oberflächenaktives Mittel.

Amphiphile Polymere und ihre Verwendung als oberflächenaktive Mittel, z. B. als Tenside, Emulgatoren, Dispergiermittel oder Solubilisatoren, sind grundsätzlich bekannt. Eine wichtige Klasse sind Oligo-/Polyethylenoxid- oder Oligo-/Polypropylenoxidmodifizierte Polyethylenimine. Ein Nachteil dieser Systeme ist, dass das den Polymeren zugrundeliegende Polyethylenimin (PEI) nur sehr eingeschränkt variiert werden kann (z. B. über die Veränderung der Kettenlänge oder des Verzweigungsgrads), so dass auch die Eigenschaften der EO- bzw. PO-modifizierten Polyethylenimine, insbesondere deren Oberflächenaktivität, nur sehr bedingt verändert werden können. Dies stellt natürlich für das "Feintuning" der Eigenschaften des Anwendungsprodukts einen nicht unerheblichen Nachteil dar.

Aufgabe der vorliegenden Erfindung war es daher, funktionalisierte Polymere, deren Eigenschaften, insbesondere Oberflächeneigenschaften, leicht verändert werden können, sowie ein Herstellungsverfahren dafür zur Verfügung zu stellen.

Die Aufgabe wird durch das nachfolgend beschriebene Verfahren sowie durch die damit erhältlichen Polymere gelöst.

Gegenstand der Erfindung ist ein Verfahren zur Herstellung amphiphiler funktionatisierter hochverzweigter Melamin-Polyamin-Polymere, umfassend folgende Schritte:
Verfahren A:
   (A-i) Kondensation von
      (A-i.1) Melamin und gegebenenfalls wenigstens einem Melaminderivat mit
      (A-i.2) wenigstens einem davon verschiedenen Amin mit wenigstens zwei primären Aminogruppen;
         und gegebenenfalls außerdem noch mit
      (A-i.3) Harnstoff und/oder wenigstens einem Harnstoffderivat; und/oder
      (A-i.4) wenigstens einem wenigstens difunktionellen Di- oder Polyisocyanat; und/oder
      (A-i.5) wenigstens einer Carbonsäure mit wenigstens zwei Carboxylgruppen oder wenigstens einem Derivat davon;
   (A-ii) gegebenenfalls Quaternisierung eines Teils der Aminogruppen des in Schritt (A-i) erhaltenen Polymerabschnitts;
   (A-iii) Umsetzung des in Schritt (A-i) oder (A-ii) erhaltenen Polymerabschnitts mit wenigstens einer Verbindung, die mit Aminogruppen eine Kondensations- oder Additionsreaktion eingehen kann und die zur Bildung eines hydrophoben Polymerabschnitts führt, wobei die Verbindung ausgewählt ist unter
      - aliphatischen C₄-C₂₂-Monocarbonsäuren oder Derivaten davon;
      - α,β-Dicarbonsäuren mit wenigstens 6 Kohlenstoffatomen oder Derivaten davon;
      - aliphatischen, cycloaliphatischen oder aromatischen gegebenenfalls verkappten Isocyanaten mit wenigstens 6 Kohlenstoffatomen;
      - aliphatischen Monoaminen mit wenigstens 6 Kohlenstoffatomen;
      - aliphatischen Polyaminen, in denen alle Aminogruppen linear zueinander angeordnet sind, mit einem Verhältnis der Anzahl der im Polyamin enthaltenen Kohlenstoffatome zur Anzahl der enthaltenen Stickstoffatome von wenigstens 2,5:1;
      - Alkylenoxiden mit wenigstens 3 Kohlenstoffatomen, die ausgewählt sind unter Propylenoxid, Butylenoxid, Pentylenoxid und Styroloxid;
      - Polyetheraminen der Formel V

         NH₂-[A⁴-O]ₚ-A⁴-NH₂ (V)

         worin
         jedes A⁴ unabhängig für lineares oder verzweigtes C₃-C₄-Alkylen steht; und
         p für eine Zahl von 1 bis 5000 steht;
      - Ketonen oder Aldehyden mit wenigstens 6 Kohlenstoffatomen; und
      - Aldehyden in Kombination mit wenigstens einer CH-aciden Verbindung mit wenigstens 4 Kohlenstoffatomen oder mit wenigstens einem Hydroxyaromaten, der wenigstens einen aliphatischen Rest mit wenigstens 4 Kohlenstoffatomen als Substituenten trägt;
      wobei für den Fall, dass die wenigstens eine in Schritt (A-iii) eingesetzte Verbindung ausgewählt ist unter Alkylenoxiden mit wenigstens 3 Kohlenstoffatomen, der Umsetzung mit diesem wenigstens einen Alkylenoxid eine Umsetzung mit Ethylenoxid vorausgehen kann; und
   (A-iv) gegebenenfalls Quaternisierung wenigstens eines Teils der Aminogruppen des in Schritt (A-i) erhaltenen Polymerabschnitts;
      wobei in Schritt (A-i), (A-ii) oder (A-iv) ein hydrophiler Polymerabschnitt erhalten wird,
      oder
Verfahren B:
   (B-i) Kondensation von
      (B-i.1) Melamin und gegebenenfalls wenigstens einem Melaminderivat mit
      (B-i.2) wenigstens einem davon verschiedenen Amin mit wenigstens zwei primären Aminogruppen;
         und gegebenenfalls außerdem noch mit
      (B-i.3) Harnstoff und/oder wenigstens einem Harnstoffderivat; und/oder
      (B-i.4) wenigstens einem wenigstens difunktionellen Di- oder Polyisocyanat; und/oder
      (B-i.5) wenigstens einer Carbonsäure mit wenigstens zwei Carboxylgruppen oder wenigstens einem Derivat davon;
      wobei in Schritt (B-i) ein hydrophober Polymerabschnitt erhalten wird; und
   (B-iii) Umsetzung des in Schritt (B-i) erhaltenen hydrophoben Polymerabschnitts mit wenigstens einer Verbindung, die mit Aminogruppen eine Kondensations- oder Additionsreaktion eingehen kann und die zur Bildung eines hydrophilen Polymerabschnitts führt, wobei die Verbindung ausgewählt ist unter
      - Polyaminen mit zwei primären Aminogruppen und wenigstens einer weiteren Aminogruppe und/oder wenigstens einem Ether-Sauerstoffatom, in denen das Verhältnis der Anzahl der im Polyamin enthaltenen Kohlenstoffatome zur Anzahl der enthaltenen Stickstoffatome und gegebenenfalls enthaltenen Sauerstoffatome kleiner 2,5:1 ist; und
      - Ethylenoxid;
      wobei für den Fall, dass die wenigstens eine in Schritt (B-iii) eingesetzte Verbindung Ethylenoxid ist, der Umsetzung mit Ethylenoxid eine Umsetzung mit wenigstens einen Alkylenoxid mit wenigstens 3 Kohlenstoffatomen, das ausgewählt ist unter Propylenoxid, Butylenoxid, Pentylenoxid und Styroloxid, vorausgehen kann.

Gegenstand der Erfindung sind auch Polymere, die mit dem erfindungsgemäßen Verfahren erhältlich sind.

Im Rahmen der vorliegenden Erfindung wird der Begriff "Polymer" breit verstanden und umfasst Polymerisate, Polyaddukte und Polykondensate, d. h. er legt nicht fest, auf welchem Weg die Propagierung der Kette verläuft. Am häufigsten bezeichnet er in der vorliegenden Erfindung Polykondensate und Polyaddukte.

Unter hochverzweigten Polymeren versteht man im Rahmen der vorliegenden Erfindung Polymere mit einer verzweigten Struktur und einer hohen Funktionalität, d. h. einer hohen Dichte an funktionellen Gruppen. Bezüglich einer allgemeinen Definition von hochverzweigten Polymeren wird auf P.J. Flori, J. Am. Chem. Soc., 1952, 74, 2718, und H. Frey et al., Chem. Eur. J., 2000, 6, Nr. 14, 2499 verwiesen. Hierunter fallen Sternpolymere, Dendrimere, strukturell und molekular uneinheitliche hochverzweigte Polymere und davon verschiedene hochmolekulare verzweigte Polymere, wie Kammpolymere. Sternpolymere sind solche Polymere, bei denen drei oder mehr Ketten von einem Zentrum ausgehen. Bei dem Zentrum kann es sich um ein einzelnes Atom oder um eine Gruppe von Atomen handeln. Dendrimere (Kaskadenpolymere) sind molekular einheitliche Polymere mit einer hochsymmetrischen Struktur. Sie leiten sich strukturell von Sternpolymeren ab, wobei ihre Ketten wieder sternartig verzweigen. Dendrimere werden ausgehend von kleinen Molekülen durch wiederholte Reaktionssequenzen hergestellt. Die Anzahl der Monomer-Endgruppen wächst mit jedem Reaktionsschritt exponentiell und resultiert in einer sphärischen, baumartigen Struktur. Aufgrund ihrer einheitlichen Struktur besitzen Dendrimere ein einheitliches Molekulargewicht.

Im Rahmen der vorliegenden Erfindung werden vorzugsweise hochverzweigte Polymere bereitgestellt, die von Dendrimeren verschieden sind, d. h. die sowohl strukturell als auch molekular uneinheitlich sind (und damit kein einheitliches Molekulargewicht, sondern eine Molekulargewichtsverteilung aufweisen). Je nach Reaktionsführung können sie einerseits ausgehend von einem Zentralmolekül analog zu Dendrimeren, jedoch mit uneinheitlicher Kettenlänge der Äste, aufgebaut sein. Andererseits können Sie auch von linearen Molekülen ausgehen und mit verzweigten funktionellen Seitengruppen aufgebaut sein.

"Hochverzweigt" bedeutet im Rahmen der vorliegenden Erfindung außerdem, dass der Verzweigungsgrad (Degree of Branching, DB) 10 bis 99,9 %, bevorzugt 20 bis 99 % und insbesondere von 20 bis 95 % beträgt. Unter dem Verzweigungsgrad versteht man die mittlere Anzahl dendritischer Verknüpfungen plus mittlerer Anzahl der Endgruppen pro Molekül, geteilt durch die Summe aus mittlerer Anzahl der dendritischen Verknüpfungen, der mittleren Anzahl der linearen Verknüpfungen und der mittleren Anzahl der Endgruppen, multipliziert mit 100. Unter "dendritisch" wird in diesem Zusammenhang verstanden, dass der Verzweigungsgrad an dieser Stelle im Molekül 99,9 bis 100 % beträgt. Zur Definition des Verzweigungsgrades wird auch auf H. Frey et al., Acta. Polym. 1997, 48, 30, verwiesen.

Die erfindungsgemäßen hochverzweigten Polymere sind im Wesentlichen nicht vernetzt. "Im Wesentlichen nicht vernetzt" oder "unvernetzt" bedeutet im Sinne der vorliegenden Erfindung, dass ein Vernetzungsgrad von weniger als 15 Gew.-%, vorzugsweise von weniger als 10 Gew.-% vorhanden ist, wobei der Vernetzungsgrad über den unlöslichen Anteil des Polymers bestimmt wird. Der unlösliche Anteil des Polymeren wird beispielsweise durch 4-stündige Extraktion mit dem gleichen Lösungsmittel, wie es für die Gelpermeationschromatographie (GPC) verwendet wird, das heißt vorzugsweise Dimethylacetamid oder Hexafluorisopropanol, je nachdem, in welchem der Lösungsmittel das Polymer besser löslich ist, in einer Soxhlet-Apparatur und, nach Trocknung des Rückstands bis zur Gewichtskonstanz, Wägung des verbliebenen Rückstandes, bestimmt.

Vorzugsweise weisen die erfindungsgemäßen hochverzweigten Polymere ein zahlenmittleres Molekulargewicht Mₙ von wenigstens 500, z. B. von 500 bis 200.000 oder vorzugsweise von 500 bis 100.000 oder besonders bevorzugt von 500 bis 50.000 oder stärker bevorzugt von 500 bis 30.000 oder noch stärker bevorzugt von 500 bis 20.000 oder insbesondere von 500 bis 10.000; besonders bevorzugt von wenigstens 750, z. B. von 750 bis 200.000 oder vorzugsweise von 750 bis 100.000 oder besonders bevorzugt von 750 bis 50.000 oder stärker bevorzugt von 750 bis 30.000 oder noch stärker bevorzugt von 750 bis 20.000 oder insbesondere von 750 bis 10.000; und insbesondere von wenigstens 1000, z. B. von 1000 bis 200.000 oder vorzugsweise von 1000 bis 100.000 oder besonders bevorzugt von 1000 bis 50.000 oder stärker bevorzugt von 1000 bis 30.000 oder noch stärker bevorzugt von 1000 bis 20.000 oder insbesondere von 1000 bis 10.000, auf.

Vorzugsweise weisen die erfindungsgemäßen hochverzweigten Polymere ein gewichtsmittleres Molekulargewicht M_{w} von wenigstens 1000, z. B. von 1000 bis 1.000.000 oder vorzugsweise von 1000 bis 500.000 oder besonders bevorzugt von 1000 bis 300.000 oder stärker bevorzugt von 1000 bis 200.000 oder speziell von 1000 bis 30.000; besonders bevorzugt von wenigstens 1500, z. B. von 1500 bis 1.000.000 oder vorzugsweise von 1500 bis 500.000 oder besonders bevorzugt von 1500 bis 300.000 oder stärker bevorzugt von 1500 bis 200.000 oder speziell von 1500 bis 30.000; und insbesondere von wenigstens 2000, z. B. von 2000 bis 1.000.000 und vorzugsweise von 2000 bis 500.000 oder besonders bevorzugt von 2000 bis 300.000 oder stärker bevorzugt von 2000 bis 200.000 oder speziell von 2000 bis 30.000, auf.

Die Polydispersität (PD = M_{w}/Mₙ) liegt vorzugsweise im Bereich von 1,1 bis 250, besonders bevorzugt von 1,3 bis 100, stärker bevorzugt von 1,4 bis 50 und insbesondere von 1,4 bis 50.

Die im Rahmen der vorliegenden Erfindung gemachten Angaben zu Molekulargewichten (Mₙ, M_{w}) und der Polydispersität beziehen sich auf Werte, die sich mit Gelpermeationschromatographie (GPC) in einem geeigneten Lösungsmittel, wie Hexafluorisopropanol, Tetrahydrofuran, N,N-Dimethylacetamid oder Wasser, mit PMMA-Kalibrierung ergeben.

Das erfindungsgemäße Verfahren dient zur Herstellung amphiphiler funktionalisierter hochverzweigter Melamin-Polyamin-Polymere. Als amphiphil werden (monomere oder polymere) Verbindungen bezeichnet, die sowohl hydrophile als auch lipophile Eigenschaften besitzen. Unter amphiphilen Polymeren versteht man im Rahmen der vorliegenden Efindung Polymere, die Polymerabschnitte unterschiedlicher Polarität aufweisen, d.h. wenigstens einen (vorzugsweise einen) Polymerabschnitt mit hydrophilen Eigenschaften und wenigstens einen (vorzugsweise einen) Polymerabschnitt mit lipophilen Eigenschaften. Die Begriffe "lipophil" und "hydrophil" werden im Rahmen der vorliegenden Erfindung, sofern nichts anderes erwähnt ist, als Relativbegriffe verwendet; d. h. ein hydrophiler Abschnitt im erfindungsgemäßen Polymer ist ein Abschnitt, der polarer ist als ein lipophiler Abschnitt. Der Polaritätsunterschied darf dabei selbstverständlich nicht marginal sein, sondern muss so groß sein, dass ein amphiphiles Polymer entsteht. Die Amphiphilie muss dabei so groß sein, dass das Polymer grenzflächenaktiv ist und beispielsweise als Tensid oder Emulgator eingesetzt werden kann.

Der Begriff "Polymerabschnitt" bezeichnet einen Teil des Polymermoleküls, der sich durch gewisse Eigenschaften, hier durch bestimmte einpolymerisierte Monomere oder allgemeiner durch eine bestimmte Polarität von dem oder den anderen Polymerabschnitt(en) des Polymers unterscheidet. Bei linearen Copolymeren werden solche Abschnitte auch als Polymerblöcke bezeichnet; bei Kem/Hülle-Polymeren bilden Kern und Hülle verschiedene Polymerabschnitte.

Das Verfahrensprodukt der Schritte (A-i) bzw. (B-i) und (A-ii) wird teilweise als Polymerabschnitt bezeichnet, obwohl es sich eigentlich um ein in sich abgeschlossenes Polymer handelt. Da dieses aber in Schritt (A-iii) bzw. (B-iii) und im optionalen Schritt (A-iv) weiter umgesetzt wird und es im fertigen Polymer nur noch einen Teil dessen darstellt, wird es bereits in den Schritten (A-i) bzw. (B-i) und (A-ii) als "Abschnitt" bezeichnet.

Werden keine anderen Angaben gemacht, so gelten im Rahmen der vorliegenden Erfindung folgende allgemeine Definitionen:
C₁-C₄-Alkyl steht für einen linearen oder verzweigten Alkylrest mit 1 bis 4 Kohlenstoffatomen. Dies sind Methyl, Ethyl, n-Propyl, Isopropyl, n-Butyl, sec-Butyl, Isobutyl und tert-Butyl.

Lineares C₁-C₄-Alkyl steht für einen linearen Alkylrest mit 1 bis 4 Kohlenstoffatomen. Dies sind Methyl, Ethyl, n-Propyl und n-Butyl.

C₂-C₆-Alkyl steht für einen linearen oder verzweigten Alkylrest mit 2 bis 6 Kohlenstoffatomen. Beispiele sind Ethyl, n-Propyl, Isopropyl, n-Butyl, sec-Butyl, Isobutyl, tert-Butyl, Pentyl, Hexyl und deren Konstitutionsisomere.

C₁-C₁₂-Alkyl steht für einen linearen oder verzweigten Alkylrest mit 1 bis 12 Kohlenstoffatomen. Beispiele hierfür sind Methyl, Ethyl, n-Propyl, Isopropyl, n-Butyl, sec-Butyl, Isobutyl, tert-Butyl, Pentyl, Neopentyl, Hexyl, Heptyl, Octyl, 2-Ethylhexyl, Nonyl, Decyl, 2-Propylheptyl, 4-Methyl-2-propylhexyl, Undecyl, Dodecyl und deren Konstitutionsisomere.

C₁-C₂₀-Alkyl steht für einen linearen oder verzweigten Alkylrest mit 1 bis 20 Kohlenstoffatomen. Beispiele hierfür sind neben den zuvor bei C₁-C₁₂-Alkyl genannten Resten Tridecyl, Tetradecyl, Pentadecyl, Hexadecyl, Heptadecyl, Octadecyl, Nonadecyl, Eicosyl und deren Konstitutionsisomere.

C₂-C₄-Alkyl steht für einen linearen oder verzweigten Alkylrest mit 2 bis 4 Kohlenstoffatomen, in dem ein Wasserstoffatom durch eine Hydroxygruppe ersetzt ist. Beispiele hierfür sind 2-Hydroxyethyl, 2- und 3-Hydroxypropyl, 1-Hydroxy-2-propyl, 2-, 3- und 4-Hydroxybutyl und dergleichen.

C₂-C₁₀-Alkenyl steht für einen linearen oder verzweigten aliphatischen Rest mit 2 bis 10 Kohlenstoffatomen und einer C-C-Doppelbindung. Beispiele hierfür sind Ethenyl (Vinyl), 1-Propenyl, Allyl (2-Propenyl), 1-, 2- oder 3-Butenyl, 1-, 2-, 3- oder 4-Pentenyl, 1-, 2-, 3-, 4- oder 5-Hexenyl, 1-, 2-, 3-, 4-, 5- oder 6-Heptenyl, 1-, 2-, 3-, 4-, 6- oder 7-Octenyl, 1-, 2-, 3-, 4-, 5-, 6-, 7- oder 8-Nonenyl, 1-, 2-, 3-, 4-, 5-, 6-, 7-, 8- oder 9-Decenyl und deren Konstitutionsisomere.

C₃-C₆-Cycloalkyl steht für einen cycloaliphatischen gesättigten Rest mit 3 bis 6 Kohlenstoffatomen. Beispiele hierfür sind Cyclopropyl, Cyclobutyl, Cyclopentyl und Cyclohexyl.

Aryl steht für einen carbocyclischen aromatischen Rest mit 6 bis 14 Kohlenstoffatomen, wie Phenyl, Naphthyl, Anthracenyl oder Phenanthrenyl. Vorzugsweise steht Aryl für Phenyl oder Naphthyl und insbesondere für Phenyl.

Aryl-C₁-C₄-alkyl steht für C₁-C₄-Alkyl, das wie oben definiert ist, wobei ein Wasserstoffatom durch eine Arylgruppe ersetzt ist. Beispiele sind Benzyl, Phenethyl und dergleichen.

C₁-C₄-Alkoxy steht für einen über ein Sauerstoffatom gebundenen linearen oder verzweigten Alkylrest mit 1 bis 4 Kohlenstoffatomen. Beispiele hierfür sind Methoxy, Ethoxy, Propoxy, Isopropoxy, Butoxy, sec-Butoxy, Isobutoxy und tert-Butoxy.

C₁-C₄-Alkylen ist ein linearer oder verzweigter zweiwertiger Alkylrest mit 1, 2, 3 oder 4 Kohlenstoffatomen. Beispiele sind -CH-, -CH₂CH₂-, -CH(CH₃)-, -CH₂CH₂CH₂-, -CH(CH₃)CH₂-, -CH₂CH(CH₃)-, -C(CH₃)₂-, -CH₂CH₂CH₂CH₂-, -CH(CH₃)CH₂CH₂-, -CH₂CH₂CH(CH₃)-, -C(CH₃)₂CH₂-, -CH₂C(CH₃)₂- und -CH₂CH₂CH₂CH₂CH₂-.

Lineares C₁-C₄-Alkylen ist ein linearer zweiwertiger Alkylrest mit 1, 2, 3 oder 4 Kohlenstoffatomen. Beispiele sind -CH₂CH₂-, -CH₂CH₂CH₂- und -CH₂CH₂CH₂CH₂-.

C₂-C₃-Alkylen ist ein linearer oder verzweigter zweiwertiger Alkylrest mit 2 oder 3 Kohlenstoffatomen. Beispiele sind -CH₂CH₂-, -CH(CH₃)-, -CH₂CH₂CH₂-, -CH(CH₃)CH₂-, CH₂CH(CH₃)- und -C(CH₃)₂-,

Lineares oder verzweigtes C₂-C₄-Alkylen ist ein linearer oder verzweigter zweiwertiger Alkylrest mit 2, 3 oder 4 Kohlenstoffatomen. Beispiele sind -CH₂CH₂-, -CH(CH₃)-, -CH₂CH₂CH₂-, -CH(CH₃)CH₂-, -CH₂CH(CH₃)-, -C(CH₃)₂-, -CH₂CH₂CH₂CH₂-, -CH(CH₃)CH₂CH₂-, -CH₂CH₂CH(CH₃)-, -C(CH₃)₂CH₂- und -CH₂C(CH₃)₂-.

Lineares C₂-C₄-Alkylen ist ein linearer zweiwertiger Alkylrest mit 2, 3 oder 4 Kohlenstoffatomen. Beispiele sind -CH₂CH₂-, -CH₂CH₂CH₂- und -CH₂CH₂CH₂CH₂-.

Lineares oder verzweigtes C₂-C₅-Alkylen ist ein linearer oder verzweigter zweiwertiger Alkylrest mit 2, 3, 4 oder 5 Kohlenstoffatomen. Beispiele sind -CH₂CH₂-, -CH(CH₃)-, -CH₂CH₂CH₂-, -CH(CH₃)CH₂-, -CH₂CH(CH₃)-, -C(CH₃)₂-, -CH₂CH₂CH₂CH₂-, -CH(CH₃)CH₂CH₂-, -CH₂CH₂CH(CH₃)-, -C(CH₃)₂CHr, -CH₂C(CH₃)₂- und -CH₂CH₂CH₂CH₂CH₂-.

Lineares oder verzweigtes C₂-C₆-Alkylen ist ein linearer oder verzweigter zweiwertiger Alkylrest mit 2, 3, 4, 5 oder 6 Kohlenstoffatomen. Beispiele sind -CH₂CH₂-, -CH(CH₃)-, -CH₂CH₂CH₂-, -CH(CH₃)CH₂, -CH₂CH(CH₃)-, -C(CH₃)₂-, -CH₂CH₂CH₂CH₂-, -CH(CH₃)CH₂CH₂-, -CH₂CH₂CH(CH₃)-, -C(CH₃) ₂CH₂-, -CH₂C(CH₃)₂-, -CH₂CH₂CH₂CH₂CH₂- und -CH₂CH₂CH₂CH₂CH₂CH₂-.

Lineares C₂-C₆-Alkylen ist ein linearer zweiwertiger Alkylrest mit 2, 3, 4, 5 oder 6 Kohlenstoffatomen. Beispiele sind -CH₂CH₂-, -CH₂CH₂CH₂-, -CH₂CH₂CH₂CH₂-, -CH₂CH₂CH₂CH₂CH₂- und -CH₂CH₂CH₂CH₂CH₂CH₂-.

Lineares oder verzweigtes C₄-C₈-Alkylen ist ein linearer oder verzweigter zweiwertiger Alkylrest mit 4 bis 8 Kohlenstoffatomen. Beispiele sind -CH₂CH₂CH₂CH₂-, -CH(CH₃)CH₂CH₂-, -CH₂CH₂CH(CH₃)-, -C(CH₃)₂CH₂-, -CH₂C(CH₃)₂-, -CH₂CH₂CH₂CH₂CH₂-, -CH₂C(CH₃)₂CH₂-, -CH₂CH₂CH₂CH₂CH₂CH₂-, -(CH₂)₇-, -(CH₂)₈- und Stellungsisomere davon.

Lineares oder verzweigtes C₄-C₁₀-Alkylen ist ein linearer oder verzweigter zweiwertiger Alkylrest mit 4 bis 10 Kohlenstoffatomen. Beispiele sind neben den zuvor bei C₄-C₈-Alkylen genannten Resten die höheren Homologen mit 9 oder 10 Kohlenstoffatomen, wie Nonylen und Decylen.

Lineares oder verzweigtes C₂-C₁₀-Alkylen ist ein linearer oder verzweigter zweiwertiger Alkylrest mit 2 bis 10 Kohlenstoffatomen. Beispiele sind neben den zuvor bei C₂-C₆-Alkylen genannten Resten die höheren Homologen mit 7 bis 10 Kohlenstoffatomen, wie Heptylen, Octylen, Nonylen und Decylen.

Lineares oder verzweigtes C₁-C₁₀-Alkylen ist ein linearer oder verzweigter zweiwertiger Alkylrest mit 1 bis 10 Kohlenstoffatomen. Ein weiteres Beispiel ist neben den zuvor bei C₂-C₁₀-Alkylen genannten Resten -CH₂-.

Lineares oder verzweigtes C₂-C₂₀-Alkylen ist ein linearer oder verzweigter zweiwertiger Alkylrest mit 2 bis 20 Kohlenstoffatomen. Beispiele sind neben den zuvor bei C₂-C₅-Alkylen genannten Resten die höheren Homologen mit 6 bis 20 Kohlenstoffatomen, wie Hexylen, Heptylen, Octylen, Nonylen, Decylen, Undecylen, Dodecylen, Tridecylen, Tetradecylen, Pentadecylen, Hexadecylen, Heptadecylen, Octadecylen, Nonadecylen und Eicosylen.

Alkenylen ist ein linearer oder verzweigter aliphatischer ein- oder mehrfach, z. B. ein- oder zweifach, olefinisch ungesättigter zweiwertiger Rest mit beispielsweise 2 bis 20 oder 2 bis 10 oder 4 bis 8 Kohlenstoffatomen. Wenn der Rest mehr als eine Kohlenstoff-Kohlenstoff-Doppelbindung enthält, sind diese vorzugsweise nicht vicinal, d. h. nicht allenisch.

Alkinylen ist ein linearer oder verzweigter aliphatischer zweiwertiger Rest mit beispielsweise 2 bis 20 oder 2 bis 10 oder 4 bis 8 Kohlenstoffatomen, der eine oder mehrere, z. B. 1 oder 2 Kohlenstoff-Kohlenstoff-Dreifachbindungen enthält.

C₅-C₈-Cycloalkylen steht für eine zweiwertige monocyclische, gesättigte Kohlenwasserstoffgruppe mit 5 bis 8 Kohlenstoffringgliedem. Beispiele sind Cyclopentan-1,2-diyl, Cyclopentan-1,3-diyl, Cyclohexan-1,2-diyl, Cyclohexan-1,3-diyl, Cyclohexan-1,4-diyl, Cycloheptan-1,2-diyl, Cycloheptan-1,3-diyl, Cycloheptan-1,4-diyl, Cyclooctan-1,2-diyl, Cyclooctan-1,3-diyl, Cyclooctan-1,4-diyl und Cyclooctan-1,5-diyl.

5- oder 6-gliedriger gesättigter, teilweise ungesättigter oder aromatischer Heterocyclus, der 1, 2 oder 3 Heteroatome, ausgewählt unter O, S und N, als Ringglieder enthält, steht beispielsweise für Tetrahydrofuranyl, Tetrahydrothienyl, Pyrrolidinyl, Pyrazolidinyl, Imidazolidinyl, Oxazolidinyl, Isoxazolidinyl, Thiazolidinyl, Isothiazolidinyl, Triazolidinyl, Oxadiazolidinyl, Thiadiazolidinyl, Piperidinyl, Tetrahydropyranyl, Piperazinyl, Morpholinyl, Thiomorpholinyl; Dihydrofuranyl, Dihydrothienyl, Pyrrolinyl, Pyrazolinyl, Imidazolinyl, Oxazolinyl, Isoxazolinyl, Thiazolinyl, Isothiazolinyl, Triazolinyl, Oxadiazolinyl, Thiadiazolinyl, Tetrahydropyridyl, Dihydropyridyl, Dihydropyranyl, Pyranyl; Furanyl, Thienyl, Pyrrolyl, Pyrazolyl, Imidazolyl, Oxazoylyl, Isoxazolyl, Thiazolyl, Isothiazolyl, Triazolyl, Oxadiazolyl, Thiadiazolyl, Pyridyl, Pyridazonyl, Pyrimidyl, Pyrazinyl und Triazinyl.

Über N gebundener 5- oder 6-gliedriger ungesättigter nichtaromatischer Heterocyclus, der zusätzlich ein oder zwei weitere Stickstoffatome oder ein weiteres Schwefelatom oder Sauerstoffatom als Ringglied enthalten kann, steht beispielsweise für Pyrrolin-1-yl, Pyrazolin-1-yl, Imidazolin-1-yl, 2,3-Dihydrooxazol-3-yl, 2,3- und 2,5-Dihydroisoxazol-2-yl, 2,3-Dihydrothiazol-3-yl, 2,3- und 2,5-Dihydroisothiazol-2-yl, [1,2,3]-1H-Triazolin-1-yl, [1,2,4]-1H-Triazolin-1-yl, [1,3,4]-1H-Triazolin-1-yl, [1,2,3]-2H-Triazolin-2-yl, 1,2-Dihydropyridin-1-yl, 1,4-Dihydropyridin-1-yl, 1,2,3,4-Tetrahydropyridin-1-yl, 1,2-Dihydropyridazin-1-yl, 1,4-Dihydropyridazin-1-yl, 1,6-Dihydropyridazin-1-yl, 1,2,3,4-Tetrahydropyridazin-1-yl, 1,4,5,6-Tetrahydropyridazin-1-yl, 1,2-Dihydropyrimidin-1-yi,

1,4-Dihydropyrimidin-1-yl, 1,6-Dihydropyrimidin-1-yl, 1,2,3,4- Tetrahydropyrimidin-1-yl, 1,4,5,6-Tetrahydropyrimidin-1-yl, 1,2-Dihydropyrazin-1-yl, 1,4-Dihydropyrazin-1-y1, 1,2,3,4-Tetrahydropyrazin-1-yl,1,4-Oxazin-4-yl, 2,3-Dihydro-1-4-oxazin-4-yl, 2,3,5,6-Tetrahydro-1-4-oxazin-4-yl, 1,4-Thiazin-4-yl, 2,3-Dihydro-1-4-thiazin-4-yl, 2,3,5,6-Tetrahydro-1-4-thiazin-4-yl, 1,2-Dihydro-1,3,5-triazin-1-yl, 1,2,3,4-Tetrahydro-1,3,5-triazin-1-yl und dergleichen.

Über N gebundener 5- oder 6-gliedriger ungesättigter aromatischer Heterocyclus, der zusätzlich ein weiteres Stickstoffatom als Ringglied enthalten kann, steht beispielsweise für Pyrrol-1-yl, Pyrazol-1-yl, Imidazol-1-yl und Triazol-1-yl.

Unter einer primären Aminogruppe versteht man einen Rest -NH₂.

Die nachfolgend gemachten Ausführungen zu bevorzugten Ausgestaltungen des erfindungsgemäßen Verfahrens, insbesondere zu den erfindungsgemäß eingesetzten Monomeren und weiteren Reaktionskomponenten, zu den Reaktionsbedingungen und zu den mit dem Verfahren erhältlichen Polymeren sowie zu deren Verwendung gelten sowohl allein für sich genommen als auch insbesondere in jeder denkbaren Kombination miteinander.

Geeignete Melaminderivate, die optional in Schritt (A-i) bzw. (B-i) eingesetzt werden, sind vorzugsweise ausgewählt unter Benzoguanamin, substituierten Melaminen und Melamin-Kondensaten sowie Gemischen davon.

Die Melamin-Kondensate sind vorzugsweise ausgewählt unter Melam, Melem, Melon und höheren Kondensaten. Melam (Summenformel C₆H₉N₁₁) ist ein dimeres Kondensationsprodukt aus 2,4-Diamino-6-chlor-s-triazin mit Melamin. Melem (Summenformel C₆H₆M₁₀) ist das mit drei Aminogruppen substituierte Tri-s-triazin (1,3,4,6,7,9,9b-Heptaazaphenalen). Melon (Summenformel C₆H₃N₉) ist ebenfalls ein Heptazin.

Vorzugsweise wird kein Melaminderivat eingesetzt.

Die in Schritt (A-i) bzw. (B-i) als Komponente (A-i.2) bzw. (B-i.2) eingesetzten von Melamin und dem optional eingesetzten wenigstens einen Melaminderivat verschiedenen Amine mit wenigstens 2 primären Aminogruppen und die in Schritt (A-iii) bzw. (B-iii) eingesetzten Verbindungen werden in Abhängigkeit voneinander und in Abhängigkeit davon, ob Schritte (A-ii) und/oder (A-iv) durchgeführt werden, so ausgewählt, dass ein amphiphiles Polymer entsteht. So wird für den Fall, dass in Schritt (A-i) ein polares (hydrophiles) Amin eingesetzt wird und/oder der Quaternisierungsschritt (A-ii) und/oder (A-iv), der die Polarität des in Schritt (A-i) erhaltenen Polymerabschnitts stark erhöht, durchgeführt wird, in Schritt (A-iii) eine unpolare (lipophile) Verbindung bzw. eine Verbindung, die zur Erzeugung eines unpolaren Polymerabschnitts führt, eingesetzt, und in Verfahren B vice versa.

Die in Schritt (A-i) bzw. (B-i) als Komponente (A-i.2) bzw. (B-i.2) eingesetzten von Melamin und dem optional eingesetzten wenigstens einen Melaminderivat verschiedenen Amine mit wenigstens 2 primären Aminogruppen sind vorzugsweise ausgewählt unter
- Aminen der Formel I

   NH₂-A-NH₂ (I)

   worin
   - A: für einen zweiwertigen aliphatischen, alicyclischen, aliphatisch-alicyclischen, aromatischen oder araliphatischen Rest steht, wobei die vorgenannten Reste auch durch eine Carbonylgruppe oder durch eine Sulfongruppe unterbrochen sein können und/oder durch 1, 2, 3 oder 4 Reste substituiert sein können, die ausgewählt sind unter C₁-C₄-Alkyl; oder für einen zweiwertigen Rest der Formel 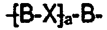 steht; worin
   - jedes: X unabhängig für O oder NR^{A} steht, worin R^{A} für H, C₁-C₄-Alkyl, C₂-C₄-Hydroxyalkyl oder C₁-C₄-Alkoxy und bevorzugt für H, C₁-C₄-Alkyl oder C₁-C₄-Alkoxy steht;
   - jedes: B unabhängig für C₂-C₆-Alkylen steht; und
   - a: für eine Zahl von 1 bis 100, vorzugsweise 1 bis 80 und insbesondere 1 bis 20 steht;
   - Aminen der Formel II 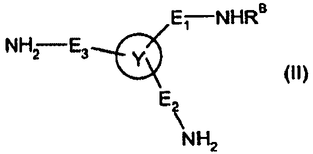 worin
   - Y: für CR^{c}, N, C₂-C₆-Alkyl, C₃-C₆-Cycloalkyl, Phenyl oder einen 5- oder 6-gliedrigen, gesättigten, teilweise ungesättigten oder aromatischen heterocyclischen Ring mit 1, 2 oder 3 Heteroatomen als Ringgliedern steht, die ausgewählt sind unter N, O und S;
   - E₁, E₂ und E₃: unabhängig voneinander für eine Einfachbindung, C₁-C₁₀-Alkylen, -NR^{D}-C₂-C₁₀-Alkylen oder -O-C₁-C₁₀-Alkylen stehen, mit der Maßgabe, dass E₁, E₂ und E₃ nicht für eine Einfachbindung und nicht für -NR^{D}-C₂-C₁₀-Alkylen stehen, wenn Y für N steht;
   - R^{C}: für H, C₁-C₄-Alkyl, C₂-C₄-Hydroxyalkyl oder C₁-C₄-Alkoxy und vorzugsweise für H, C₁-C₄-Alkyl oder C₁-C₄-Alkoxy steht; und
   - R^{B} und R^{D}: unabhängig voneinander für H, C₁-C₄-Alkyl, C₂-C₄-Hydroxyalkyl oder C₁-C₄-Alkoxy und vorzugsweise für H, C₁-C₄-Alkyl oder C₁-C₄-Alkoxy stehen;
- Aminen der Formel III 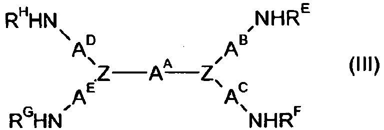 worin
   - A^{A}: eine der für A angegebenen Bedeutungen hat;
   - A^{B}, A^{C}, A^{D} und A^{E}: unabhängig voneinander für C₁-C₁₀-Alkylen stehen;
   - Z: für N oder CR^{I} steht; und
   - R^{E}, R^{F}, R^{G}, R^{H} und R^{I}: unabhängig voneinander für H, C₁-C₄-Alkyl, C₂-C₄-Hydroxyalkyl oder C₁-C₄-Alkoxy und vorzugsweise für H, C₁-C₄-Alkyl oder C₁-C₄-Alkoxy stehen, wobei wenigstens zwei der Reste R^{E}, R^{F}, R^{G} und R^{H} für H stehen; und
- Gemischen davon.

Zweiwertige aliphatische Reste sind solche, die keine cycloaliphatischen, aromatischen oder heterocyclischen Bestandteile enthalten. Beispiele sind Alkylen-, Alkenylen- und Alkinylen-Reste.

Zweiwertige alicyclische Reste können einen oder mehrere, z. B. einen oder zwei alicyclische Reste enthalten; sie enthalten jedoch keine aromatischen oder heterocyclischen Bestandteile. Die alicyclischen Reste können durch aliphatische Reste substituiert sein, wobei sich aber Bindungsstellen für die NH₂-Gruppen am alicyclischen Rest befinden.

Zweiwertige aliphatisch-alicyclische Reste enthalten sowohl wenigstens einen zweiwertigen aliphatischen als auch wenigstens einen zweiwertigen alicyclischen Rest, wobei sich die zwei Bindungsstellen für die NH₂-Gruppen entweder beide an dem/den alicyclischen Rest(en) oder beide an dem/den aliphatischen Rest(en) oder eine an einem aliphatischen und die andere an einem alicyclische Rest befinden kann.

Zweiwertige aromatische Reste können einen oder mehrere, z. B. einen oder zwei aromatische Reste enthalten; sie enthalten jedoch keine alicyclischen oder heterocyclischen Bestandteile. Die aromatischen Reste können durch aliphatische Reste substituiert sein, wobei sich aber beide Bindungsstellen für die NH₂-Gruppen an dem/den aromatischen Rest(en) befinden.

Zweiwertige araliphatische Reste enthalten sowohl wenigstens einen zweiwertigen aliphatischen als auch wenigstens einen zweiwertigen aromatischen Rest, wobei sich die zwei Bindungsstellen für die NH₂-Gruppen entweder beide an dem/den aromatischen Rest(en) oder beide an dem/den aliphatischen Rest(en) oder eine an einem aliphatischen und die andere an einem aromatischen Rest befinden kann.

In einer bevorzugten Ausführungsform ist der zweiwertige aliphatische Rest A lineares oder verzweigtes C₂-C₂₀-Alkylen, besonders bevorzugt lineares oder verzweigtes C₂-C₁₀-Alkylen und insbesondere lineares oder verzweigtes C₄-C₈-Alkylen. Beispiele für geeignete Amine, in denen der Rest A diese Bedeutung (C₂-C₂₀-Alkylen) hat, sind 1,2-Ethylendiamin, 1,2-und 1,3-Propylendiamin, 2,2-Dimethyl-1,3-propandiamin, 1,4-Butylendiamin, 1,5-Pentylendiamin, Hexamethylendiamin, Heptamethylendiamin, Octamethylendiamin, Nonamethylendiamin, Decamethylendiamin, Undecamethylendiamin, Dodecamethylendiamin, Tridecamethylendiamin, Tetradecamethylendiamin, Pentadecamethylendiamin, Hexadecamethylendiamin, Heptadecamethylendiamin, Octadecamethylendiamin, Nonadecamethylendiamin, Eicosamethylendiamin, 2-Butyl-2-ethyl-1,5-pentamethylendiamin, 2,2,4- oder 2,4,4-Trimethyl-1,6-hexamethylendiamin, 1,5-Diamino-2-methylpentan, 1,4-Diamino-4-methylpentan und dergleichen.

In einer bevorzugten Ausführungsform sind die zweiwertigen alicyclischen Reste A ausgewählt unter C₅-C₈-Cycloalkylen, das 1, 2, 3 oder 4 C₁-C₄-Alkylreste tragen kann. Beispiele für geeignete Amine, in denen der Rest A diese Bedeutung hat, sind Cyclopentylendiamin, wie 1,2-Diaminocyclopentan oder 1,3-Diaminocyclopentan, Cyclohexylendiamin, wie 1,2-Diaminocyclohexan, 1,3-Diaminocyclohexan oder 1,4-Diaminocyclohexan, 1-Methyl-2,4-diaminocyclohexan, 1-Methyl-2,6-diaminocyclohexan, Cycloheptylendiamin, wie 1,2-Diaminocycloheptan, 1,3-Diaminocycloheptan oder 1,4-Diaminocycloheptan, und Cyclooctylendiamin, wie 1,2-Diaminocyclooctan, 1,3-Diaminocyclooctan, 1,4-Diaminocyclooctan oder 1,5-Diaminocyclooctan. Die Aminogruppen (NH₂Gruppen) können cis- oder trans-ständig zueinander stehen.

In einer bevorzugten Ausführungsform sind die zweiwertigen aliphatisch-alicyclischen Reste A ausgewählt unter C₅-C₈-Cycloalkylen-C₁-C₄-alkylen, C₅-C₈-Cycloalkylen-C₁-C₄-alkylen-C₅-C₈-cycloalkylen und C₁-C₄-Alkylen-C₅-C₈-cycloalkylen-C₁-C₄-alkylen, wobei die Cycloalkylenreste 1, 2, 3 oder 4 C₁-C₄-Alkylreste tragen können. Beispiele für geeignete Amine, in denen der Rest A diese Bedeutung hat, sind Diaminodicyclohexylmethan, Isophorondiamin, Bis(aminomethyl)cyclohexan, wie 1,1-Bis(aminomethyl)-cyclohexan, 1,2-Bis(aminomethyl)cyclohexan, 1,3-Bis(aminomethyl)cyclohexan oder 1,4-Bis(aminomethyl)cyclohexan, 2-Aminopropylcyclohexylamin, 3(4)-Aminomethyl-1-methylcyclohexylamin und dergleichen. Die am alicyclischen Rest gebunden Gruppen können jede beliebige relative Position (cis/trans) zueinander einnehmen.

In einer bevorzugten Ausführungsform sind die zweiwertigen aromatischen Reste A ausgewählt unter Phenylen, Biphenylen, Naphthylen, Phenylen-sulfon-phenylen und Phenylen-carbonyl-phenylen, wobei die Phenylen- und Naphthylenreste 1, 2, 3 oder 4 C₁-C₄-Alkylreste tragen können. Beispiele für geeignete Amine, in denen der Rest A diese Bedeutung hat, sind Phenylendiamin, wie o-, m- und p-Phenylendiamin, Toluylendiamin, wie o-, m- und p-Toluylendiamin, Xylylendiamin, Naphthylendiamin, wie 1,2-, 1,3-, 1,4-, 1,5-, 1,8-, 2,3-, 2,6- und 2,7-Naphthylen, Diaminodiphenyisuffon, wie 2,2'-, 3,3'- und 4,4'-Diaminodiphenylsulfon, und Diaminobenzophenon, wie 2,2'-, 3,3'- und 4,4'-Diaminobenzophenon.

In einer bevorzugten Ausführungsform sind die zweiwertigen araliphatischen Reste A ausgewählt unter Phenylen-C₁-C₄-alkylen und Phenylen-C₁-C₄-alkylen-phenylen, wobei die Phenylenreste 1, 2, 3 oder 4 C₁-C₄-Alkylreste tragen können. Beispiele für geeignete Amine, in denen der Rest A diese Bedeutung hat, sind Diaminodiphenylmethan, wie 2,2'-, 3,3'- und 4,4'-Diaminodiphenylmethan, und dergleichen.

In einer bevorzugten Ausführungsform steht A für ⁅B-X⁆ₐ-B-, worin X für O steht. a steht dabei vorzugsweise für eine Zahl von 2 bis 100, besonders bevorzugt 2 bis 80 und insbesondere 2 bis 20, z. B. 2 bis 10 oder 2 bis 6. Beispiele für geeignete Amine, in denen der Rest A diese Bedeutung hat, sind Amin-terminierte Polyoxyalkylenpolyole, beispielsweise Jeff-Amine, wie 4,9-Dioxadodecan-1,12-diamin und 4,7,10-Trioxatridecan-1,13-diamin, oder auch regelmäßigere Amin-terminierte Polyoxyalky-lendiole (Amin-terminierte Polyalkylenglykole; Amin-terminierte Polyalkylenoxide), wie Amin-terminierte Polyethylenglykole, Amin-terminierte Polypropylenglykole oder Amin-terminierte Polybutylenglykole. Die drei zuletzt genannten Amine (Amin-terminierte Polyalkylenglykole) weisen vorzugsweise ein Molekulargewicht von 200 bis 3000 g/mol auf.

In einer alternativ bevorzugten Ausführungsform steht A für ⁅B-X⁆ₐ-B- und X steht für NRA. R^{A} steht dabei vorzugsweise für H oder C₁-C₄-Alkyl, besonders bevorzugt für H oder Methyl und insbesondere für H. B steht dabei insbesondere für C₂-C₃-Alkylen, wie 1,2-Ethylen, 1,2-Propylen und 1,3-Propylen, und insbesondere für 1,2-Ethylen. a steht dabei vorzugsweise für eine Zahl von 1 bis 10, besonders bevorzugt von 1 bis 8 und insbesondere von 1 bis 6. Beispiele für geeignete Amine, in denen der Rest A diese Bedeutung hat, sind Diethylentriamin, Triethylentetramin, Tetraethylenpentamin, Pentaethylenhexamin, Hexaethylenheptamin, Heptaethylenoctamin, Octaethylennonamin, höhere Polyethylenimine, Bis(3-aminopropyl)amin, Bis(3-aminopropyl)methylamin, Polyalkylenimine mit gemischten Ethylen-/Propylengruppen als Alkylengruppen und dergleichen.

In Verbindungen II stehen E₁, E₂ und E₃ für den Fall, dass Y für N steht, nicht für eine Einfachbindung und nicht für -NR^{D}-C₂-C₁₀-Alkylen. Wenn Y für N steht, stehen E₁, E₂ und E₃ vorzugsweise auch nicht für Methylen (C₁-Alkylen). Für den Fall, dass Y für CR^{C} steht, stehen vorzugsweise wenigstens zwei der Gruppen E₁, E₂ und E₃ nicht für eine Einfachbindung.

Wenn Y für einen 5- oder 6-gliedrigen, gesättigten, teilweise ungesättigten oder aromatischen heterocyclischen Ring steht, so können die drei Arme -E₁-NHR^{B}, -E₂-NHR₂ und -E₃-NHR₂ sowohl an Kohlenstoff-Ringatome als auch an Stickstoff-Ringatome des Heterocyclus Y gebunden sein. Wenn die Arme -E₁-NHR^{B}, -E₂-NHR₂ und -E₃-NHR₂ an Ring-Stickstoffatome gebunden sind, so stehen E₁, E₂ und E₃ nicht für eine Einfachbindung und nicht für -NR^{D}-C₂-C₁₀-Alkylen. Vorzugsweise sind die Arme an unterschiedliche Ringatome des Heterocyclus Y gebunden. Der heterocyclische Ring Y ist vorzugsweise ausgewählt unter 5- oder 6-gliedrigen heteroaromatischen Ringen mit 1, 2 oder 3 Stickstoffatomen als Ringglieder. Beispiele für solche Hetarylringe sind Pyrrolyl, Pyrazolyl, Imidazolyl, Pyridyl, Pyrimidyl, Pyrazinyl und Pyridazonyl.

Beispiele für Verbindungen II sind N,N-Bis(3-aminopropyl)-ethylendiamin, N,N-Bis(3-aminopropyl)-propan-1,3-diamin, N,N-Bis(3-aminopropyl)-butan-1,4-diamin, Tris(2-aminoethyl)amin, Tris(2-aminopropyl)amin, Tris(3-aminopropyl)amin, Tris(2-aminobutyl)amin, Tris(3-aminobutyl)amin, Tris(4-aminobutyl)amin, Tris(5-aminopentyl)amin, Tris(6-aminohexyl)amin, Trisaminohexan, Trisaminononan, 4-Aminomethyl-1,8-octamethylendiamin und dergleichen.

Bei den Verbindungen III handelt es sich um Amine mit zwei primären Aminogruppen und zwei weitere Aminogruppen, die primär oder sekundär sind.

In Verbindungen III hat A^{A} vorzugsweise eine der für A als bevorzugt angegebenen Bedeutungen. Insbesondere steht A^{A} für C₂-C₆-Alkylen, besonders bevorzugt für lineares C₂-C₆-Alkylen, wie 1,2-Ethylen, 1,3-Propylen, 1,4-Butylen, Penta methylen und Hexamethylen.

Z steht vorzugsweise für N.

A^{B}, A^{C}, A^{D} und A^{E} stehen vorzugsweise für C₂-C₆-Alkylen, besonders bevorzugt für lineares C₂-C₆-Alkylen, wie 1,2-Ethylen, 1,3-Propylen, 1,4-Butylen, Pentamethylen und Hexamethylen, und insbesondere für lineares C₂-C₄-Alkylen, wie 1,2-Ethylen, 1,3-Propylen und 1,4-butylen.

R^{E}, R^{F}, R^{G}, R^{H} und R^{I} stehen vorzugsweise für H.

Beispiele für Verbindungen III sind N,N,N',N'-Tetra-(3-aminopropyl)-ethylendiamin, N,N,N',N'-Tetra-(3-aminopropyl)-1,4-butylendiamin und dergleichen.

Als Komponente (A-i.2) bzw. (B-i.2) können auch Gemische verschiedener Amine eingesetzt werden.

Die Harnstoffderivate der Komponente (A-i.3) bzw. (B-i.3) sind vorzugsweise ausgewählt unter
- substituierten Harnstoffen der Formel R¹R²N-C(=O)-NR³R⁴, worin
   R¹, R², R³ und R⁴ unabhängig voneinander ausgewählt sind unter Wasserstoff, C₁-C₁₂-Alkyl, Aryl und Aryl-C₁-C₄-alkyl, wobei wenigstens einer der Reste R¹, R², R³ und R⁴ nicht für Wasserstoff steht;
   oder R¹ und R² und/oder R³ und R⁴ jeweils gemeinsam für C₂-C₅-Alkylen stehen, wobei eine Methylengruppe (d. h. eine Gruppe CH₂ in der Alkylenkette) gegebenenfalls durch eine Carbonylgruppe ersetzt sein kann;
   oder R¹ und R³ gemeinsam für C₂-C₅-Alkylen stehen, wobei eine Methylengruppe (d. h. eine Gruppe CH₂ in der Alkylenkette) gegebenenfalls durch eine Carbonylgruppe ersetzt sein kann;
   oder R¹ und R² und/oder R³ und R⁴ jeweils gemeinsam mit dem Stickstoffatom, an das sie gebunden sind, einen 5- oder 6-gliedrigen ungesättigten aromatischen oder nichtaromatischen Ring bilden, der ein oder zwei weitere Stickstoffatome oder ein Schwefelatom oder Sauerstoffatom als Ringglied enthalten kann (d. h. R¹ und R² bzw. R³ und R⁴ stehen gemeinsam mit dem Stickstoffatom, an das sie gebunden sind, für einen über N gebundenen 5- oder 6-gliedrigen ungesättigten aromatischen oder nichtaromatischen Ring, der ein oder zwei weitere Stickstoffatome oder ein Schwefelatom oder Sauerstoffatom als Ringglied enthalten kann);
- Biuret;
- Thioharnstoff;
- substituierten Thioharnstoffen der Formel R⁵R⁶N-C(=S)-NR⁷R⁸, worin R⁵, R⁶, R⁷ und R⁸ unabhängig voneinander ausgewählt sind unter Wasserstoff, C₁-C₁₂-Alkyl, Aryl und Aryl-C₁-C₄-alkyl, wobei wenigstens einer der Reste R⁵, R⁶, R⁷ und R⁸ nicht für Wasserstoff steht;
   oder R⁵ und R⁶ und/oder R⁷ und R⁸ jeweils gemeinsam für C₂-C₅-Alkylen stehen, wobei eine Methylengruppe (d. h. eine Gruppe CH₂ in der Alkylenkette) gegebenenfalls durch eine Carbonylgruppe ersetzt sein kann;
   oder R⁵ und R⁷ gemeinsam für C₂-C₅-Alkylen stehen, wobei eine Methylengruppe (d. h. eine Gruppe CH₂ in der Alkylenkette) gegebenenfalls durch eine Carbonylgruppe ersetzt sein kann;
   oder R⁵ und R⁶ und/oder R⁷ und R⁸ jeweils gemeinsam mit dem Stickstoffatom, an das sie gebunden sind, einen 5- oder 6-gliedrigen ungesättigten aromatischen oder nichtaromatischen Ring bilden, der ein oder zwei weitere Stickstoffatome oder ein Schwefelatom oder Sauerstoffatom als Ringglied enthalten kann (d. h. R⁵ und R⁶ bzw. R⁷ und R⁸ stehen gemeinsam mit dem Stickstoffatom, an das sie gebunden sind, für einen über N gebundenen 5- oder 6-gliedrigen ungesättigten aromatischen oder nichtaromatischen Ring, der ein oder zwei weitere Stickstoffatome oder ein Schwefelatom oder Sauerstoffatom als Ringglied enthalten kann);
- Guanidin;
- substituierten Guanidinen der Formel R⁹R¹⁰N-C(=NR¹¹)-NR¹²R¹³, worin R⁹, R¹⁰, R¹¹, R¹² und R¹³ unabhängig voneinander ausgewählt sind unter Wasserstoff, C₁-C₁₂-Alkyl, Aryl und Aryl-C₁-C₄-alkyl, wobei wenigstens einer der Reste R⁹, R¹⁰, R¹¹, R¹² und R¹³ nicht für Wasserstoff steht;
   oder R⁹ und R¹⁰ und/oder R¹² und R¹³ jeweils gemeinsam für C₂-C₅-Alkylen stehen, wobei eine Methylengruppe (d. h. eine Gruppe CH₂ in der Alkylenkette) gegebenenfalls durch eine Carbonylgruppe ersetzt sein kann;
   oder R⁹ und R¹² gemeinsam für C₂-C₅-Alkylen stehen, wobei eine Methylengruppe (d. h. eine Gruppe CH₂ in der Alkylenkette) gegebenenfalls durch eine Carbonylgruppe ersetzt sein kann;
   oder R⁹ und R¹⁰ und/oder R¹² und R¹³ jeweils gemeinsam mit dem Stickstoffatom, an das sie gebunden sind, einen 5- oder 6-gliedrigen ungesättigten aromatischen oder nichtaromatischen Ring bilden, der zusätzlich ein weiteres Stickstoffatom, Schwefelatom oder Sauerstoffatom als Ringglied enthalten kann (d. h. R⁹ und R¹⁰ bzw. R¹² und R¹³ stehen gemeinsam mit dem Stickstoffatom, an das sie gebunden sind, für einen über N gebundenen 5- oder 6-gliedrigen ungesättigten aromatischen oder nichtaromatischen Ring, der ein oder zwei weitere Stickstoffatome oder ein Schwefelatom oder Sauerstoffatom als Ringglied enthalten kann); und
- Kohlensäureestern der Formel R¹⁴-O-CO-O-R¹⁵, worin R¹⁴ und R¹⁵ unabhängig voneinander ausgewählt sind unter C₁-C₁₂-Alkyl, Aryl und Aryl-C₁-C₄-alkyl oder R¹⁴ und R¹⁵ gemeinsam für C₂-C₅-Alkylen stehen.

Natürlich können auch Gemische verschiedener Harnstoffderivate eingesetzt werden.

In einer bevorzugten Ausführungsform stehen in den substituierten Harnstoffen R² und R⁴ für Wasserstoff und R¹ und R³ sind gleich oder verschieden und stehen für C₁-C₁₂-Alkyl, Aryl oder Aryl-C₁-C₄-Alkyl. Beispiele hierfür sind N,N'-Dimethylharnstoff, N,N'-Diethylharnstoff, N,N'-Dipropylharnstoff, N,N'-Diisopropylharnstoff, N,N'-Di-n-butylharnstoff, N,N'-Diisobutylharnstoff, N,N'-Di-sec-butylharnstoff, N,N'-Di-tert-butylharnstoff, N,N'-Dipentylharnstoff, N,N'-Dihexylharnstoff, N,N'-Diheptylharnstoff, N,N'-Dioctylharnstoff, N,N'-Didecylharnstoff, N,N'-Didodecylharnstoff, N,N'-Diphenylharnstoff, N,N'-Dinaphthylharnstoff, N,N'-Ditolylharnstoff, N,N'-Dibenzylharnstoff, N-Methyl-N'-phenylharnstoff und N-Ethyl-N'-phenylharnstoff.

In einer alternativ bevorzugten Ausführungsform sind R¹, R², R³ und R⁴ gleich und stehen für lineares C₁-C₄-Alkyl. Beispiele hierfür sind N,N,N',N'-Tetramethylharnstoff und N,N,N',N'-Tetraethylharnstoff.

In einer alternativ bevorzugten Ausführungsform stehen R¹ und R² sowie R³ und R⁴ jeweils gemeinsam für C₂-C₅-Alkylen, wobei eine Methylengruppe (CH₂) in der Alkylenkette durch eine Carbonylgruppe (CO) ersetzt sein kann; das heißt R¹ und R² bilden gemeinsam eine C₂-C₅-Alkylengruppe, in der eine Methylengruppe (CH₂) in der Alkylenkette durch eine Carbonylgruppe (CO) ersetzt sein kann, und R³ und R⁴ bilden gemeinsam eine C₂-C₅-Alkylengruppe, in der eine Methylengruppe (CH₂) in der Alkylenkette durch eine Carbonylgruppe (CO) ersetzt sein kann. Beispiele hierfür sind Di-(tetrahydro-1H-pyrrol-1-yl)-methanon, Bis(pentamethylen)harnstoff und Carbonylbiscaprolactam.

In einer alternativ bevorzugten Ausführungsform stehen R² und R⁴ für Wasserstoff und R¹ und R³ bilden gemeinsam eine C₂-C₅-Alkylengruppe, wobei eine Methylengruppe durch eine Carbonylgruppe ersetzt sein kann. Beispiele hierfür sind Ethylenharnstoff sowie 1,2- oder 1,3-Propylenharnstoff.

In einer alternativ bevorzugten Ausführungsform bilden R¹ und R² sowie R³ und R⁴ jeweils gemeinsam mit dem Stickstoffatom, an das sie gebunden sind, einen wie oben definierten ungesättigten aromatischen oder nicht aromatischen Heterocyclus. Beispiele hierfür sind Carbonyldipyrazol und Carbonyldiimidazol.

In einer bevorzugten Ausführungsform stehen in den substituierten Thioharnstoffen R⁶ und R⁸ für Wasserstoff und R⁵ und R⁷ sind gleich oder verschieden und stehen für C₁-C₁₂-Alkyl, Aryl oder Aryl-C₁-C₄-Alkyl. Beispiele hierfür sind N,N'-Dimethylthioharnstoff, N,N'-Diethylthioharnstoff, N,N'-Dipropylthioharnstoff, N,N'-Diisopropylthioharnstoff, N,N'-Di-n-butylthioharnstoff, N,N'-Diisobutylthiohamstoff, N,N'-Di-sec-butylthioharnstoff, N,N'-Di-tert-butylthiohamstoff, N,N'-Dipentylthioharnstoff, N,N'-Dihexylthioharnstoff, N,N'-Diheptylthioharnstoff, N,N'-Dioctylthioharnstoff, N,N'-Didecylthioharnstoff, N,N'-Didodecylthioharnstoff, N,N'-Diphenylthioharnstoff, N,N'-Dinaphthylthiohamstoff, N,N'-Ditolylthiohamstoff, N,N'-Dibenzylthiohamstoff, N-Methyl-N'-phenylthioharnstoff und N-Ethyl-N'-phenylthioharnstoff.

In einer alternativ bevorzugten Ausführungsform sind R⁵, R⁶, R⁷ und R⁸ gleich und stehen für lineares C₁-C₄-Alkyl. Beispiele hierfür sind N,N,N',N'-Tetramethylthioharnstoff und N,N,N',N'-Tetraethylthiohamstoff.

In einer alternativ bevorzugten Ausführungsform stehen R⁵ und R⁶ sowie R⁷ und R⁸ jeweils gemeinsam für C₂-C₅-Alkylen, wobei eine Methylengruppe (CH₂) in der Alkylenkette durch eine Carbonylgruppe (CO) ersetzt sein kann; das heißt R⁵ und R⁶ bilden gemeinsam eine C₂-C₅-Alkylengruppe, in der eine Methylengruppe (CH₂) in der Alkylenkette durch eine Carbonylgruppe (CO) ersetzt sein kann, und R⁷ und R⁸ bilden gemeinsam eine C₂-C₅-Alkylengruppe, in der eine Methylengruppe (CH₂) in der Alkylenkette durch eine Carbonylgruppe (CO) ersetzt sein kann. Beispiele hierfür sind Di(tetrahydro-1 H-pyrrol-1-yl)-methanthion, Bis(pentamethylen)thioharnstoff und Thiocarbonylbiscaprolactam.

In einer alternativ bevorzugten Ausführungsform stehen R⁶ und R⁸ für Wasserstoff und R⁵ und R⁷ bilden gemeinsam eine C₂-C₅-Alkylengruppe, wobei eine Methylengruppe durch eine Thiocarbonylgruppe ersetzt sein kann. Beispiele hierfür sind Ethylenthioharnstoff sowie 1,2- oder 1,3-Propylenthioharnstoff.

In einer alternativ bevorzugten Ausführungsform bilden R⁵ und R⁶ sowie R⁷ und R⁸ jeweils gemeinsam mit dem Stickstoffatom, an das sie gebunden sind, einen wie oben definierten ungesättigten aromatischen oder nicht aromatischen Heterocyclus. Beispiele hierfür sind Thiocarbonyldipyrazol und Thiocarbonyldiimidazol.

Guanidin kann auch in Form eines Guanidinsalzes, wie Guanidinnitrat oder insbesondere Guanidincarbonat, eingesetzt werden.

In einer bevorzugten Ausführungsform stehen in den substituierten Guanidinen R¹⁰, R¹¹ und R¹³ für Wasserstoff und R⁹ und R¹² sind gleich oder verschieden und stehen für C₁-C₁₂-Alkyl, Aryl oder Aryl-C₁-C₄-Alkyl. Beispiele hierfür sind N,N'-Dimethylguanidin, N,N'-Diethylguanidin, N,N'-Dipropylguanidin, N,N'-Diisopropylguanidin, N,N'-Di-n-butylguanidin, N,N'-Diisobutylguanidin, N,N'-Di-sec-butylguanidin, N,N'-Di-tert-butylguanidin, N,N'-Dipentylguanidin, N,N'-Dihexylguanidin, N,N'-Diheptylguanidin, N,N'-Dioctylguanidin, N,N'-Didecylguanidin, N,N'-Didodecylguanidin, N,N'-Diphenylguanidin, N,N'-Dinaphthylguanidin, N,N'-Ditolylguanidin, N,N'-Dibenzylguanidin, N-Methyl-N'-phenylguanidin und N-Ethyl-N'-phenylguanidin.

In einer alternativ bevorzugten Ausführungsform sind R⁹, R¹⁰, R¹² und R¹³ gleich und stehen für lineares C₁-C₄-Alkyl und R¹¹ steht für H oder Methyl und insbesondere für H. Beispiele hierfür sind N,N,N',N'-Tetramethylguanidin und N,N,N',N'-Tetraethylguanidin.

In einer alternativ bevorzugten Ausführungsform stehen R⁹ und R¹⁰ sowie R¹² und R¹³ jeweils gemeinsam für C₂-C₅-Alkylen, wobei eine Methylengruppe (CH₂) durch eine Carbonylgruppe (CO) ersetzt sein kann; das heißt R⁹ und R¹⁰ bilden gemeinsam eine C₂-C₅-Alkylengruppe, in der eine Methylengruppe (CH₂) durch eine Carbonylgruppe (CO) ersetzt sein kann, und R¹² und R¹³ bilden gemeinsam eine C₂-C₅-Alkylengruppe, in der eine Methylengruppe (CH₂) durch eine Carbonylgruppe (CO) ersetzt sein kann, und R¹¹ steht für H oder Methyl und insbesondere für H. Beispiele hierfür sind Di-(tetrahydro-1H-pyrrol-1-yl)-imin, Bis(pentamethylen)guanidin und Iminobiscaprolactam.

In einer alternativ bevorzugten Ausführungsform stehen R¹⁰, R¹¹ und R¹³ für Wasserstoff und R⁹ und R¹² bilden gemeinsam eine C₂-C₅-Alkylengruppe, wobei eine Methylengruppe ggf. durch eine Carbonylgruppe ersetzt sein kann. Beispiele hierfür sind Ethylenguanidin sowie 1,2- oder 1,3-Propylenguanidin.

In einer alternativ bevorzugten Ausführungsform bilden R⁹ und R¹⁰ sowie R¹² und R¹³ jeweils gemeinsam mit dem Stickstoffatom, an das sie gebunden sind, einen wie oben definierten ungesättigten aromatischen oder nicht aromatischen Heterocyclus, und R¹¹ steht für H oder Methyl und insbesondere für H. Beispiele hierfür sind Iminodipyrazol und Iminodiimidazol.

In einer bevorzugten Ausführungsform stehen R¹⁴ und R¹⁵ für C₁-C₄-Alkyl. Besonders bevorzugt sind beide Reste gleich. Beispiele hierfür sind Dimethylcarbonat, Diethylcarbonat, Dipropylcarbonat, Diisopropylcarbonat, Di-n-butylcarbonat, Di-sec-butylcarbonat, Diisobutylcarbonat und Di-tert-butylcarbonat. Bevorzugt sind hier unter Dimethylcarbonat und Diethylcarbonat.

In einer alternativ bevorzugten Ausführungsform stehen R¹⁴ und R¹⁵ gemeinsam für C₂-C₅-Alkylen und vorzugsweise für C₂-C₃-Alkylen. Beispiele für solche Carbonate sind Ethylencarbonat sowie 1,2- und 1,3-Propylencarbonat.

Die Harnstoffderivate sind besonders bevorzugt ausgewählt unter den oben genannten substituierten Harnstoffen, Biuret, Thioharnstoff, oben genannten substituierten Thioharnstoffen und den oben genannten Kohlensäureestem.

Unter den oben genannten Hamstoffderivaten sind die substituierten Harnstoffe, Thioharnstoff, die substituierten Thioharnstoffe und die Kohlensäureester stärker bevorzugt. Noch stärker bevorzugt sind die substituierten Harnstoffe, Thioharnstoff und die Kohlensäureester. Bevorzugt sind hierunter Thioharnstoff, N,N'-Dimethylharnstoff, N,N'-Diethylharnstoff, N,N'-Di-n-butylharnstoff, N,N'-Diisobutylharnstoff, N,N,N',N'-tetramethylharnstoff, Dimethylcarbonat, Diethylcarbonat, Ethylencarbonat und 1,2-Propylencarbonat.

Besonders bevorzugt verwendet man als Komponente (A-i.3) bzw. (B-i.3) Harnstoff oder einen substituierten Harnstoff der Formel R¹R²N-C(=O)-NR³R⁴, worin R¹, R², R³ und R⁴ unabhängig voneinander wie oben definiert sind. Bevorzugt stehen R¹ und R³ für H oder C₁-C₄-Alkyl, v. a. Methyl oder Ethyl, und R² und R⁴ stehen für C₁-C₄-Alkyl, speziell für Methyl oder Ethyl. Insbesondere verwendet man als Komponente (A-i.3) bzw. (B-i.3) Harnstoff selbst, gegebenenfalls in Kombination mit einem der vorgenannten Harnstoffderivate, und speziell nur Harnstoff.

Als mindestens difunktionelle Di- oder Polyisocyanate (A-i.4) bzw. (B-i.4) kommen die nach dem Stand der Technik bekannten und nachfolgend beispielhaft genannten aliphatischen, cycloaliphatischen, araliphatischen und aromatischen Di- oder Polyisocyanate in Frage. Zu nennen sind hier vorzugsweise 4,4'-Diphenylmethandiisocyanat, die Mischungen aus monomeren Diphenylmethandiisocyanaten und oligomeren Diphenylmethandiisocyanaten (Polymer-MDI), Tetramethylendiisocyanat, TetramethylendiisocyanatTrimere, Hexamethylendiisocyanat, Hexamethylendiisocyanat-Trimere, Isophorondii-socyanat-Trimer, 4,4'-Methylen-bis(cyclohexyl)diisocyanat, Xylylendiisocyanat, Tetramethylxylylendiisocyanat, Dodecyldiisocyanat, Lysinalkylesterdiisocyanat, wobei Alkyl für C₁-C₁₀-Alkyl steht, 1,4-Diisocyanatocyclohexan oder 4-Isocyanatomethyl-1,8-octamethylendiisocyanat.

Besonders bevorzugt sind Di- oder Polyisocyanate, die NCO-Gruppen unterschiedlicher Reaktivität aufweisen. Genannt seien hier 2,4-Toluylendiisocyanat (2,4-TDI), 2,4'-Diphenylmethandiisocyanat (2,4'-MDI), Triisocyanatotoluol, Isophorondiisocyanat (IP-DI), 2-Butyl-2-ethylpentamethylendiisocyanat, 2,2,4- oder 2,4,4-Trimethyl-1,6-hexamethylen-diisocyanat, 2-Isocyanatopropylcyclohexylisocyanat, 3(4)-Isocyanatomethyl-1-methylcyclohexyl-isocyanat, 1,4-Diisocyanato-4-methylpentan, 2,4'-Methylenbis(cyclohexyl)diisocyanat und 4-Methyl-cyclohexan-1,3-diisocyanat (H-TDI).

Weiterhin sind Di- oder Polyisocyanate geeignet, deren NCO-Gruppen zunächst gleich reaktiv sind, bei denen sich jedoch durch Erstaddition eines Reaktanden an einer NCO-Gruppe ein Reaktivitätsabfall bei der zweiten NCO-Gruppe induzieren lässt. Beispiele dafür sind Isocyanate, deren NCO-Gruppen über ein delokalisiertes n-Elektronensystem gekoppelt sind, z. B. 1,3- und 1,4-Phenylendiisocyanat, 1,5-Naphthylendiisocyanat, Diphenyldiisocyanat, Tolidindiisocyanat oder 2,6-toluylendiisocyanat.

Weiterhin können Oligo- oder Polyisocyanate verwendet werden, die sich aus den oben genannten Di- oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen.

In einer Ausführungsform werden als Komponente (A-i.4) bzw. (B-i.4) verkappte (blockierte) Di- oder Polyisocyanate eingesetzt. In verkappten oder blockierten Di- oder Polyisocyanaten sind die Isocyanatgruppen zu einer anderen funktionellen Gruppe reversibel umgesetzt, die unter geeigneten Bedingungen in die Isocyanatgruppe zurück überführt werden kann. Vorzugsweise ist die Isocyanatgruppe mit einem Alkohol, vorzugsweise einem Monoalkohol, zu einer Urethangruppe umgesetzt. Der Alkohol wird in der Regel bei der Umsetzung des blockierten Di- oder Polyisocyanats in Schritt (A-i.) bzw. (B-i.) [in der Regel mit dem Amin (A-i.2) bzw. (B-i.2)] einfach abgespalten. Durch die Blockierung der Isocyanatgruppen wird die sehr hohe Reaktivität der Isocyanate erniedrigt und eine kontrollierte Umsetzung mit dem Amin (iii.2) und damit ein kontrollierter Aufbau von Polyharntoffen ermöglicht.

Andere Blockierungsreagenzien für NCO-Gruppen zeichnen sich dadurch aus, dass sie eine thermisch reversible Blockierung der Isocyanat-Gruppen bei Temperaturen von in der Regel unter 160 °C gewährleisten. Derartige Blockierungsmittel werden in der Regel zur Modifikation von Isocyanaten eingesetzt, die in thermisch härtbaren Einkomponenten-Polyurethansystemen Einsatz finden. Diese Blockierungsmittel werden beispielsweise ausführlich beschrieben in Z. W. Wicks, Prog. Org. Coat. 3 (1975) 73-99 und Prog. Org. Coat. 9 (1981), 3-28, D. A. Wicks und Z. W. Wicks, Prog. Org. Coat. 36 (1999),148-172 und Prog. Org. Coat. 41 (2001), 1-83 sowie in Houben-Weyl, Methoden der Organischen Chemie, Bd. XIV/2,61 ff., Georg Thieme Verlag, Stuttgart 1963. Vorzugsweise sind derartige Blockierungsmittel ausgewählt unter Phenolen, Caprolactam, 1 H-Imidazol, 2-Methylimidazol, 1,2,4-Triazol, 3,5-Dimethylpyrazol, Malonsäuredialkylestern, Acetanilid. Acetonoxim und Butanonoxim.

Bei der wenigstens einen Carbonsäure mit wenigstens zwei Carboxylgruppen (A-i.5) bzw. (B-i.5) kann es sich um aliphatische, cycloaliphatische oder aromatische Di- oder Tricarbonsäuren oder Polycarbonsäure handeln.

Aliphatische Dicarbonsäuren sind beispielsweise Oxalsäure, Malonsäure, Bernsteinsäure, Glutarsäure, Adipinsäure, Pimelinsäure, Suberinsäure, Azelainsäure, Sebacinsäure, Undecan-α,ω-disäure und Dodecan-α,ω-disäure. Außerdem gehören dazu auch ungesättigte aliphatische Dicarbonsäuren wie Maleinsäure, Fumarsäure und Sorbinsäure.

Cycloaliphatische Dicarbonsäuren sind beispielsweise cis- und trans-Cyclohexan-1,2-dicarbonsäure, cis- und trans-Cyclohexan-1,3-dicarbonsäure, cis- and trans-Cyclopentan-1,4-dicarbonsäure und cis- und trans-Cyclopentan-1,3-dicarbonsäure.

Aromatische Dicarbonsäuren sind beispielsweise Phthalsäure, Isophthalsäure und Terephthalsäure.

Ein Beispiel für eine aliphatische Tricarbonsäure ist Aconitsäure (E-1,2,3-Propentricarbonsäure).

Ein Beispiel für eine cycloaliphatische Tricarbonsäure ist 1,3,5-Cyclohexantricarbonsäure.

Aromatische Tricarbonsäuren sind beispielsweise 1,2,4-Benzoltricarbonsäure und 1,3,5-Benzoltricarbonsäure.

Beispiele für Carbonsäuren mit mehr als drei Carboxylgruppen sind 1,2,4,5- Benzoltetracarbonsäure (Pyromellithsäure), 1,2,3,4,5,6-Benzolhexacarbonsäure (Mellithsäure) und niedermolekulare Polyacrylsäure oder Polymethacrylsäure.

Die Carbonsäuren können auch einen oder mehrere Reste tragen, die ausgewählt sind unter C₁-C₂₀-Alkyl, C₃-C₆-cycloalkyl, C₂-C₁₀-Alkenyl und Aryl. Beispiele hierfür sind 2-Methylmalonsäure, 2-Ethylmalonsäure, 2-Phenylmalonsäure, 2-Methylbemsteinsäure, 2-Ethylbemsteinsäure, C₁₈-Alkenylbemsteinsäure, 2-Phenylbemsteinsäure, Itaconsäure und 3,3-Dimethylglutarsäure.

Die Carbonsäuren können als solche oder in Form geeigneter Derivate eingesetzt werden. Geeignete Derivative sind die jeweiligen Anhydride und die Mono-, Di- oder Polyester, vorzugsweise die Mono-, Di- oder Poly-C₁-C₄-alkylester, insbesondere die Mono, Di- oder Polymethyl- oder -ethylester, des Weiteren auch die Mono-, Di- oder Polyvinylester und gemischte Ester.

Als Komponente (A-i.5) bzw. (B-i.5) können auch Gemische verschiedener Carbonsäuren und/oder verschiedener Carbonsäurederivate eingesetzt werden.

Bevorzugt setzt man als Komponente (A-i.5) bzw. (B-i.5) wenigstens eine Dicarbonsäure oder wenigstens ein Dicarbonsäurederivat oder ein Gemisch davon ein.

Bevorzugt hierunter sind Malonsäure, Bernsteinsäure, Glutarsäure, Adipinsäure, 1,2-, 1,3- oder 1,4-Cyclohexandicarbonsäure, Phthalsäure, Isophthalsäure, Terephthalsäure und die Mono- und Dialkylester, insbesondere die Mono- und Di-C₁-C₄-alkylester der vorgenannten Säuren.

Bezüglich geeigneter Umsetzungsbedingungen in Schritt (A-iii) bzw. (B-iii) wird auf die entsprechenden Ausführungen zu Verfahren A unten verwiesen.

Das erfindungsgemäße Verfahren dient zur Herstellung amphiphiler funktionalisierter hochverzweigter Melamin-Polyamin-Polymere. Als amphiphil werden (monomere oder polymere) Verbindungen bezeichnet, die sowohl hydrophile als auch lipophile Eigenschaften besitzen.

Vorzugsweise besitzen die erfindungsgemäßen Polymere eine Kern-Schale-Struktur. Dabei bilden vorzugsweise die Polymere, die in Schritt (A-i) bzw. (B-i) und, falls durchgeführt, Schritt (A-ii) hergestellt werden, den Kern und die in Schritt (A-iii) bzw. (B-iii) ankondensierten Verbindungen bilden die Hülle.

In Verfahren A besitzen die in Schritt (A-i) und, falls durchgeführt, Schritt (A-ii) erhaltenen Polymere (die vorzugsweise den Kern des erfindungsgemäßen Polymers bilden) hydrophile Eigenschaften (falls Schritt (A-ii) durch geführt wird, wird das in diesem Schritt erhaltene Polymer regelmäßig hydrophile Eigenschaften aufweisen), während die Abschnitte im Polymer, die durch die Kondensationsreaktion in Schritt (A-iii) erzeugt werden (und die vorzugsweise die Hülle des erfindungsgemäßen Polymers bilden), lipophile Eigenschaften besitzen.

In Verfahren B besitzen die in Schritt (B-i) erhaltenen Polymere (die vorzugsweise den Kern des erfindungsgemäßen Polymers bilden) lipophile Eigenschaften, während die Abschnitte im Polymer, die durch die Kondensationsreaktion in Schritt (B-iii) erzeugt werden (und die vorzugsweise die Hülle des erfindungsgemäßen Polymers bilden), hydrophile Eigenschaften aufweisen.

Die Begriffe "lipophil" und "hydrophil" werden im Rahmen der vorliegenden Erfindung, sofern nichts anderes erwähnt ist, als Relativbegriffe verwendet; d. h. ein hydrophiler Abschnitt (z. B. der Kern oder alternativ die Hülle) im erfindungsgemäßen Polymer ist ein Abschnitt, der polarer ist als ein lipophiler Abschnitt (z. B. die Hülle oder alternativ der Kern). Der Polaritätsunterschied darf dabei selbstverständlich nicht marginal sein, sondern muss so groß sein, dass ein amphiphiles Polymer entsteht. Die Amphiphilie muss dabei so groß sein, dass das Polymer grenzflächenaktiv ist und beispielsweise als Tensid oder Emulgator eingesetzt werden kann.

### Erfindungsgemäßes Verfahren A

In diesem Verfahren wird in Schritt (A-i) bzw. im optionalen Schritt (A-ii) ein hydrophiles Polymer hergestellt.

Zu diesem Zweck ist das in Schritt (A-i) eingesetzte wenigstens eine von Melamin oder dem Melaminderivat verschiedene Amin (A-i.2) hydrophil und ist vorzugsweise ausgewählt unter
- 1,2-Ethylendiamin,
- 1,2-Propylendiamin,
- 1,3-Propylendiamin,
- Polyaminen mit zwei primären Aminogruppen und wenigstens einer sekundären oder tertiären Aminogruppe und/oder wenigstens einem Ether-Sauerstoffatom, in denen alle Aminogruppen und Ether-Sauerstoffatome linear zueinander angeordnet sind und in denen das Verhältnis der Anzahl der im Polyamin enthaltenen Kohlenstoffatome zur Anzahl der im Polyamin enthaltenen Stickstoffatome und gegebenenfalls enthaltenen Sauerstoffatome kleiner oder gleich 2,5:1, vorzugsweise kleiner oder gleich 2,3:1 und insbesondere kleiner oder gleich 2:1 ist, und
- Polyaminen mit wenigstens zwei primären Aminogruppen, einer weiteren primären oder sekundären Aminogruppe und gegebenenfalls wenigstens einer weiteren primären, sekundären oder tertiären Aminogruppe und/oder gegebenenfalls wenigstens einem Ether-Sauerstoffatom, in denen wenigstens drei Aminogruppen nicht linear zueinander angeordnet sind und in denen das Verhältnis der Anzahl der im Polyamin enthaltenen Kohlenstoffatome zur Anzahl der im Polyamin enthaltenen Stickstoffatome und gegebenenfalls enthaltenen Sauerstoffatome kleiner oder gleich 3:1, vorzugsweise kleiner oder gleich 2,5:1 ist und insbesondere kleiner oder gleich 2,3:1 ist.

Polyamine mit zwei primären Aminogruppen, bei denen das Verhältnis der Anzahl der Kohlenstoffatome im Molekül zur Anzahl der Summe aller Heteroatome (N und O) im Molekül kleiner als 2,5:1 ist, bzw. Polyaminen mit wenigstens drei primären Aminogruppen, bei denen das Verhältnis der Anzahl der Kohlenstoffatome im Molekül zur Anzahl der Summe aller Heteroatome (N und O) im Molekül kleiner als 3:1 ist, sind ausreichend polar, um in Schritt (A-i) zu Polymeren mit hydrophilen Eigenschaften zu führen. Wenn Schritt (A-ii) durchgeführt wird, wird die Hydrophilie weiter erhöht.

Bei den Polyaminen mit zwei primären Aminogruppen und wenigstens einer sekundären oder tertiären Aminogruppe und/oder wenigstens einem Ether-Sauerstoffatom handelt es sich um Amine, bei denen alle Aminogruppen und alle gegebenenfalls vorhandenen Ethergruppen zueinander linear angeordnet sind. Linear angeordnet bedeutet in diesem Zusammenhang, dass alle Aminogruppen und alle Ether-Sauerstoffatome in der längsten Kette des Moleküls angeordnet sind. Eine bevorzugte Ausführungsform solcher Polyamine sind die Amine der unten beschriebenen Formel i.1.

In den Polyaminen mit wenigstens zwei primären Aminogruppen, einer weiteren primären oder sekundären Aminogruppe und gegebenenfalls wenigstens einer weiteren sekundären oder tertiären Aminogruppe und/oder gegebenenfalls wenigstens einem Ether-Sauerstoffatom sind wenigstens drei Aminogruppen nicht linear zueinander angeordnet, d. h. sie enthalten vorzugsweise wenigstens einen Verzweigungspunkt, von welchem aus sich wenigstens drei Aminogruppen direkt oder indirekt abzweigen. Ein bevorzugtes Beispiel für eine solche nichtlineare Anordnung sind die Amine der unten beschriebenen Formel II.1.

In einer bevorzugten Ausführungsform der Erfindung besitzt das in Schritt (A-i) eingesetzte Amin (A-i.2) zwei primäre Aminogruppen.

Das in Schritt (A-i) eingesetzte Amin (A-i.2) ist vorzugsweise ausgewählt unter Aminen der Formel I.1

NH₂-[A¹-X¹]ₘ-A¹-NH₂ (I.1)

worin
- jedes A¹: unabhängig für 1,2-Ethylen, 1,3-Propylen oder 1,2-Propylen steht, wobei für den Fall, dass m nicht für 0 steht, die Anzahl der in der Verbindung der Formel I enthaltenen 1,2-Ethyleneinheiten A¹ zur Gesamtzahl der in der Verbindung der Formel I enthaltenen 1,3- und 1,2-Propyleneinheiten A¹ wenigstens 1:1 beträgt;
- jedes X¹: unabhängig für O oder NR^{a} steht;
- R^{a}: für H, C₁-C₄-Alkyl, C₂-C₄-Hydroxyalkyl oder C₁-C₄-Alkoxy steht; und
- m: für eine Zahl von 0 bis 100 steht.

In einer bevorzugten Ausführungsform steht X¹ für O. m steht dabei vorzugsweise für eine Zahl von 2 bis 100, vorzugsweise 2 bis 80 und insbesondere 3 bis 60, z. B. 3 bis 50 oder 3 bis 20.

Beispiele für geeignete Amine, in denen der Rest X¹ für O steht, sind Amin-terminierte Polyoxyalkylendiole, beispielsweise Jeff-Amine, wie 4,9-Dioxadodecan-1,12-diamin und 4,7,10-Trioxatridecan-1,13-diamin, Jeff-Amine der Formel

NH₂-CH(CH₃)-CH₂-[O-CH₂-CH(CH₃)]ₓ-[O-CH₂-CH₂]_{y}-[O-CH₂-CH(CH₃)]₂-NH₂

worin
- y: für eine Zahl von 1 bis 100, vorzugsweise 2 bis 80, besonders bevorzugt 2 bis 60 und insbesondere 2 bis 50, z. B. 2 bis 40, steht;
- x und z: unabhängig voneinander für eine Zahl von 0 bis 55, vorzugsweise von 1 bis 10 und insbesondere von 1 bis 7, z. B. von 1 bis 6 stehen;
wobei das Verhältnis von y zur Summe aus x und z wenigstens 1,7:1, z. B. 1,7:1 bis 10:1, vorzugsweise 1,7:1 bis 8:1 und insbesondere 1,7:1 bis 8:1 beträgt, und die Summe aus x, y und z 1 bis 100, vorzugsweise 2 bis 80, besonders bevorzugt 3 bis 60 und insbesondere 3 bis 50 beträgt;
oder auch regelmäßigere Amin-terminierte Polyoxyalkylenpolyole, wie Amin-terminierte Polyethylenglykole. Die zuletzt genannten Amine (Amin-terminierte Polyethylenglykole) weisen vorzugsweise ein Molekulargewicht von 200 bis 3000 g/mol auf.

In einer alternativ bevorzugten Ausführungsform steht X¹ für NR^{a}. R^{a} steht dabei vorzugsweise für H oder C₁-C₄-Alkyl, besonders bevorzugt für H oder Methyl und insbesondere für H. Jedes A¹ steht dabei bevorzugt für 1,2-Ethylen oder 1,3-Propylen, wobei die Maßgabe gilt, dass die Anzahl der in der Verbindung der Formel I enthaltenen 1,2-Ethyleneinheiten A¹ zur Gesamtzahl der in der Verbindung der Formel I enthaltenen 1,3-Propyleneinheiten A¹ wenigstens 1:1 beträgt. m steht dabei vorzugsweise für eine Zahl von 0 bis 20, besonders bevorzugt von 1 bis 10, stärker bevorzugt von 1 bis 8 und insbesondere von 2 bis 6, z. B. 2, 3 oder 4.

Beispiele für geeignete Amine, in denen X¹ für NR^{a} steht, sind Diethylentriamin, Triethylentetramin, Tetraethylenpentamin, Pentaethylenhexamin, Hexaethylenheptamin, Heptaethylenoctamin, Octaethylennonamin, höhere Polyethylenimine, Bis(3-aminopropyl)amin, Bis(3-aminopropyl)methylamin, 3-(2-Aminoethyl)-aminopropylamin, N,N'-Bis(3-aminopropyl)ethylendiamin, Polyalkylenimine mit gemischten Ethylen-/Propylengruppen als Alkylengruppen und dergleichen.

Alternativ ist das in Schritt (A-i) eingesetzte Amin (A-i.2) vorzugsweise ausgewählt unter Aminen der Formel II.1 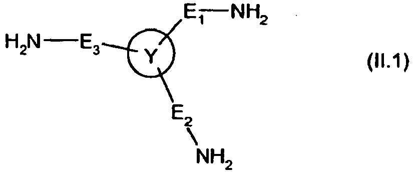 worin
- Y: für CR^{b}, N, oder einen 5- oder 6-gliedrigen, gesättigten, teilweise ungesättigten oder aromatischen heterocyclischen Ring mit 1, 2 oder 3 Heteroatomen als Ringgliedern steht, die ausgewählt sind unter N, O und S;
- E₁, E₂ und E₃: unabhängig voneinander für eine Einfachbindung, eine Gruppe ⁅A²-X²⁆-A²-, -NR^{c}-A²- oder -O-A²- stehen, mit der Maßgabe, dass E₁, E₂ und E₃ nicht für eine Einfachbindung und nicht für -NR^{c}-A²- stehen, wenn Y für N steht;
- jedes A²: unabhängig für 1,2-Ethylen, 1,3-Propylen oder 1,2-Propylen steht;
- jedes X²: unabhängig für O oder NR^{d} steht
- R^{b}: für H, C₁-C₄-Alkyl, C₂-C₄-Hydroxyalkyl oder C₁-C₄-Alkoxy steht;
- R^{c} und R^{d}: unabhängig voneinander für H, C₁-C₄-Alkyl, C₂-C₄-Hydroxyalkyl oder C₁-C₄-Alkoxy stehen; und
- n: für eine Zahl von 0 bis 10 steht.

In Verbindungen der Formel II.1 stehen R^{b}, R^{c} und R^{d} unabhängig voneinander vorzugsweise für H oder C₁-C₄-Alkyl, besonders bevorzugt für H oder Methyl und insbesondere für H.

In Verbindungen der Formel II.1 steht Y vorzugsweise für N. E₁, E₂ und E₃ stehen unabhängig voneinander vorzugsweise für eine Gruppe ⁅A²-X²⁆ₙ-A²-. Bevorzugt steht dabei n für 0.

Beispiele für besonders geeignete Amine ((A-i.2) sind 1,2-Ethylendiamin, 1,2-Propylendiamin, 1,3-Propylendiamin, Diethylentriamin, Triethylentetramin, Tetraethylenpentamin, Pentaethylenhexamin, Hexaethylenheptamin, Heptaethylenoctamin, Octaethylennonamin, Bis(3-aminopropyl)amin, Bis(3-aminopropyl)methylamin, N,N-Bis(3-aminopropyl)-ethylendiamin, N,N-Bis(3-aminopropyl)-propan-1,3-diamin, N,N-Bis(3-aminopropyl)-butan-1,4-diamin, Tris(2-aminoethyl)amin, Tris(2-aminopropyl)amin, Tris(3-aminopropyl)amin, Trisaminohexan, Verbindungen der Formel I.1, worin X¹ für NR^{a} steht, wobei wenigstens ein A¹ für 1,3-Propylen oder 1,2-Propylen steht und m für eine Zahl von 1 bis 100 steht, und Verbindungen der Formel I.1, worin X¹ für O steht und m für eine Zahl von 2 bis 100 steht.

Vorzugsweise setzt man in Schritt (A-i) Amine der Formel I.1 ein, bevorzugt solche, in denen X¹ für NR^{a} steht, wobei R^{a} vorzugsweise für H oder Methyl und insbesondere für H steht; besonders bevorzugt solche, in denen X¹ für NR^{a} steht, wobei R^{a} vorzugsweise für H oder Methyl und insbesondere für H steht, und A¹ für 1,2-Ethylen steht, und insbesondere solche, in denen X¹ für NR^{a} steht, wobei R^{a} vorzugsweise für H oder Methyl und insbesondere für H steht, A¹ für 1,2-Ethylen steht, und m für eine Zahl von 1 bis 100, vorzugsweise 1 bis 20 und insbesondere 1 bis 10, speziell 2 bis 6, steht. Insbesondere setzt man in Schritt (A-i) Amine ein, die ausgewählt sind unter Diethylentriamin, Triethylentetramin, Tetraethylenpentamin, Pentaethylenhexamin, Hexaethylenheptamin, Heptaethylenoctamin, Octaethylennonamin, höhere Polyethyleniminen, Bis(3-aminopropyl)amin, Bis(3-aminopropyl)methylamin, 3-(2-Aminoethyl)-amino-propylamin, und N,N'-Bis(3-aminopropyl)ethylendiamin und noch spezieller Amine, die ausgewählt sind unter Tetraethylenpentamin, Pentaethylenhexamin, Hexaethylen-heptamin, Heptaethylenoctamin und Octaethylennonamin. Speziell setzt man in Schritt (A-i) Amine ein, die ausgewählt sind unter Diethylentriamin, Triethylentetramin, Tetraethylenpentamin, Pentaethylenhexamin, Hexaethylenheptamin, Heptaethylenoctamin und Octaethylennonamin und noch spezieller unter Triethylentetramin, Tetraethylenpentamin, Pentaethylenhexamin und Hexaethylenheptamin.

Im Rahmen des erfindungsgemäßen Verfahrens A kann ein hydrophiles Polymer aber auch dadurch hergestellt werden, dass man in Schritt (A-i) ein beliebiges Amin (A-i.2) einsetzt und dann Schritt (A-ii) durchführt, d. h. einen Teil der Aminogruppen quatemisiert. Geeignete Amine der Komponente (A-i.2) sind beispielsweise solche der oben definierten Formeln I, II und III.

Bevorzugt setzt man jedoch in dieser Variante des Verfahrens A der Erfindung in Schritt (A-i) Amine ein, die ausgewählt sind unter
- 1,2-Ethylendiamin,
- 1,2-Propylendiamin,
- 1,3-Propylendiamin,
- Polyaminen mit zwei primären Aminogruppen und wenigstens einer sekundären oder tertiären Aminogruppe und/oder wenigstens einem Ether-Sauerstoffatom, in denen alle Aminogruppen und Ether-Sauerstoffatome linear zueinander angeordnet sind und in denen das Verhältnis der Anzahl der im Polyamin enthaltenen Kohlenstoffatome zur Anzahl der im Polyamin enthaltenen Stickstoffatome und gegebenenfalls enthaltenen Sauerstoffatome kleiner 2,5:1, vorzugsweise kleiner oder gleich 2,3:1 und insbesondere kleiner oder gleich 2:1 ist,
- Polyaminen mit wenigstens zwei primären Aminogruppen, wenigstens einer weiteren primären oder sekundären Aminogruppe und gegebenenfalls wenigstens einer weiteren primären, sekundären oder tertiären Aminogruppe und/oder gegebenenfalls wenigstens einem Ether-Sauerstoffatom, in denen wenigstens drei Aminogruppen nicht linear zueinander angeordnet sind und in denen das Verhältnis der Anzahl der im Polyamin enthaltenen Kohlenstoffatome zur Anzahl der im Polyamin enthaltenen Stickstoffatome und gegebenenfalls enthaltenen Sauerstoffatome oder gleich 3:1, vorzugsweise kleiner oder gleich 2,5:1 und insbesondere kleiner oder gleich 2,3:1 ist, und
- Polyaminen der Formel IV

   NH₂-[A³-X³]ₒ-A³-NH₂ (IV)

   worin
   - jedes A³: unabhängig für lineares oder verzweigtes C₃-C₁₀-Alkylen steht;
   - X³: für O oder NR^{e}, vorzugsweise für NR^{e}, steht;
   - R^{e}: für H, C₁-C₄-Alkyl, C₂-C₄-Hydroxyalkyl oder C₁-C₄-Alkoxy steht; und
   - o: für eine Zahl von 0 bis 100 steht;
   mit der Maßgabe, dass A³ für lineares oder verzweigtes C₄-C₁₀-Alkylen steht, wenn o für 0 steht.

Bezüglich geeigneter und bevorzugter Polyamine mit zwei primären Aminogruppen und wenigstens einer sekundären oder tertiären Aminogruppe und/oder wenigstens einem Ether-Sauerstoffatom, in denen das Verhältnis der Anzahl der im Polyamin enthaltenen Kohlenstoffatome zur Anzahl der im Polyamin enthaltenen Stickstoffatome und gegebenenfalls enthaltenen Sauerstoffatome kleiner 2,5:1 ist, sowie geeigneter und bevorzugter Polyamine mit wenigstens zwei primären Aminogruppen, wenigstens einer weiteren primären oder sekundären Aminogruppe und gegebenenfalls wenigstens einer weiteren primären, sekundären oder tertiären Aminogruppe und/oder gegebenenfalls wenigstens einem Ether-Sauerstoffatom, in denen das Verhältnis der Anzahl der im Polyamin enthaltenen Kohlenstoffatome zur Anzahl der im Polyamin enthaltenen Stickstoffatome und gegebenenfalls enthaltenen Sauerstoffatome kleiner oder gleich 3:1 ist, wird auf die obigen Ausführungen Bezug genommen.

In den Polyaminen der Formel IV steht für den Fall, dass o nicht für 0 steht, vorzugsweise jedes A³ unabhängig für C₃-C₄-Alkylen, insbesondere für 1,2-Propylen, 1,3-Propylen oder 1,4-Butylen. Wenn o für 0 steht, steht A³ für lineares oder verzweigtes C₄-C₁₀-Alkylen.

R^{e} steht vorzugsweise für H oder C₁-C₄-alkyl, besonders bevorzugt für H oder Methyl und insbesondere für H.

Beispiele für geeignete Amine der Formel IV sind 2,2-Dimethyl-1,3-propandiamin, 1,4-Butylendiamin, 1,5-Pentylendiamin, Hexamethylendiamin, Heptamethylendiamin, Octamethylendiamin, Nonamethylendiamin, Decamethylendiamin, 2,2,4- oder 2,4,4-Trimethyl-1,6-hexamethylendiamin, 1,5-Diamino-2-methylpentan, 1,4-Diamino-4-methylpentan, Dipropylentriamin, Tripropylentetramin, Tetrapropylenpentamin, Pen-tapropylenhexamin, Hexapropylenheptamin, Heptapropylenoctamin und höhere Polypropylenpolyamine, Dibutylentriamin, Tributylentetramin, Tetrabutylenpentamin, Pentabutylenhexamin, Hexabutylenheptamin, Heptabutylenoctamin und höhere Polybutylenpolyamine.

Besonders bevorzugt steht o für 0. Beispiele für geeignete Amine IV, in denen o für 0 steht, sind 2,2-Dimethyl-1,3-propandiamin, 1,4-Butylendiamin, 1,5-Pentylendiamin, Hexamethylendiamin, Heptamethylendiamin, Octamethylendiamin, Nonamethylendiamin, Decamethylendiamin, 2,2,4- oder 2,4,4-Trimethyl-1,6-hexamethylendiamin, 1,5-Diamino-2-methylpentan und 1,4-Diamino-4-methylpentan. Bevorzugt sind hierunter 1,4-Butylendiamin, 1,5-Pentylendiamin, Hexamethylendiamin, Heptamethylendiamin, Octamethylendiamin, Nonamethylendiamin und Decamethylendiamin.

In einer bevorzugten Ausführungsform des Verfahrens A der Erfindung werden in Schritt (A-i) nur Komponenten (A-i.1) und (A-i.2) kondensiert; d. h. Komponenten (A-i.3), (A-i.4) und (A-i.5) kommen nicht zum Einsatz.

In Schritt (A-i) wird das Molverhältnis von Amin (A-i.2) und Komponente (A-i.1) vorzugsweise so gewählt, dass das Verhältnis der Anzahl der im Amin (A-i.2) enthaltenen primären Aminogruppen zur Anzahl der in Komponente (A-i.1) enthaltenen primären Aminogruppen wenigstens 1:1 beträgt. Besonders bevorzugt beträgt das Verhältnis der Anzahl der im Amin (A-i.2) enthaltenen primären Aminogruppen zur Anzahl der in Komponente (A-i.1) enthaltenen primären Aminogruppen 1:1 bis 10:1, stärker bevorzugt 1:1 bis 5:1, z. B. 1,1:1 bis 5:1 oder vorzugsweise 1,2:1 bis 5:1, noch stärker 1:1 bis 3:1, z. B. i,1:1 bis 3:1 oder vorzugsweise 1,2:1 bis 3:1 oder besonders bevorzugt 1,3:1 bis 3:1, insbesondere 1:1 bis 2:1, z. B. 1,1:1 bis 2:1 oder vorzugsweise 1,2:1 bis 2:1 oder besonders bevorzugt 1,3:1 bis 2:1, und speziell 1,5:1 bis 2:1.

Wenn Komponente (A-i.3), (A-i.4) und/oder (A-i.5) eingesetzt wird, so beträgt das Molverhältnis aller Komponenten (A-i.3), (A-i.4) und (A-i.5) zur Komponente (A-i.1) vorzugsweise 50:1 bis 1:50, besonders bevorzugt 10:1 bis 1:10, stärker bevorzugt 8:1 bis 1:8, noch stärker bevorzugt 4:1 bis 1:8, insbesondere 2:1 bis 1:5 und speziell 1:1 bis 1:5.

Umsetzungen gemäß Schritt (A-i) sind grundsätzlich bekannt und beispielsweise in der WO 2009/080787, WO 2005/044897, WO 2005/075541, WO 03/066702 (für den Einsatz von Komponente (A-i.4)) und WO 2009/021986 (für den Einsatz von Komponente (A-i.5)) beschrieben, worauf hiermit in vollem Umfang Bezug genommen wird.

Die Herstellung erfolgt in der Regel durch Umsetzung der Komponenten (A-i.1) und (A-i.2) und gegebenenfalls (A-i.3), (A-i.4) und/oder (A-i.5) bei erhöhter Temperatur.

Vorzugsweise beträgt die Reaktionstemperatur 40 bis 300°C, besonders bevorzugt 100 bis 250 °C und insbesondere 150 bis 230 °C.

Die Umsetzung erfolgt häufig in Gegenwart eines geeigneten Katalysators. Geeignete Katalysatoren sind Brönstedsäuren oder Lewissäuren. Geeignete Brönsted-Säuren sind sowohl anorganische Säuren, wie beispielsweise Mineralsäuren, z. B. Fluorwasserstoffsäure, Salzsäure, Bromwasserstoffsäure, Salpetersäure, Schwefelsäure, Phosphorsäure oder Amidosulfonsäure, aber auch Ammoniumsalze, wie Ammoniumfluorid, Ammoniumchlorid, Ammoniumbromid oder Ammoniumsulfat, als auch organische Säuren, wie Methansulfonsäure, Essigsäure, Trifluoressigsäure und p-Toluolsulfonsäure. Geeignete Brönstedsäuren sind auch die Ammoniumsalze von organischen Aminen, wie Ethylamin, Diethylamin, Propylamin, Dipropylamin, Butylamin, Dibutylamin, Anilin, Benzylamin oder Melamin, und auch die Ammoniumsalze von Harnstoff.

Geeignete Lewis-Säuren sind alle Metall- oder Halbmetall-Halogenide, in denen das Metall oder Halbmetall einer Elektronenpaarlücke besitzt. Beispiele hierfür sind BF₃, BCl₃, BBr₃, AlF₃, AlCl₃, AlBr₃, Ethylaluminiumdichlorid, Diethylaluminiumchlorid, TiF₄, TiCl₄, TiBr₄, VCl₅, FeF₃, FeCl₃, FeBr₃, ZnF₂, ZnCl₂, ZnBr₂, Cu(I)F, Cu(I)Cl, Cu(I)Br, Cu(II)F₂, Cu(II)Cl₂, Cu(II)Br₂, Sb(III)F₃, Sb(V)F₅, Sb(III)Cl₃, Sb(V)Cl₅, Nb(V)Cl₅, Sn(II)F₂, Sn(II)Cl₂, Sn(II)Br₂, Sn(IV)F₄, Sn(IV)Cl₄ und Sn(IV)Br₄.

Bevorzugt verwendet man jedoch Brönsted-Säuren. Hierunter bevorzugt sind die anorganischen Säuren und insbesondere die Ammoniumsalze, wie Ammoniumchlorid oder Ammoniumbromid. Speziell verwendet man Ammoniumchlorid.

Die Reaktion kann sowohl bei Normaldruck als auch bei erhöhtem Druck durchgeführt werden, z. B. bei einem Druck von 1 bis 20 bar oder 1 bis 15 bar oder 10 bis 15 bar. Dabei wird der Druck häufig ausschließlich durch den im Verlauf der Reaktion bei der Kondensation der Komponenten (A-i.1) und (A-i.2) frei werdenden Ammoniak aufgebaut; das heißt der Druck nimmt mit fortschreitender Reaktion zu und kann dann auf den gewünschten Wert eingestellt werden. Wenn die Reaktion bei erhöhtem Druck durchgeführt werden soll, kann der Druck jedoch auch über ein Inertgas, z. B. durch Einleiten von Stickstoff, Argon oder Kohlendioxid, vorzugsweise von Stickstoff, aufgebaut werden. Dies bietet sich insbesondere dann an, wenn die Reaktion von Beginn an, d. h. bevor überhaupt ein nennenswerter Druck durch den gebildeten Ammoniak entstehen kann, unter erhöhtem Druck durchgeführt werden soll. Der Reaktionsdruck wird insbesondere durch die Art der eingesetzten Amine (Komponente A-i.2) vorgegeben. So kann die Reaktion bei Normaldruck durchgeführt werden, wenn das wenigstens eine eingesetzte Amin einen Siedepunkt hat, der oberhalb der Reaktionstemperatur liegt. Liegt der Siedepunkt hingegen unterhalb der Reaktionstemperatur, so ist es natürlich vorteilhaft, die Umsetzung bei erhöhtem Druck durchzuführen. Aber auch bei Aminen mit einem Siedepunkt oberhalb der Reaktionstemperatur kann es unter Umständen vorteilhaft sein, die Reaktion unter Überdruck durchzuführen, beispielsweise, um eine höhere Reaktionsgeschwindigkeit zu erreichen.

Die Umsetzung kann gewünschtenfalls in einem geeigneten Lösungsmittel durchgeführt werden. Geeignete Lösungsmittel sind inert, das heißt sie reagieren unter den gegebenen Reaktionsbedingungen nicht mit den Edukten, Zwischenprodukten oder Produkten und werden selbst auch nicht unter den gegebenen Reaktionsbedingungen, beispielsweise durch thermische Zersetzung, abgebaut. Beispiele für geeignete Lösungsmittel sind chlorierte aliphatische oder aromatische Kohlenwasserstoffe, wie Methylenchlorid, Chloroform, Dichlorethan, Trichlorethan, Chlorbenzol, Chlortoluol und o-Dichlorbenzol, offenkettige und cyclische Ether, wie Diethylether, Dipropylether, tert-Butylmethylether, tert-Butylethylether, Tetrahydrofuran und 1,4-Dioxan, polar-aprotische Lösungsmittel, wie N,N-Dimethylformamid, N,N-Dimethylacetamid, Dimethylsulfoxid und Acetonitril, und polar-protische Lösungsmittel, z. B. Polyole bzw. Polyetherpolyole, wie Ethylenglykol, Propylenglykol, Diethylenglykol, Triethylenglykol oder Polyethylenglykol. Vorzugsweise wird die Reaktion jedoch in Substanz, das heißt ohne zusätzliches Lösungsmittel, durchgeführt. In diesem Fall dient häufig das Amin der Komponente (A-i.2) als Lösungsmittel, insbesondere, wenn es flüssig ist und im Überschuss eingesetzt wird.

Die Umsetzung kann so durchgeführt werden, dass alle Komponenten gemischt und durch Erwärmen auf die gewünschte Reaktionstemperatur zur Reaktion gebracht werden. Alternativ kann auch ein Teil der Komponenten zuerst zugegeben und die restlichen Bestandteile nach und nach zugeführt werden, wobei die Reihenfolge der Zugabe von untergeordneter Bedeutung ist. Es hat sich jedoch bewährt, schwerer lösliche Komponenten, wie Harnstoff oder Melamin, nicht vollständig vorzulegen, sondern nach und nach kontinuierlich oder portionsweise zuzuführen. Vorteilhafterweise erfolgt die Zugabe der einzelnen Reaktanden in einer solchen Weise, dass ihre vollständige Auflösung gewährleistet ist, damit ihre Umsetzung in der Kondensationsreaktion möglichst vollständig ist.

Die Durchführung der Reaktion erfolgt in der Regel in für solche Kondensationsreaktionen übliche Reaktionsgefäße, beispielsweise in heizbaren Rührreaktoren, Druckrührgefäßen oder Rührautoklaven.

Das Reaktionsgemisch wird in der Regel solange reagieren gelassen, bis eine gewünschte maximale Viskosität erreicht ist. Die Viskosität kann durch Probeentnahme und Bestimmung mittels üblicher Verfahren, beispielsweise mit einem Viskosimeter, bestimmt werden; häufig zeigt es sich aber schon optisch im Reaktionsverlauf, wenn die Viskosität stark zunimmt, beispielsweise durch ein Aufschäumen des Reaktionsgemischs.

Vorzugsweise wird die Reaktion dann abgebrochen, wenn das Reaktionsgemisch eine Viskosität von maximal 100.000 mPas, z. B. von 250 bis 100.000 mPas oder von 500 bis 100.000 mPas oder von vorzugsweise 750 bis 100.000 mPas (bei 75 °C), besonders bevorzugt von maximal 50.000 mPas, z. B. von 250 bis 50.000 mPas oder von 500 bis 50.000 mPas oder von vorzugsweise 750 bis 50.000 mPas (bei 75 °C), und insbesondere von maximal 25.000 mPas, z. B. von 250 bis 25.000 mPas oder von 500 bis 25.000 mPas oder von vorzugsweise 750 bis 25.000 mPas (bei 75 °C), hat.

Wenn die Viskosität des Reaktionsgemisches nicht weiter steigen soll, wird die Reaktion abgebrochen. Die Reaktion wird vorzugsweise durch Temperaturemiedrigung abgebrochen, bevorzugt durch eine Temperaturemiedrigung auf < 100°, z. B. 20 bis < 100°, bevorzugt auf < 50 °C, z. B. auf 20 bis < 50 °C.

Unter Umständen kann es erforderlich oder wünschenswert sein, dass erhaltene Reaktionsgemisch aufzuarbeiten und zu reinigen. Die Aufarbeitung/Reinigung kann mittels üblicher Verfahren erfolgen, beispielsweise durch Desaktivieren oder Entfernen des Katalysators und/oder durch Entfernen von Lösungsmittel und nicht umgesetzten Edukten. In der Regel ist jedoch der Reinheitsgrad der erhaltenen Polykondensate ausreichend, so dass keine weitere Aufarbeitung oder Aufreinigung erfolgen muss und das Produkt dem/den weiteren Reaktionsschritt(en) direkt zugeführt werden kann.

Wird Komponente (A-i.4) eingesetzt und handelt es sich dabei nicht um ein verkapptes/blockiertes Isocyanat, muss die Kondensationsreaktion zum Abbruch mit einem Terminierungsreagens versetzt werden.

Die fokale(n), d. h. endständige(n) Gruppen der Unterschussfunktionalität (NCO-Gruppe) können nach Erreichen des gewünschten Umsatzgrades und somit Molekulargewichts entweder durch Zugabe einer gegenüber Isocyanaten reaktiven, monofunktionellen Verbindung, z. B. durch Zugabe eines Monoamins, Aminoalkohols oder auch Alkohols gestoppt werden. Hierbei werden Terminierungsreagenzien enthaltend eine Aminogruppe bevorzugt, da diese die Weiterreaktion schneller abbrechen als zum Beispiel Alkohole und somit die erhaltenen Produkte wohldefinierter sind.

Beispiele für geeignete Monoamine sind Methylamin, Ethylamin, Propylamin, Isopropylamin, n-Butylamin, sec-Butylamin, Isobutylamin, tert-Butylamin, Pentylamin, Hexylamin, Ethanolamin, Propanolamin, Isopropanolamin, Pentanolamin, (2-Methoxyethyl)-amin, (2-Ethoxyethyl)-amin, (3-Methoxypropyl)-amin, (3-Ethoxypropyl)-amin, [3-(2-Ethylhexyl)-propyl]-amin, 2-(2-Aminoethoxy)ethanol, Cyclohexylamin, Aminomethylcyclohexan, Anilin, Benzylamin und dergleichen.

Weiterhin ist auch die Zugabe einer Terminierungsverbindung enthaltend zwei oder mehr als zwei gegenüber Isocyanat reaktiven Gruppen möglich. In diesem Fall addieren sich dann gemäß einer konvergenten Syntheseroute zwei oder mehr Polymerarme an die di- oder mehrfunktionelle Terminationsverbindung, was auf eine schlagartige Erhöhung des mittleren Molgewichtes des Polymers deutlich über das mittlere Molgewicht des Polymers zum Zeitpunkt der Stopperzugabe hinausführt.

Geeignete di- oder mehrfunktionelle Amine sind beispielsweise primäre Amine mit einer oder mehreren sekundären und/oder tertiären Aminofunktionen, so wie sie oben bereits als (A-i.2) beschrieben wurden, oder dergleichen.

Bevorzugt verwendet man als Terminierungsreagenz primäre Monoamine, d. h. Amine mit einer einzigen primären Aminogruppe und ohne weitere sekundäre oder tertiäre Aminofunktionen.

Die in Schritt (A-i) erhaltenen Produkte sind hochverzweigt und im Wesentlichen nicht vernetzt.

Die Quatemisierung im optionalen Schritt (A-ii) erfolgt durch Umsetzung des in Schritt (A-i) erhaltenen Polymers mit einem Quaternisierungsmittel. Geeignete Ouatemisierungsmittel sind Brönstedsäuren mit einer ausreichend hohen Säurestärke, um sekundäre und tertiäre Aminogruppen zu protonieren, und Alkylierungsmittel. Geeignete Säuren sind beispielsweise Mineralsäuren, z. B. Fluorwasserstoffsäure, Salzsäure, Bromwasserstoffsäure, Salpetersäure, Schwefelsäure, Phosphorsäure oder Amidosulfonsäure, und organische Säuren, wie Trifluoressigsäure und p-Toluolsulfonsäure. Geeignete Alkylierungsmittel sind beispielsweise Alkylhalogenide, wie Methylchlorid, Methylbromid, Methyliodid, Ethylbromid oder Ethyliodid, Benzylhalogenide, wie Benzylchlorid oder Benzylbromid, Dialkylsulfate, wie Dimethylsulfat oder Diethylsulfat, und Oxoniumsalze, wie Trimethyloxoniumchlorid, Trimethyloxoniumbromid, Trimethyloxoniumtetrafluoroborat, Triethyloxoniumchlorid, Triethyloxoniumbromid und Triethyloxoniumtetrafluoroborat. Bevorzugt verwendet man zum Quatemisieren ein Alkylierungsmittel. Bevorzugte Alkylierungsmittel sind die oben genannten Alkylhalogenide und Dialkylsulfate.

Die Quaternisierung erfolgt gemäß üblicher Methoden durch Umsetzung des in Schritt (A-i) erhaltenen Polymers mit dem Quatemisierungsmittel. Die Umsetzung erfolgt in der Regel bei Temperaturen im Bereich von -40 bis 100 °C, bevorzugt von -20 bis 50 °C und insbesondere etwa bei Raumtemperatur.

Die Quaternisierung wird in der Regel in einem geeigneten Lösungsmittel durchgeführt. Geeignete Lösungsmittel sind inert, das heißt sie reagieren unter den gegebenen Reaktionsbedingungen nicht mit den Edukten oder Produkten. Insbesondere werden sie nicht selbst alkyliert oder protoniert. Beispiele für Lösungsmittel, die für eine Quatemisierung durch Alkylierung geeignet sind, sind chlorierte aliphatische oder aromatische Kohlenwasserstoffe, wie Methylenchlorid, Chloroform, Dichlorethan, Trichlorethan, Chlorbenzol, Chlortoluol und o-Dichlorbenzol, und polar-aprotische Lösungsmittel, wie N,N-Dimethylformamid, N,N-Dimethylacetamid oder Dimethylsulfoxid. Für eine Quater-nisierung mittels Protonierung sind darüber hinaus noch offenkettige und cyclische Ether, wie Diethylether, Dipropylether, tert-Butylmethylether, tert-Butylethylether, Tetrahydrofuran und 1,4-Dioxan, Acetonitril, und polar-protische Lösungsmittel, z. B. Polyole bzw. Polyetherpolyole, wie Ethylenglykol, Propylenglykol, Diethylenglykol, Triethylenglykol oder Polyethylenglykol, als Lösungsmittel geeignet.

Das Quaternisierungsmittel wird in einer solchen Menge eingesetzt, dass ein Teil der primären und/oder sekundären Aminogruppen des in Schritt (A-i) enthaltenen Polymers nicht quaternisiert wird. Vorzugsweise werden in Schritt (A-ii) höchstens 80 % und wenigstens 5 %, z. B. 5 bis 80 % oder 10 bis 80 % oder 20 bis 80%, besonders bevorzugt höchstens 60 % und wenigstens 5 %, z. B. 5 bis 60 % oder 10 bis 60 % oder 20 bis 60%, und insbesondere höchstens 50 % und wenigstens 5 %, z. B. 5 bis 50 % oder 10 bis 50 % oder 20 bis 50%, der im Polymer enthaltenen primären und sekundären Aminogruppen quatemisiert.

Da Protonierungs- und Alkylierungsreaktionen bei ausreichender Reaktionsdauer in der Regel quantitativ verlaufen, wird die geeignete Menge an Quaternisierungsmittel anhand der im Polymer theoretisch enthaltenen primären und sekundären Aminogruppen berechnet. Alternativ kann man die Anzahl der Aminfunktionen analytisch bestimmen und anhand dessen die Menge an Quaternisierungsmittel berechnen.

Nach beendeter Protonierung/Alkylierung kann es erforderlich oder wünschenswert sein, das erhaltene Reaktionsgemisch aufzuarbeiten und zu reinigen. Die Aufarbeitung/Reinigung kann mittels üblicher Verfahren erfolgen, beispielsweise durch Entfernen von Lösungsmittel und nicht umgesetzten Edukten. In der Regel ist der Reinheitsgrad der erhaltenen Polykondensate ausreichend, so dass keine weitere Aufreinigung erfolgen muss und das Produkt dem/den weiteren Reaktionsschritt(en) direkt zugeführt werden kann.

In Verfahren A wird die in Schritt (A-iii) eingesetzte wenigstens eine Verbindung, die mit Aminogruppen des in Schritt (A-i) oder (A-ii) erhaltenen Polymers eine Kondensations- oder Additionsreaktion eingehen kann, so ausgewählt, dass durch die Umsetzung in Schritt (A-iii) ein lipophiler Polymerabschnitt, vorzugsweise eine lipophile Hülle, entsteht.

Dementsprechend besitzt die wenigstens eine in Schritt (A-iii) eingesetzte Verbindung vorzugsweise überwiegend lipophile Eigenschaften.

Verbindungen, die in Schritt (A-iii) eingesetzt werden, sind ausgewählt unter
- aliphatischen C₄-C₂₂-Monocarbonsäuren oder Derivaten davon;
- α,β-Dicarbonsäuren mit wenigstens 6 Kohlenstoffatomen oder Derivaten davon;
- aliphatischen, cycloaliphatischen oder aromatischen gegebenenfalls verkappten Isocyanaten;
- aliphatischen Monoaminen mit wenigstens 6 Kohlenstoffatomen;
- aliphatischen Polyaminen , in denen alle Aminogruppen linear zueinander angeordnet sind, mit einem Verhältnis der Anzahl der im Polyamin enthaltenen Kohlenstoffatome zur Anzahl der enthaltenen Stickstoffatome von wenigstens 2,5:1, vorzugsweise wenigstens 2,7:1;
- Alkylenoxiden mit wenigstens 3 Kohlenstoffatomen;
- Polyetheraminen der Formel V

   NH₂-[A⁴-O]ₚ-A⁴-NH₂ (V)

   worin
   - jedes A⁴: unabhängig für lineares oder verzweigtes C₃-C₄-Alkylen steht; und
   - p: für eine Zahl von 1 bis 5000, vorzugsweise von 3 bis 5000 und insbesondere von 10 bis 5000 steht;
- Ketonen oder Aldehyden mit wenigstens 6 Kohlenstoffatomen; und
- Aldehyden in Kombination mit wenigstens einer CH-aciden Verbindung mit wenigstens 4 Kohlenstoffatomen oder mit wenigstens einem Hydroxyaromaten, der wenigstens einen aliphatischen Rest mit wenigstens 4 Kohlenstoffatomen als Substituenten trägt;
wobei für den Fall, dass die wenigstens eine in Schritt (A-iii) eingesetzte Verbindung ausgewählt ist unter Alkylenoxiden mit wenigstens 3 Kohlenstoffatomen, der Umsetzung mit diesem wenigstens einen Alkylenoxid eine Umsetzung mit Ethylenoxid vorausgehen kann.

Im letzteren Fall umfasst die hydrophile Schale auch den im vorausgehenden Schritt gebildeten Ethylenoxid-Polymerblock.

Aliphatische Monocarbonsäuren mit 4 bis 22 Kohlenstoffatomen sind beispielsweise Buttersäure, Isobuttersäure, Valeriansäure, Isovaleriansäure, Capronsäure, Önanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Tuberculostearinsäure, Arachinsäure, Behensäure, Palmitoleinsäure, Ölsäure, Erucasäure, Sorbinsäure, Linolsäure, Linolensäure, Elaeostearinsäure, Arachidonsäure, Clupanodonsäure und Docosahexaensäure. Bevorzugt sind aliphatische C₆-C₂₂-Monocarbonsäuren oder Derivate davon, wie Capronsäure, Önanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Tuberculostearinsäure, Arachinsäure, Behensäure, Palmitoleinsäure, Ölsäure, Erucasäure, Sorbinsäure, Linolsäure, Linolensäure, Elaeostearinsäure, Arachidonsäure, Clupanodonsäure und Docosahexaensäure und deren Derivate. Stärker bevorzugt sind aliphatische C₈-C₂₂-Monocarbonsäuren oder Derivate davon, wie Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Tuberculostearinsäure, Arachinsäure, Behensäure, Palmitoleinsäure, Ölsäure, Erucasäure, Sorbinsäure, Linolsäure, Linolensäure, Elaeostearinsäure, Arachidonsäure, Clupanodonsäure und Docosahexaensäure und deren Derivate. Noch stärker bevorzugt sind aliphatische C₁₀-C₂₂-Monocarbonsäuren oder Derivate davon, wie Caprinsäure, Undecansäure, Laurinsäure, Tridecansäure, Myristinsäure, Pentadecansäure, Palmitinsäure, Margarinsäure, Stearinsäure, Nonadecansäure, Tuberculostearinsäure, Arachinsäure, Behensäure, Palmitoleinsäure, Ölsäure, Erucasäure, Sorbinsäure, Linolsäure, Linolensäure, Elaeostearinsäure, Arachidonsäure, Clupanodonsäure und Docosahexaensäure und deren Derivate. Insbesondere sind aliphatische C₁₀-C₂₀-Monocarbonsäuren oder Derivate davon bevorzugt, wie Caprinsäure, Undecansäure, Laurinsäure, Tridecansäure, Myristinsäure, Pentadecansäure, Palmitinsäure, Margarinsäure, Stearinsäure, Nonadecansäure, Tuberculostearinsäure, Arachinsäure, Palmitoleinsäure, Ölsäure, , Linolsäure, Linolensäure, Elaeostearinsäure und Arachidonsäure und deren Derivate.

Geeignete Carbonsäurederivate sind alle Derivate, die geeignet sind, mit den Aminogruppen des Polymers aus Schritt (A-i) bzw. (A-ii) zu einer Amidbindung zu reagieren. Dazu gehören Halogenide, insbesondere Säurechloride, Anhydride und Ester.

Bei den Anhydriden kann es sich sowohl um die symmetrischen Anhydride als auch um asymmetrische Anhydride handeln. Letztere sind so gewählt, dass die "fremde" Säuregruppe leicht durch die Aminogruppen des Polymers aus Schritt (A-i) oder (A-ii) verdrängt werden kann. Geeignete Säurederivate, mit der die o. g. Carbonsäuren geeignete gemischte Anhydride bilden können, sind beispielsweise die Ester von Chlorameisensäure, z. B. Isopropylchlorformiat und Isobutylchlorformiat, oder von Chloressigsäure.

Geeignete Ester sind insbesondere die C₁-C₄-Alkylester, wie die Methyl-, Ethyl-, Propyl-, Isopropyl-, n-Butyl-, sec-Butyl-, Isobutyl- oder tert-Butylester. Geeignet sind aber auch Ester, die sich von C₂-C₆-Polyolen, wie Glykol, Glycerin, Trimethylolpropan, Erythritol, Pentaerythritol und Sorbitol, ableiten, wobei der Glycerinester bevorzugt ist. Wenn Polyol-Ester eingesetzt werden, so können gemischte Ester, d. h. Ester mit verschiedenen Carbonsäureresten eingesetzt werden. Geeignet sind des Weiteren Aktivester, die man formal durch die Umsetzung der Säure mit einem Aktivester-bildenden Alkohol, wie p-Nitrophenol, N-Hydroxybenzotriazol (HOBt), N-Hydroxysuccinimid oder OPfp (Pentaflourphenol) erhält.

Vorzugsweise werden die Carbonsäuren selbst (d. h. nicht deren Derivate) eingesetzt.

Die Monocarbonsäuren bzw. geeignete Derivate davon werden in Schritt (A-iii) unter solchen Bedingungen umgesetzt, dass sie mit den Aminogruppen des Polymers aus Schritt (A-i) oder (A-ii) eine Amidbindung bilden. Geeignete Reaktionsbedingungen entsprechen üblichen Amidbildungsbedingungen und sind beispielsweise in Jerry March, Advanced Organic Chemistry, 3. Auflage John Wiley & Sons, 1985, S. 370 ff und in der darin zitierten Literatur beschrieben.

So erfolgt die Umsetzung in der Regel bei erhöhter Temperatur, vorzugsweise von 80 bis 250 °C, besonders bevorzugt von 100 bis 220 °C, insbesondere von 110 bis 200 °C. Es ist möglich, die Umsetzung insgesamt bei dieser Temperatur ablaufen zu lassen, wobei in diesem Fall die Reaktionstemperatur vorzugsweise 100 bis 220 °C und insbesondere 110 bis 200 °C beträgt, oder aber alternativ die Reaktanden zuerst bei einer niedrigeren Temperatur, beispielsweise von 80 bis 160 °C, bevorzugt von 100 bis 150 °C, umzusetzen, und erst anschließend die Temperatur weiter auf den oben angegebenen Bereich, z. B. auf 160 bis 200 °C, zu erhöhen.

Vorzugsweise entfernt man während der Umsetzung bei erhöhter Temperatur das gebildete Reaktionswasser (wenn eine Carbonsäure eingesetzt wurde) bzw. den gebildeten Halogenwasserstoff (wenn ein Säurehalogenid eingesetzt wurde), den gebildeten Alkohol (wenn ein Ester eingesetzt wurde) oder die gebildete Säure (wenn ein Anhydrid eingesetzt wurde), um die Amidierungsreaktion zu beschleunigen.

Die Umsetzung kann unter einem Inertgasstrom, beispielsweise unter einem Stickstoffstrom, erfolgen.

Die Umsetzung kann in Gegenwart eines geeigneten Lösungsmittels erfolgen. Geeignete Lösungsmittel sind solche, die die Reaktion der Aminogruppen des Polymers und Carbonsäure(derivat) nicht negativ beeinflussen. Hierzu gehören Aromaten, wie Benzol und Toluol, Ether, wie Diethylether, Dipropylether, Methylbutylether, Tetrahydrofuran und Dioxan, und chlorierte Aliphaten, wie Methylenchlorid, Chloroform, Dichlorethan und dergleichen. Vorzugsweise erfolgt die Reaktion jedoch in Abwesenheit eines Lösungsmittels.

Die Monocarbonsäure bzw. ihr Derivat wird in Schritt (A-iii) in einer solchen Menge eingesetzt, dass das Molverhältnis der Gesamtzahl der im Amin der Komponente (A-i.2) enthaltenen primären und sekundären Aminogruppen zur Carbonsäure bzw. ihrem Derivat vorzugsweise 1:2 bis 300:1, besonders bevorzugt 1:1 bis 200:1, stärker bevorzugt 1:1 bis 100:1, z. B. 1,5:1 bis 100:1 oder bevorzugt 2:1 bis 100:1 oder insbesondere 10:1 bis 100:1, beträgt.

Geeignete α,β-Dicarbonsäuren mit wenigstens 6 Kohlenstoffatomen oder Derivate davon, sind beispielsweise Adipinsäure, Pimelinsäure, Azelainsäure, Sebacinsäure, Sorbinsäure, Polyalkylen-substituierte Bernsteinsäure und Derivate davon. Polyalkylensubstituierte Bernsteinsäure ist vorzugsweise Polyisobutylen-substituierte Bernsteinsäure, die beispielsweise durch Umsetzung von Polyisobuten mit Maleinsäureanhydrid unter den Reaktionsbedingungen einer En-Reaktion erhältlich ist. Die Polyalkenyl-, speziell die Polyisobutenylreste weisen dabei ein zahlenmittleres Molekulargewicht Mₙ von vorzugsweise 100 bis 5000, besonders bevorzugt 200 bis 1000 auf. Bevorzugt sind hierunter α,β-Dicarbonsäuren mit wenigstens 10 Kohlenstoffatomen oder Derivate davon, wie Sebacinsäure und Polyalkylen-, insbesondere Polyisobutylen-substituierte Bernsteinsäure und Derivate davon. Bezüglich geeigneter Säurederivate wird auf die vorstehenden Ausführungen verwiesen, wobei es sich vorzugsweise nicht um die Dihalogenide handelt. Bevorzugt setzt man ein solches Derivat ein, bei dem die beiden Säuregruppen unterschiedliche Reaktionsgeschwindigkeiten bezüglich einer Amidierung haben, z. B. die Monoester oder die inneren Anhydride (d. h. die Anhydride der beiden Carbonsäuregruppen untereinander). Auf diese Weise soll die Bildung von Diamiden möglichst unterdrückt werden und es sollen möglichst nur Monoamide entstehen. Besonders bevorzugt werden im Fall der Dicarbonsäure die inneren Säureanhydride (d. h. Bernsteinsäureanhydrid, Adipinsäureanhydrid, etc.), eingesetzt.

Die Dicarbonsäuren bzw. geeignete Derivate davon werden in Schritt (A-i) unter solchen Bedingungen umgesetzt, dass sie mit den Aminogruppen des Polymers aus Schritt (A-i) oder (A-ii) eine Amidbindung oder eine Imidbindung bilden. Bevorzugt soll, wie schon gesagt, die Bildung von Diamiden möglichst vermieden werden; dies wird insbesondere durch die Wahl geeigneter Edukte bewerkstelligt (s. o.). Geeignete Reaktionsbedingungen entsprechen üblichen Amidbildungsbedingungen und sind beispielsweise in Jerry March, Advanced Organic Chemistry, 3. Auflage John Wiley & Sons, 1985, S. 370 ff und in der darin zitierten Literatur beschrieben.

So erfolgt die Umsetzung in der Regel bei erhöhter Temperatur, vorzugsweise von 80 bis 250 °C, besonders bevorzugt von 100 bis 220 °C, insbesondere von 110 bis 200 °C. Es ist möglich, die Umsetzung insgesamt bei dieser Temperatur ablaufen zu lassen, wobei in diesem Fall die Reaktionstemperatur vorzugsweise 100 bis 220 °C und insbesondere 110 bis 200 °C beträgt, oder aber alternativ die Reaktanden zuerst bei einer niedrigeren Temperatur, beispielsweise von 80 bis 160 °C, bevorzugt von 100 bis 150 °C, umzusetzen, und erst anschließend die Temperatur weiter auf den oben angegebenen Bereich, z. B. auf 160 bis 200 °C, zu erhöhen.

Vorzugsweise entfernt man während der Umsetzung bei erhöhter Temperatur das gebildete Reaktionswasser (wenn eine Carbonsäure eingesetzt wurde) bzw. den gebildeten Halogenwasserstoff (wenn ein Säurehalogenid eingesetzt wurde), den gebildeten Alkohol (wenn ein Ester eingesetzt wurde) oder die gebildete Säure (wenn ein Anhydrid eingesetzt wurde), um die Amidierungsreaktion zu beschleunigen.

Die Umsetzung kann unter einem Inertgasstrom, beispielsweise unter einem Stickstoffstrom, erfolgen.

Die Umsetzung kann in Gegenwart eines geeigneten Lösungsmittels erfolgen. Geeignete Lösungsmittel sind solche, die die Reaktion der Aminogruppen des Polymers und Carbonsäure(derivat) nicht negativ beeinflussen. Hierzu gehören Aromaten, wie Benzol und Toluol, Ether, wie Diethylether, Dipropylether, Methylbutylether, Tetrahydrofuran und Dioxan, und chlorierte Aliphaten, wie Methylenchlorid, Chloroform, Dichlorethan und dergleichen. Vorzugsweise erfolgt die Reaktion jedoch in Abwesenheit eines Lösungsmittels.

Die Dicarbonsäure bzw. ihr Derivat wird in Schritt (A-iii) in einer solchen Menge eingesetzt, dass das Molverhältnis der Gesamtzahl der im Amin der Komponente (A-i.2) enthaltenen primären und sekundären Aminogruppen zur Carbonsäure bzw. ihrem Derivat vorzugsweise 1:2 bis 300:1, besonders bevorzugt 1:1 bis 200:1, stärker bevorzugt 1:1 bis 100:1, z. B. 1,5:1 bis 100:1, oder bevorzugt 2:1 bis 100:1 oder speziell 10:1 bis 100:1, beträgt.

Geeignete aliphatische, cycloaliphatische oder aromatische gegebenenfalls verkappten Isocyanate sind beispielsweise Butylisocyanat, Pentylisocyanat, Hexylisocyanat, Cyclohexylisocyanat, Phenylisocyanat und dergleichen.

Die aliphatischen, cycloaliphatischen oder aromatischen gegebenenfalls verkappten Isocyanate werden in Schritt (A-iii) unter solchen Bedingungen umgesetzt, dass sie mit den Aminogruppen des Polymers aus Schritt (A-i) oder (A-ii) eine Harnstoffgruppe bilden. Geeignete Reaktionsbedingungen entsprechen üblichen Bedingungen für die Addition von Aminen an Isocyanate und sind beispielsweise in Jerry March, Advanced Organic Chemistry, 3. Auflage John Wiley & Sons, 1985, S. 802 ff und in der darin zitierten Literatur beschrieben.

Die Isocyanate werden in Schritt (A-iii) in einer solchen Menge eingesetzt, dass das Molverhältnis der Gesamtzahl der im Amin der Komponente (A-i.2) enthaltenen primären und sekundären Aminogruppen zum Isocyanat vorzugsweise 1:2 bis 300:1, besonders bevorzugt 1:1 bis 200:1, stärker bevorzugt 1:1 bis 100:1, z. B. 1,5:1 bis 100:1, oder bevorzugt 2:1 bis 100:1 oder speziell 10:1 bis 100:1, beträgt.

Geeignete aliphatische Monoamine mit wenigstens 6 Kohlenstoffatomen sind vorzugsweise primär oder sekundär, besonders bevorzugt primär. Beispiele hierfür sind Hexylamin, Heptylamin, Octylamin, Nonylamin, Decylamin, Dodecylamin, [3-(2-Ethylhexyl)-propyl]-amin und dergleichen.

Geeignete aliphatische Polyamine mit einem Verhältnis der Anzahl der im Polyamin enthaltenen Kohlenstoffatome zur Anzahl der enthaltenen Stickstoffatome von wenigstens 2,5:1 sind beispielsweise Pentamethylendiamin, Hexamethylendiamin, Heptamethylendiamin, Octamethylendiamin, Nonamethylendiamin, Decamethylendiamin, Polybutylenpolyamine, Polypentylenpolyamine und dergleichen.

Die Mono- oder Polyamine werden in Schritt (A-iii) unter solchen Bedingungen umgesetzt, dass sie unter Verdrängung von Ammoniak oder eines Amins in einer Sₙ-Reaktion mit den Aminogruppen des Polymers aus Schritt (A-i) oder (A-ii) reagieren.

Die Mono-/Polyamine werden in Schritt (A-iii) in einer solchen Menge eingesetzt, dass das Molverhältnis der Gesamtzahl der im Amin der Komponente (A-i.2) enthaltenen primären und sekundären Aminogruppen zum Mono-/Polyamin vorzugsweise 1:2 bis 300:1, besonders bevorzugt 1:1 bis 200:1, stärker bevorzugt 1:1 bis 100:1, z. B. 1,5:1 bis 100:1, oder bevorzugt 2:1 bis 100:1 oder speziell 10:1 bis 100:1, beträgt.

Geeignete Alkylenoxide mit wenigstens 3 Kohlenstoffatomen sind erfindungsgemäß Pro-pylenoxid, Butylenoxid, Pentylenoxid und Styroloxid. Bevorzugt sind hier-unter Propylenoxid, Butylenoxid und Pentylenoxid. Stärker bevorzugt sind Propylenoxid und Butylenoxid. Insbesondere verwendet man Propylenoxid.

Die Alkylenoxide werden in Schritt (A-iii) unter solchen Bedingungen umgesetzt, dass sie sich an Aminogruppen des Polymers aus Schritt (A-i) oder (A-ii) addieren und Polyetherolgruppen bilden.

Die Alkylenoxide werden in Schritt (A-iii) in einer solchen Menge eingesetzt, dass das Molverhältnis der Gesamtzahl der im Amin der Komponente (A-i.2) enthaltenen primären, sekundären und tertiären Aminogruppen zum Alkylenoxid vorzugsweise 1:1 bis 1:500, besonders bevorzugt 1:1 bis 1:300, stärker bevorzugt 1:2 bis 1:200, noch stärker bevorzugt 1:3 bis 1:100 und insbesondere 1:3 bis 1:50 beträgt.

Die Umsetzung mit Alkylenoxiden kann in Analogie zu bekannten Alkoxylierungsverfahren erfolgen. So kann man beispielsweise das in Schritt (A-i) oder (A-ii) erhaltene Produkt in einem ersten Schritt nur mit einem Teil des insgesamt zur Alkoxylierung vorgesehenen Alkylenoxids umsetzen, z. B. mit etwa 1 Mol Alkylenoxid pro Mol primärer, sekundärer und tertiärer Aminogruppen des Amins der Komponente (A-i.2). Dieser erste Schritt kann ohne Katalysator durchgeführt werden. Die Umsetzung erfolgt in der Regel in wässriger Lösung. Die Reaktionstemperatur beträgt im Allgemeinen 70 bis 200 °C und vorzugsweise 80 bis 160 °C. Da die meisten Alkylenoxide bei diesen Reaktionstemperaturen gasförmig sind, wird die Umsetzung in der Regel bei Überdruck durchgeführt, z. B. bei >1 bis 10 bar, vorzugsweise bei >1 bis 8 bar. In einem zweiten Schritt erfolgt die Umsetzung mit dem restlichen Alkylenoxid. Diese Umsetzung wird vorzugsweise in Gegenwart eines geeigneten Katalysators durchgeführt. Geeignete Katalysatoren sind Basen, z. B. Alkalimetallhydroxide, wie Natrium- oder Kaliumhydroxid, Erdalkalimetallhydroxide, wie Calcium- oder Magnesiumhydroxid, Alkalimetallalkoxide, wie Natriummethanolat, Natriumethanolat oder Kalium-tert-butoxid, Alkalimetallhydride, wie Lithium- oder Natriumhydrid, Erdalkalimetallhydride, wie Calciumhydrid, und Alkalimetallcarbonate, wie Natriumcarbonat. Bevorzugt sind hierunter die genannten Alkalimetallhydroxide und -alkoxide. Speziell verwendet man Natrium- oder Kaliumhydroxid. Der basische Katalysator wird in einer Menge von vorzugsweise 0,05 bis 10 Gew.-%, besonders bevorzugt 0,5 bis 2-Gew.-%, bezogen auf die Gesamtmenge an eingesetztem Polymer und Alkylenoxid, eingesetzt. Der zweite Alkoxylierungsschritt kann in Substanz oder in einem geeigneten Lösungsmittel durchgeführt werden. Geeignete Lösungsmittel sind für diesen Schritt insbesondere aprotische organische Lösungsmittel, z. B. polar-aprotische Lösungsmittel, wie Ether, insbesondere cyclische Ether, wie Tetrahydrofuran und Dioxan, Amide, wie N,N-Dimethylformamid und N,N-Dimethylacetamid, und Lactame, wie N-Methylpyrrolidon, oder unpolare Lösungsmittel, z. B. aliphatische Kohlenwasserstoffe, wie Pentan, Hexan und Heptan, cycloaliphatische Kohlenwasserstoffe, wie Cyclohexan, und aromatische Kohlenwasserstoffe, wie Benzol, Toluol und die Xylole. Geeignet sind auch Gemische der genannten Lösungsmittel. Vorzugsweise verwendet man Toluol oder Xylol. Bei beiden Durchführungsformen muss zuerst das in den ersten Schritt als Lösungsmittel eingesetzte Wasser entfernt werden, was beispielsweise destillativ erfolgen kann. Ansonsten wird die Alkoxylierung in der Regel wie für den ersten Schritt beschrieben durchgeführt.

Wenn der Umsetzung mit dem wenigstens einen Alkylenoxid mit wenigstens 3 Kohlenstoffatomen noch eine Umsetzung mit Ethylenoxid vorausgeht, so dass der hydrophile Kern durch einen Ethylenoxid-Polymerblock erweitert wird, erfolgt die Umsetzung mit Ethylenoxid analog zur oben beschriebenen Vorgehensweise.

Geeignete Polyetheramine der Formel V sind beispielweise Amin-terminierte Polypropylenglykolether (NH₂-⁅(CH₂)₃-O⁆ₚ-(CH₂)₃-NH₂; NH₂⁅(CH₂-CH(CH₃)-O⁆ₚ-(CH₂-CH(CH₃)-NH₂) und Amin-terminierte Polytetrahydrofurane (NH₂-⁅(CH₂)₄-O⁆ₚ-(CH₂)₄-NH₂) mit einem Molekulargewicht von 200 bis 360000.

Die Polyetheramine der Formel V werden in Schritt (A-iii) unter solchen Bedingungen umgesetzt, dass sie unter Verdrängung von Ammoniak oder eines Amins in einer Sₙ-Reaktion mit den Aminogruppen des Polymers aus Schritt (A-i) oder (A-ii) reagieren.

Die Polyetheramine werden in Schritt (A-iii) in einer solchen Menge eingesetzt, dass das Molverhältnis der Gesamtzahl der im Amin der Komponente (A-i.2) enthaltenen primären und sekundären Aminogruppen zum Polyetheramin vorzugsweise 1:2 bis 300:1, besonders bevorzugt 1:1 bis 200:1, stärker bevorzugt 1:1 bis 100:1, z. B. 1,5:1 bis 100:1, oder bevorzugt 2:1 bis 100:1 oder speziell 10:1 bis 100:1, beträgt.

Geeignete Ketone oder Aldehyde mit wenigstens 6 Kohlenstoffatomen sind beispielsweise Hexanal, Heptanal, Octanal, Nonanal, Decanal, Benzaldehyd, Methylbutylketon, Cyclohexanon, Benzophenon und dergleichen.

Die Ketone oder Aldehyde werden in Schritt (A-iii) unter solchen Bedingungen umgesetzt, dass sie mit den Aminogruppen des Polymers aus Schritt (A-i) oder (A-ii) unter Azomethin- bzw. Enaminbildung reagieren.

Die Ketone/Aldehyde werden in Schritt (A-iii) in einer solchen Menge eingesetzt, dass das Molverhältnis Gesamtzahl der der im Amin der Komponente (A-i.2) enthaltenen primären und sekundären Aminogruppen zum Keton/Aldehyd vorzugsweise 1:2 bis 300:1, besonders bevorzugt 1:1 bis 200:1, stärker bevorzugt 1:1 bis 100:1, z. B. 1,5:1 bis 100:1, oder bevorzugt 2:1 bis 100:1 oder speziell 10:1 bis 100:1, beträgt.

Geeignete Aldehyde, die in Kombination mit wenigstens einer CH-aciden Verbindung mit wenigstens 4 Kohlenstoffatomen oder mit wenigstens einem Hydroxyaromaten, der wenigstens einen aliphatischen Rest mit wenigstens 4 Kohlenstoffatomen als Substituenten trägt, sind solche, die mit den Aminogruppen des Polymers aus Schritt (A-i) oder (A-ii) eine Mannichreaktion eingehen können. Als Aldehyd wird vorzugsweise Formaldehyd eingesetzt. Als CH-acide Verbindungen eignen sich beispielsweise Butanal, Pentanal, Hexanal und dergleichen. Als Hydroxyaromaten eignen sich beispielsweise Butylphenol, wie 2- oder 4-Butylphenol, tert-Butylphenol, wie 4-tert-Butylphenol, und Polyalkenyl-substituierte Phenole, wie Polyisobutyl-(PIB)-substituierte Phenole, beispielsweise solche, die einen PIB-Rest mit einem zahlenmittleren Molekulargewicht Mₙ von 100 bis 5000, z. B. 200 bis 1000 aufweisen.

Das Aldehyd in Kombination mit wenigstens einer CH-aciden Verbindung mit wenigstens 4 Kohlenstoffatomen oder mit wenigstens einem Hydroxyaromaten, der wenigstens einen aliphatischen Rest mit wenigstens 4 Kohlenstoffatomen als Substituenten trägt, wird in Schritt (A-iii) unter solchen Bedingungen umgesetzt, dass diese mit den Aminogruppen des Polymers aus Schritt (A-i) oder (A-ii) in einer Mannichreaktion reagieren. Geeignete Reaktionsbedingungen entsprechen üblichen Bedingungen für die Mannichreaktion und sind beispielsweise in Jerry March, Advanced Organic Chemistry, 3. Auflage John Wiley & Sons, 1985, S. 800 ff und in der darin zitierten Literatur beschrieben.

Besonders bevorzugt ist die wenigstens eine in Schritt (A-iii) eingesetzte Verbindung ausgewählt unter aliphatischen C₁₀-C₂₂-Monocarbonsäuren oder Derivaten davon und α,β-Dicarbonsäuren mit wenigstens 10 Kohlenstoffatomen.

Wenn Schritt (A-ii) nicht durchgeführt wurde, kann sich Schritt (A-iii) für den Fall, dass die Hydrophilie der inneren Schale weiter erhöht werden soll, noch Schritt (A-iv) anschließen. Dieser optionale Quaternisierungsschritt kommt aber selbstverständlich nur dann in Betracht, wenn die in Schritt (A-iii) eingeführte lipophile Hülle keine quatemisierbaren Gruppen enthält, denn ansonsten würde diese Hülle ihre Lipophilie verlieren oder zumindest verringern. Insbesondere darf in Schritt (A-iii) kein Diamin, Polyamin oder Polyetheramin eingesetzt worden sein; es darf keine Mannichreaktion erfolgt sein und auch die übrigen eingesetzten Verbindungen (Mono-/Dicarbonsäuren, Isocyanate, Aldehyde/Ketone etc.) dürfen keine Aminogruppen enthalten. Bezüglich geeigneter Quaternisierungsmittel und -bedingungen wird auf die vorstehenden Ausführungen zu Schritt (A-ii) verwiesen.

### Erfindungsgemäßes Verfahren B

In diesem Verfahren wird in Schritt (B-i) ein lipophiles Polymer hergestellt.

Zu diesem Zweck ist das in Schritt (B-i) eingesetzte wenigstens eine von Melamin und dem Melaminderivat verschiedene Amin (B-i.2) vorzugsweise ausgewählt unter
- Diaminen der Formel VI

   NH₂-A⁵-NH₂ (VI)

   worin A⁵ für einen zweiwertigen aliphatischen, alicyclischen, aliphatischalicyclischen, aromatischen oder araliphatischen Rest steht, wobei der aliphatische und der alicyclische Rest wenigstens 4 Kohlenstoffatome besitzen; und
- Polyaminen mit zwei primären Aminogruppen und wenigstens einer sekundären oder tertiären Aminogruppe und/oder wenigstens einem Ether-Sauerstoffatom, in denen alle Aminogruppen und Ether-Sauerstoffatome linear zueinander angeordnet sind und in denen das Verhältnis der Anzahl der im Polyamin enthaltenen Kohlenstoffatome zur Anzahl der enthaltenen Stickstoffatome und gegebenenfalls enthaltenen Sauerstoffatome wenigstens 2,5:1, vorzugsweise wenigstens 2,7:1 beträgt.

In Verfahren B umfasst das erfindungsgemäße Verfahren Schritt (ii) selbstverständlich nicht.

Wie bereits ausgeführt, sind zweiwertige aliphatische Reste solche, die keine cycloaliphatischen, aromatischen oder heterocyclischen Bestandteile enthalten. Beispiele sind Alkylen-, Alkenylen- und Alkinylen-Reste.

In einer bevorzugten Ausführungsform ist der zweiwertige aliphatische Rest A⁵ lineares oder verzweigtes C₄-C₂₀-Alkylen, besonders bevorzugt lineares oder verzweigtes C₄-C₁₀-Alkylen, stärker bevorzugt lineares oder verzweigtes C₅-C₁₀-Alkylen und insbesondere lineares oder verzweigtes C₆-C₈-Alkylen.

Beispiele für geeignete Amine, in denen der Rest A⁵ diese Bedeutung (C₄-C₂₀-Alkylen) hat, sind 2,2-Dimethyl-1,3-propandiamin, 1,4-Butylendiamin, 1,5-Pentylendiamin, Hexamethylendiamin, Heptamethylendiamin, Octamethylendiamin, Nonamethylendiamin, Decamethylendiamin, Undecamethylendiamin, Dodecamethylendiamin, Tridecamethylendiamin, Tetradecamethylendiamin, Pentadecamethylendiamin, Hexadecamethylendiamin, Heptadecamethylendiamin, Octadecamethylendiamin, Nonadecamethylendiamin, Eicosamethylendiamin, 2-Butyl-2-ethyl-1,5-pentamethylendiamin, 2,2,4- oder 2,4,4-Trimethyl-1,6-hexamethylendiamin, 1,5-Diamino-2-methylpentan, 1,4-Diamino-4-methylpentan und dergleichen.

Besonders bevorzugt sind hierunter Amine, in denen A⁵ für lineares oder verzweigtes C₄-C₁₀-Alkylen steht, wie in 2,2-Dimethyl-1,3-propandiamin, 1,4-Butylendiamin, 1,5-Pentylendiamin, Hexamethylendiamin, Heptamethylendiamin, Octamethylendiamin, Nonamethylendiamin, Decamethylendiamin, 2,2,4- oder 2,4,4-Trimethyl-1,6-hexamethylendiamin, 1,5-Diamino-2-methylpentan, 1,4-Diamino-4-methylpentan und dergleichen.

Stärker bevorzugt sind hierunter Amine, in denen A⁵ für lineares oder verzweigtes C₅-C₁₀-Alkylen steht, wie in 2,2-Dimethyl-1,3-propandiamin, 1,5-Pentylendiamin, Hexamethylendiamin, Heptamethylendiamin, Octamethylendiamin, Nonamethylendiamin, Decamethylendiamin, 2,2,4- oder 2,4,4-Trimethyl-1,6-hexamethylendiamin, 1,5-Diamino-2-methylpentan, 1,4-Diamino-4-methylpentan und dergleichen.

Insbesondere sind hierunter Amine bevorzugt, in denen A⁵ für lineares oder verzweigtes C₆-C₈-Alkylen steht, wie in Hexamethylendiamin, Heptamethylendiamin, Octamethylendiamin, 1,5-Diamino-2-methylpentan, 1,4-Diamino-4-methylpentan und dergleichen. In einer speziellen Ausführungsform setzt man Amine ein, in denen A für lineares C₆-C₈-Alkylen steht. Beispiele für solche Amine sind Hexamethylendiamin, Heptamethylendiamin und Octamethylendiamin.

Wie bereits ausgeführt, können zweiwertige alicyclische Reste einen oder mehrere, z. B. einen oder zwei alicyclische Reste enthalten; sie enthalten jedoch keine aromatischen oder heterocyclischen Bestandteile. Die alicyclischen Reste können durch aliphatische Reste substituiert sein, wobei sich aber Bindungsstellen für die NH₂-Gruppen am alicyclischen Rest befinden.

In einer bevorzugten Ausführungsform sind die zweiwertigen alicyclischen Reste A⁵ ausgewählt unter C₅-C₈-Cycloalkylen, das 1, 2, 3 oder 4 C₁-C₄-Alkylreste tragen kann. Beispiele für geeignete Amine, in denen der Rest A⁵ diese Bedeutung hat, sind Cyclo-pentylendiamin, wie 1,2-Diaminocyclopentan oder 1,3-Diaminocyclopentan, Cyclohexy-lendiamin, wie 1,2-Diaminocyclohexan, 1,3-Diaminocyclohexan oder 1,4-Diaminocyclohexan, 1-Methyl-2,4-diaminocyclohexan, 1-Methyl-2,6-diaminocyclohexan, Cyclohepty-lendiamin, wie 1,2-Diaminocycloheptan, 1,3-Diaminocycloheptan oder 1,4-Diamino-cycloheptan, und Cyclooctylendiamin, wie 1,2-Diaminocyclooctan, 1,3-Diaminocyclooctan, 1,4-Diaminocyclooctan oder 1,5-Diaminocyclooctan. Die Aminogruppen (NH₂-Gruppen) können cis- oder trans-ständig zueinander stehen.

Wie bereits ausgeführt, enthalten zweiwertige aliphatisch-alicyclische Reste sowohl wenigstens einen zweiwertigen aliphatischen als auch wenigstens einen zweiwertigen alicyclischen Rest, wobei sich die zwei Bindungsstellen für die NH₂-Gruppen entweder beide an dem/den alicyclischen Rest(en) oder beide an dem/den aliphatischen Rest(en) oder eine an einem aliphatischen und die andere an einem alicyclische Rest befinden kann.

In einer bevorzugten Ausführungsform sind die zweiwertigen aliphatisch-alicyclischen Reste A⁵ ausgewählt unter C₅-C₈-Cycloalkylen-C₁-C₄-alkylen, C₅-C₈-Cycloalkylen-C₁-C₄-alkylen-C₅-C₈-cycloalkylen und C₁-C₄-Alkylen-C₅-C₈-cycloalkylen-C₁-C₄-alkylen, wobei die Cycloalkylenreste 1, 2, 3 oder 4 C₁-C₄-Alkylreste tragen können. Beispiele für geeignete Amine, in denen der Rest A⁵ diese Bedeutung hat, sind Diaminodicyclohexylmethan, Isophorondiamin, Bis(aminomethyl)cyclohexan, wie 1,1-Bis(aminomethyl)cyclohexan, 1,2-Bis(aminomethyl)cyclohexan, 1,3-Bis(aminomethyl)-cyclohexan oder 1,4-Bis(aminomethyl)cyclohexan, 2-Aminopropylcyclohexylamin, 3(4)-Aminomethyl-1-methylcyclohexylamin und dergleichen. Die am alicyclischen Rest gebunden Gruppen können jede beliebige relative Position (cis/trans) zueinander einnehmen.

Wie bereits ausgeführt, können zweiwertige aromatische Reste einen oder mehrere, z. B. einen oder zwei aromatische Reste enthalten; sie enthalten jedoch keine alicyclischen oder heterocyclischen Bestandteile. Die aromatischen Reste können durch aliphatische Reste substituiert sein, wobei sich aber beide Bindungsstellen für die NH₂-Gruppen an dem/den aromatischen Rest(en) befinden.

In einer bevorzugten Ausführungsform sind die zweiwertigen aromatischen Reste A⁵ ausgewählt unter Phenylen, Biphenylen, Naphthylen, Phenylen-sulfon-phenylen und Phenylen-carbonyl-phenylen, wobei die Phenylen- und Naphthylenreste 1, 2, 3 oder 4 C₁-C₄-Alkylreste tragen können. Beispiele für geeignete Amine, in denen der Rest A⁵ diese Bedeutung hat, sind Phenylendiamin, wie o-, m- und p-Phenylendiamin, Toluy-lendiamin, wie o-, m- und p-Toluylendiamin, Xylylendiamin, Naphthylendiamin, wie 1,2-, 1,3-, 1,4-, 1,5-, 1,8-, 2,3-, 2,6- und 2,7-Naphthylen, Diaminodiphenylsulfon, wie 2,2'-, 3,3'- und 4,4'-Diaminodiphenylsulfon, und Diaminobenzophenon, wie 2,2'-, 3,3'-und 4,4'-Diaminobenzophenon.

Wie bereits ausgeführt, enthalten zweiwertige araliphatische Reste sowohl wenigstens einen zweiwertigen aliphatischen als auch wenigstens einen zweiwertigen aromatischen Rest, wobei sich die zwei Bindungsstellen für die NH₂-Gruppen entweder beide an dem/den aromatischen Rest(en) oder beide an dem/den aliphatischen Rest(en) oder eine an einem aliphatischen und die andere an einem aromatischen Rest befinden kann.

In einer bevorzugten Ausführungsform sind die zweiwertigen araliphatischen Reste A⁵ ausgewählt unter Phenylen-C₁-C₄-alkylen und Phenylen-C₁-C₄-alkylen-phenylen, wobei die Phenylenreste 1, 2, 3 oder 4 C₁-C₄-Alkylreste tragen können. Beispiele für geeignete Amine, in denen der Rest A⁵ diese Bedeutung hat, sind Diaminodiphenylmethan, wie 2,2'-, 3,3'- und 4,4'-Diaminodiphenylmethan, und dergleichen.

Bevorzugt steht in Aminen der Formel VI A⁵ für einen zweiwertigen aliphatischen Rest, wobei der aliphatische Rest wenigstens 4 Kohlenstoffatome, vorzugsweise wenigstens 5 und insbesondere wenigstens 6 Kohlenstoffatome aufweist. Bevorzugt handelt es bei dem aliphatischen Rest um lineares oder verzweigtes C₄-C₂₀-Alkylen, besonders bevorzugt lineares oder verzweigtes C₄-C₁₀-Alkylen, stärker bevorzugt lineares oder verzweigtes C₅-C₁₀-Alkylen und insbesondere lineares oder verzweigtes C₆-C₈-Alkylen.

In den Polyaminen mit zwei primären Aminogruppen und wenigstens einer weiteren sekundären oder tertiären Aminogruppe und/oder wenigstens einem Ether-Sauerstoffatom, in denen das Verhältnis der Anzahl der im Polyamin enthaltenen Kohlenstoffatome zur Anzahl der enthaltenen Stickstoffatome und gegebenenfalls enthaltenen Sauerstoffatome wenigstens 2,5:1 beträgt, sind alle Aminogruppen und alle gegebenenfalls vorhandenen Ethergruppen linear zueinander angeordnet: Linear angeordnet bedeutet in diesem Zusammenhang, dass sich alle Aminogruppen und alle Ether-Sauerstoffatome in der längsten Kette des Moleküls befinden. Beispiele hierfür sind Polypropylenpolyamine, Polybutylenpolyamine, Amin-terminierte Polypropylenglykole und Amin-terminierte Polybutylenglykole.

In einer bevorzugten Ausführungsform des Verfahrens B besitzt das in Schritt (B-i) eingesetzte Amin (B-i.2) zwei primäre Aminogruppen.

Besonders bevorzugt ist das in Schritt (B-i) eingesetzte Amin (B-i.2) ausgewählt unter
- Aminen der Formel (VI.1)

   NH₂-A^{5a}-NH₂ (VI.1)

   worin
   A^{5a} für eine lineare oder verzweigte Alkylengruppe mit wenigstens 5, vorzugsweise wenigstens 6 Kohlenstoffatomen steht; und
- Polyetheraminen der Formel VII

   NH₂-[A⁶-O]_{q}-A⁶-NH₂ (VII)

   worin
   jedes A⁶ unabhängig für lineares oder verzweigtes C₃-C₄-Alkylen steht; und
   q für eine Zahl von 1 bis 5000, vorzugsweise 3 bis 5000, besonders bevorzugt 5 bis 5000 und insbesondere 10 bis 5000 steht.

Bevorzugt steht A^{5a} für lineares oder verzweigtes C₅-C₂₀-Alkylen, besonders bevorzugt lineares oder verzweigtes C₅-C₁₀-Alkylen, stärker bevorzugt lineares oder verzweigtes C₆-C₁₀-Alkylen und insbesondere lineares oder verzweigtes C₆-C₈-Alkylen.

Beispiele für geeignete Amine, in denen der Rest A^{5a} diese Bedeutung (C₅-C₂₀-Alkylen) hat, sind 2,2-Dimethyl-1,3-propandiamin, 1,5-Pentylendiamin, Hexamethylendiamin, Heptamethylendiamin, Octamethylendiamin, Nonamethylendiamin, Decamethylendiamin, Undecamethylendiamin, Dodecamethylendiamin, Tridecamethylendiamin, Tetradecamethylendiamin, Pentadecamethylendiamin, Hexadecamethylendiamin, Heptadecamethylendiamin, Octadecamethylendiamin, Nonadecamethylendiamin, Eicosamethylendiamin, 2-Butyl-2-ethyl-1,5-pentamethylendiamin, 2,2,4- oder 2,4,4-Trimethyl-1,6-hexamethylendiamin, 1,5-Diamino-2-methylpentan, 1,4-Diamino-4-methylpentan und dergleichen.

Besonders bevorzugt sind hierunter Amine, in denen A^{5a} für lineares oder verzweigtes C₅-C₁₀-Alkylen steht, wie in 2,2-Dimethyl-1,3-propandiamin, 1,5-Pentylendiamin, Hexamethylendiamin, Heptamethylendiamin, Octamethylendiamin, Nonamethylendiamin, Decamethylendiamin, 2,2,4- oder 2,4,4-Trimethyl-1,6-hexamethylendiamin, 1,5-Diamino-2-methylpentan, 1,4-Diamino-4-methylpentan und dergleichen.

Stärker bevorzugt sind hierunter Amine, in denen A^{5a} für lineares oder verzweigtes C₆-C₁₀-Alkylen steht, wie in Hexamethylendiamin, Heptamethylendiamin, Octamethylendiamin, Nonamethylendiamin, Decamethylendiamin, 2,2,4- oder 2,4,4-Trimethyl-1,6-hexamethylendiamin, 1,5-Diamino-2-methylpentan, 1,4-Diamino-4-methylpentan und dergleichen.

Insbesondere sind hierunter Amine bevorzugt, in denen A^{5a} für lineares oder verzweigtes C₆-C₈-Alkylen steht, wie in Hexamethylendiamin, Heptamethylendiamin, Octamethylendiamin, 1,5-Diamino-2-methylpentan, 1,4-Diamino-4-methylpentan und dergleichen. In einer speziellen Ausführungsform setzt man Amine ein, in denen A für lineares C₆-C₈-Alkylen steht. Beispiele für solche Amine sind Hexamethylendiamin, Heptamethylendiamin und Octamethylendiamin.

Polyetheramine der Formel VII sind beispielsweise Amin-terminierte Polypropylenglykole und Amin-terminierte Polybutylenglykole mit einem Molekulargewicht von 240 bis 360000.

In einer bevorzugten Ausführungsform des Verfahrens B der Erfindung werden in Schritt (B-i) nur Komponenten (B-i.1) und (B-i.2) kondensiert; d. h. Komponenten (B-i.3), (B-i.4) und (B-i.5) kommen nicht zum Einsatz.

In Schritt (B-i) wird das Molverhältnis von Amin (B-i.2) und Komponente (B-i.1) vorzugsweise so gewählt, dass das Verhältnis der Anzahl der im Amin (B-i.2) enthaltenen primären Aminogruppen zur Anzahl der in Komponente (B-i.1) enthaltenen primären Aminogruppen wenigstens 1:1 beträgt. Besonders bevorzugt beträgt das Verhältnis der Anzahl der im Amin (B-i.2) enthaltenen primären Aminogruppen zur Anzahl der in Komponente (B-i.1) enthaltenen primären Aminogruppen 1:1 bis 10:1, z. B. 1,1:1 bis 10:1, stärker bevorzugt 1:1 bis 5:1, z. B. 1,1:1 bis 5:1, bevorzugt 1,2:1 bis 5:1; noch stärker bevorzugt 1:1 bis 3:1, z. B. 1,1:1 bis 3:1 oder bevorzugt 1,2:1 bis 3:1 oder besonders bevorzugt 1,3:1 bis 3:1; speziell 1:1 bis 2:1, z. B. 1,1:1 bis 2:1 oder bevorzugt 1,2:1 bis 2:1 oder besonders bevorzugt 1,3:1 bis 2:1 oder insbesondere 1,4:1 bis 2:1. Wenn Komponente (B-i.3), (B-i.4) und/oder (B-i.5) eingesetzt wird, so beträgt das Molverhältnis aller Komponenten (B-i.3), (B-i.4) und (B-i.5) zur Komponente (B-i.1) vorzugsweise 50:1 bis 1:50, besonders bevorzugt 10:1 bis 1:10, stärker bevorzugt 8:1 bis 1:8, noch stärker bevorzugt 4:1 bis 1:8, insbesondere 2:1 bis 1:5 und speziell 1:1 bis 1:5.

Bezüglich der Verfahrensmaßnahmen für die Umsetzung in Schritt (B-i) wird auf das zu Verfahren A Gesagte Bezug genommen.

In Verfahren B wird die in Schritt (B-iii) eingesetzte wenigstens eine Verbindung, die Aminogruppen des in Schritt (B-i) oder (B-ii) erhaltenen Polymers eine Kondensations- oder Additionsreaktion eingehen kann, vorzugsweise so ausgewählt, dass durch die Umsetzung in Schritt (B-iii) ein hydrophiler Polymerabschnitt, vorzugsweise eine hydrophile Hülle, entsteht.

Dementsprechend besitzt die wenigstens eine in Schritt (B-iii) eingesetzte Verbindung vorzugsweise überwiegend hydrophile Eigenschaften.

Bevorzugte Verbindungen, die in Schritt (B-iii) eingesetzt werden, sind ausgewählt unter
- Polyaminen mit zwei primären Aminogruppen und wenigstens einer sekundären oder tertiären Aminogruppe und/oder wenigstens einem Ether-Sauerstoffatom, in denen alle Aminogruppen und Ether-Sauerstoffatome linear zueinander angeordnet sind und in denen das Verhältnis der Anzahl der im Polyamin enthaltenen Kohlenstoffatome zur Anzahl der enthaltenen Stickstoffatome und gegebenenfalls enthaltenen Sauerstoffatome kleiner oder gleich 2,5:1, vorzugsweise kleiner oder gleich 2,3:1 und insbesondere kleiner oder gleich 2:1 ist; und
- Ethylenoxid;
wobei für den Fall, dass die wenigstens eine in Schritt (B-iii) eingesetzte Verbindung Ethylenoxid ist, der Umsetzung mit Ethylenoxid eine Umsetzung mit wenigstens einen Alkylenoxid mit wenigstens 3 Kohlenstoffatomen, das ausgewählt ist unter Propylenoxid, Butylenoxid, Pentylenoxid und Styroloxid, vorausgehen kann.

Im letzteren Fall umfasst die lipophile Schale auch den im vorausgehenden Schritt gebildeten Alkylenoxid-Polymerblock.

Geeignete und bevorzugte Polyamine mit zwei primären Aminogruppen und wenigstens einer sekundären oder tertiären Aminogruppe und/oder wenigstens einem EtherSauerstoffatom, in denen alle Aminogruppen und Ether-Sauerstoffatome linear zueinander angeordnet sind und in denen das Verhältnis der Anzahl der im Polyamin enthaltenen Kohlenstoffatome zur Anzahl der enthaltenen Stickstoffatome und gegebenenfalls enthaltenen Sauerstoffatome kleiner oder gleich 2,5:1 ist, entsprechen denjenigen, die bei Verfahren A in Zusammenhang mit Schritt (A-i) als geeignet und bevorzugt beschrieben sind.

Die Polyamine werden in Schritt (B-iii) unter solchen Bedingungen umgesetzt, dass sie unter Verdrängung von Ammoniak oder eines Amins in einer Sₙ-Reaktion mit den Aminogruppen des Polymers aus Schritt (B-i) oder (B-ii) reagieren.

Ethylenoxid wird in Schritt (B-iii) unter solchen Bedingungen umgesetzt, dass es sich an Aminogruppen des Polymers aus Schritt (B-i) oder (B-ii) addiert und Polyetherolgruppen bildet.

Wenn der Umsetzung mit Ethylenoxid noch eine Umsetzung mit dem wenigstens einen Alkylenoxid mit wenigstens 3 Kohlenstoffatomen vorausgeht, so dass der lipophile Kern durch einen Polymerblock aus dem Alkylenoxid mit wenigstens 3 Kohlenstoffatomen erweitert wird, erfolgt die Umsetzung mit dem Alkylenoxid analog zur oben beschriebenen Vorgehensweise.

Geeignete Alkylenoxide mit wenigstens 3 Kohlenstoffatomen sind erfindungsgemäß Propylenoxid, Butylenoxid, Pentylenoxid und Styroloxid. Bevorzugt sind hierunter Propylenoxid, Butylenoxid, Pentylenoxid. Stärker bevorzugt sind Propylenoxid und Butylenoxid. Insbesondere verwendet man Propylenoxid.

Besonders bevorzugt wird in Schritt (B-iii) Ethylenoxid eingesetzt. Speziell geht der Umsetzung mit Ethylenoxid eine Umsetzung mit wenigstens einem der oben genannten Alkylenoxide voraus.

Die in Schritt (B-iii) gebildeten hydrophilen Polymerabschnitte können noch stärker hydrophilisiert werden, wenn man nach Umsetzung gemäß Schritt (B-iii) wenigstens einen Teil der im erhaltenen Polymer enthaltenen sekundären und/oder primären Aminogruppen quaternisiert und/oder mit Ethylenoxid umsetzt (Letzteres gilt natürlich nur, wenn man in Schritt (B-iii) nicht bereits schon Ethylenoxid eingesetzt hat). Dies ist jedoch nur dann sinnvoll, wenn man in Schritt (B-i) als Amin (B-i.2) ein Diamin (d. h. kein Polyamin und auch keinen Amin-terminierten Polyether) eingesetzt hat.

Bezüglich geeigneter und bevorzugter Quaternisierungsmittel und geeigneter Verfahrensmaßnahmen wird auf die bei Verfahren A zu Schritt (A-ii) gemachten Ausführungen verwiesen.

Zur weiteren Derivatisierung, insbesondere zur weiteren Erhöhung der Hydrophilie kann man alternativ oder zusätzlich nach Umsetzung gemäß Schritt (B-iii) wenigstens einen Teil der im erhaltenen Polymer enthaltenen sekundären und/oder primären Aminogruppen in eine Carbobetain-, Sulfobetain- und/oder Phosphobetaingruppe überführen. Auch diese Maßnahme ist nur dann sinnvoll, wenn man in Schritt (B-i) als Amin (B-i.2) ein Diamin (d. h. kein Polyamin und auch keinen Amin-terminierten Polyether) eingesetzt hat.

Hat man in Schritt (B-iii) Ethylenoxid eingesetzt, so kann man zur weiteren Hydrophilisierung das nach Umsetzung gemäß Schritt (B-iii) erhaltene Polymer mit einer Sulfatgruppe oder Phosphatgruppe terminieren.

Die Sulfatierung des in Schritt (B-iii) erhaltenen Polymers (genauer gesagt der terminalen Alkoholgruppen der Polyethylenglykolabschnitte) kann durch dessen Umsetzung mit einem Sulfatierungsmittel erfolgen.

Geeignete Sulfatierungsmittel sind beispielsweise Schwefelsäure (vorzugsweise 75 bis 100%ige, besonders bevorzugt 85 bis 98%ige Schwefelsäure), Oleum, SO₃, Chlorsulfonsäure, Sulfurylchlorid, Amidosulfonsäure und dergleichen. Wird Sulfurylchlorid eingesetzt, so muss das zweite Chloratom nach der Sulfatierungsreaktion hydrolytisch entfernt werden.

Das Sulfatierungsmittel wird meist äquimolar oder in leichtem Überschuss (z. B. 1 bis 1,5 mol pro Mol OH-Gruppen im Polymer) eingesetzt; je nach gewünschtem Hydrophilisierungsgrad kann es aber auch in Unterschuss eingesetzt werden.

Die Suffatierung kann in Gegenwart eines Lösungsmittels oder eines Schleppmittels erfolgen, wie Toluol.

Zur Überführung des durch die Sulfatierung zunächst erhaltenen Schwefelsäurehalbesters in Sulfatgruppen wird das sulfatierte Polymer mit einer geeigneten Base neutralisiert. Geeignete Basen sind beispielsweise anorganische Basen, z. B. Alkalimetallhydroxide, wie Lithium-, Natrium- oder Kaliumhydroxid, Erdalkalimetallhydroxide, wie Calcium- oder Magnesiumhydroxid, Alkalimetallcarbonate, wie Lithium-, Natrium- oder Kaliumcarbonat, Erdalkalimetallcarbonate, wie Calcium- oder Magnesiumcarbonat, Alkalimetallhydrogencarbonate, wie Lithium-, Natrium- oder Kaliumhydrogencarbonat, oder Erdalkalimetallhydrogencarbonate, wie Calcium- oder Magnesiumhydrogencarbonat, aber auch einige organische Basen, z. B. Alkalimetallalkoholate, wie Natriummethanolat, Kaliummethanolat, Natriumethanolat, Kaliumethanolat, Natriumbutylat und Kalium-tert-Butylat.

Die Einführung einer Sulfatgruppe kann aber auch über eine Transsulfatierung erfolgen. Hierzu wird das in Schritt (B-iii) erhaltene Polymer (genauer gesagt die Aminofunktionen) mit Dimethyl- oder Diethylsulfat quaterniert. Anschließend wird das Gegenanion (Anion des Schwefelsäurehalbesters, Metosulfat) unter Abspaltung von Methanol oder Ethanol mit den terminalen Alkoholgruppen der Polyethylenglykolabschnitte umgeestert. Falls erforderlich, kann die Überführung des Schwefelsäurehalbesters in Sulfatgruppen wie zuvor beschrieben erfolgen.

Die Phosphatierung des in Schritt (B-iii) erhaltenen Polymers (genauer gesagt der terminalen Alkoholgruppen der Polyethylenglykolabschnitte) kann durch dessen Umsetzung mit einem Phosphatierungsmittel erfolgen.

Geeignete Phosphatierungsmittel sind beispielsweise Phosphorsäure, Polyphosphorsäure, Phosphorpentoxid, POCl₃ und dergleichen. Wird POCl₃ eingesetzt, so muss das zweite Chloratom nach der Phosphatierungsreaktion hydrolytisch entfernt werden.

Das Phosphatierungsmittel wird meist äquimolar oder in leichtem Überschuss (z. B. 1 bis 1,5 mol pro Mol OH-Gruppen im Polymer) eingesetzt; je nach gewünschtem Hydrophilisierungsgrad kann es aber auch in Unterschuss eingesetzt werden.

Zur Überführung des durch die Phosphatierung zunächst erhaltenen Phosphorsäurehalbesters in Phosphatgruppen wird das phosphatierte Polymer mit einer geeigneten Base neutralisiert. Geeignete Basen sind beispielsweise anorganische Basen, z. B. Alkalimetallhydroxide, wie Lithium-, Natrium- oder Kaliumhydroxid, Erdalkalimetallhydroxide, wie Calcium- oder Magnesiumhydroxid, Alkalimetallcarbonate, wie Lithium-, Natrium- oder Kaliumcarbonat, Erdalkalimetallcarbonate, wie Calcium- oder Magnesiumcarbonat, Alkalimetallhydrogencarbonate, wie Lithium-, Natrium- oder Kaliumhydrogencarbonat, oder Erdalkalimetallhydrogencarbonate, wie Calcium- oder Magnesiumhydrogencarbonat, aber auch einige organische Basen, z. B. Alkalimetallalkoholate, wie Natriummethanolat, Kaliummethanolat, Natriumethanolat, Kaliumethanolat, Natriumbutylat und Kalium-tert-Butylat.

Ein weiterer Gegenstand der Erfindung sind funktionalisierte hochverzweigte Melamin-Polyamin-Polymere, die durch das erfindungsgemäße Verfahren erhältlich sind.

Bezüglich der Eigenschaften der erfindungsgemäßen Polymere wird auf die vorstehenden Ausführungen verwiesen.

Ein weiterer Gegenstand der Erfindung ist die Verwendung der erfindungsgemäßen Polymere als oberflächenaktive Mittel bzw. zur Oberflächenmodifikation von organischem oder anorganischem Material.

Oberflächenaktive Mittel (auch grenzflächenaktive Mittel genannt) sind Stoffe, die die Herabsetzung der Oberflächenspannung eines Materials, z. B. eines Lösungsmittels, bewirken. Diese Verbindungen enthalten in der Regel eine Kombination von polaren (hydrophilen) und nichtpolaren (hydrophoben) Anteilen. Sie ordnen sich an der Phasengrenze zwischen zwei Medien unterschiedlicher Polarität [d. h. an der Grenzfläche, die zwei nicht miteinander mischbare Phasen voneinander trennt (Gas-flüssig, Gas-fest, flüssig-fest, flüssig-flüssig, fest-fest)], beispielsweise zwischen einer Wasserphase und einer organischen Phase, an, oder, wenn dazu kein Platz mehr vorhanden ist, lagern sie sich zusammen und bilden Micellen. Als oberflächenaktive Mittel werden aber auch solche Stoffe bezeichnet, die die Oberfläche eines damit behandelten Materials verändern, beispielsweise hydrophilisieren oder hydrophobisieren.

Unter Oberflächenmodifikation soll im Rahmen der vorliegenden Erfindung die Veränderung der Grenzflächeneigenschaften der mit den erfindungsgemäßen Polymeren versetzten Medien verstanden werden. Dabei versteht man unter Grenzflächen (Phasengrenzflächen) Flächen, die zwei nicht mischbare Phasen voneinander trennen (Gas-flüssig, Gas-fest, flüssig-fest, flüssig-flüssig, fest-fest). Dazu zählt die Kleb-, Haftoder Dichtewirkung, die Flexibilität, Kratz- oder Bruchfestigkeit, die Benetzbarkeit und die Benetzungsfähigkeit, Gleiteigenschaften, Reibekraft, Korrodierbarkeit, Anfärbbarkeit, Bedruckbarkeit und Gaspermeabilität der Anwendungsmedien. Entsprechend werden die erfindungsgemäßen Polymere vorzugsweise als Hydrophiliermittel, Lipophiliermittel (Hydrophobiermittel), Korrosionsinhibitor, Reibungsminderer, Emulgator, Dispergator, Haftvermittler, Netzmittel, Netzinhibitor, Fluchtmittel oder Druckfarbenzusatz verwendet.

Die erfindungsgemäßen Polymeren eignen sich beispielsweise zur Veränderung der Affinität einer Substratoberfläche gegenüber Wasser und wasserhaltigen Flüssigkeiten im Vergleich zu einer unmodifizierten Oberfläche. Die dazu erfindungsgemäß eingesetzten Polymere umfassen einerseits Molekülteile, die die Affinität einer damit behandelten Oberfläche gegenüber Wasser verbessern (hydrophilieren) und andererseits solche, die die Affinität einer damit behandelten Oberfläche gegenüber Wasser verringern (hydrophobieren). Ein geeignetes Maß zur Beurteilung der Hydrophilie/Hydrophobie der Oberfläche eines Substrats ist die Messung des Randwinkels von Wasser an der jeweiligen Oberfläche (siehe z. B. Römpp, Chemielexikon, 9. Aufl., S. 372 "Benetzung", Georg-Thieme-Verlag (1995)). Erfindungsgemäß wird unter einer "hydrophoben Oberfläche" eine Oberfläche verstanden, deren Kontaktwinkel von Wasser > 90 ist. Unter einer "hydrophilen Oberfläche" wird eine Oberfläche verstanden, deren Kontaktwinkel von Wasser ≤ 90° ist. Hydrophilierende Polymere bewirken bei mit ihnen behandelten Oberflächen eine Abnahme des Randwinkels gegenüber der unmodifizierten Oberfläche. Hydrophobierend wirkende Polymere bewirken bei mit ihnen behandelten Oberflächen eine Zunahme des Randwinkels gegen- über der unmodifizierten Oberfläche.

Für die Obertlächenmodifikation mit den erfindungsgemäßen Polymeren geeignete organische Materialien sind beispielsweise Kunststoffe, insbesondere Polyolefine, wie Polyethylen, Polypropylen, Polyisobuten und Polyisopren, und Polyaromaten, wie Polystyrol, außerdem Copolymere und Gemische davon, wobei die Kunststoffe vorzugsweise in Form von Folien oder Formkörpern vorliegen, Cellulose, beispielsweise in Form von Papier oder Karton, Textilien aus natürlichen oder synthetischen Fasern, Leder, Holz, Mineralölprodukte, wie Brennstoffe, Kraftstoffe oder Schmierstoffe, und Additive für derartige Mineralölprodukte, wie Schmierfähigkeitsverbesserer und Kaltfließverbesserer. Geeignete anorganische Materialien sind beispielsweise anorganische Pigmente, Metall, Glas und basische anorganische Materialien, wie Zement, Gips oder Calciumcarbonat

Bevorzugt werden die erfindungsgemäßen Polymere jedoch als Tensid, Detergens, Netzmittel, Netzinhibitor, Emulgator, Demulgator, Dispergiermittel, Schutzkolloid, Haftvermittler, Schaumbildner, Rheologiemodifiziermittel, Verdicker, Schmelziviskositätserniedriger für Polymere, Korrosionsinhibitor, Reibungsminderer, Verflüssiger für Klebstoffe, Haftstoffe oder Harze, Dispersionsverflüssiger, Bindemittel für Klebstoffe, Haftstoffe und Harze, Bindemittel für Textilien, Vernetzer, Solubilisator, Verkapselungsmittel, Nachgerbungsmittel, Hydrophobierungsmittel oder Hydrophilisierungsmittel verwendet.

Die Erfindung wird nun durch die folgenden nicht-limitierenden Beispiele näher erläutert.

### Beispiele

Die Aminzahl wurde gemäß DIN 53176 bestimmt. Die Viskosität wurde unter Verwendung eines Rheometers (Physica MCR51 von Anton Paar GmbH, Graz, Österreich) bestimmt. Zur Bestimmung der Löslichkeit wurden das Produkt und das Lösungsmittel in einem Gewichtsverhältnis von 10:90 gemischt und mit einer Heizpistole erhitzt. Das Produkt gilt als löslich, wenn es beim Abkühlen nicht präzipitiert.

Die Molekulargewichte (Mₙ, M_{w}) beziehen sich auf Werte, die sich mit Gelpermeationschromatographie (GPC) in einem geeigneten Lösungsmittel, wie Hexafluorisopropanol, Tetrahydrofuran, N,N-Dimethylacetamid oder Wasser, mit PMMA-Kalibrierung ergeben. Es ist zu beachten, dass dieses Messverfahren bei den vorliegenden Polymeren nur zu relativen Werten führt; d.h. es können nur strukturell verwandte Systeme mit ähnlicher Polarität miteinander verglichen werden.

### 1. Herstellung von hochverzweigten Melamin-Polyamin-Polymeren 1.1 Herstellung von hochverzweigten Melamin-Tetraethylenpentamin-Polymeren

2,8 mol Tetraethylenpentamin wurden vorgelegt, mit 0,65 mol Ammoniumchlorid als Katalysator versetzt, und ein leichter Stickstoffstrom wurde angelegt. 1 mol Melamin wurde in 4 Portionen von 0,25 mol zugegeben. Dabei wurde nach jeder Melaminzugabe das Reaktionsgemisch auf 200 °C erhitzt und gerührt, bis sich das Melamin aufgelöst hatte. Nach dem Auflösen wurde das Gemisch erst auf 100 °C abgekühlt, bevor die nächste Portion zugegeben wurde. Nach der Zugabe der letzten Portion wurde das Reaktionsgemisch so lange bei 200 °C gerührt, bis die Viskosität nicht weiter anstieg (ca. 20 000 mPas bei 75 °C). Nach dem Abkühlen wurde der Katalysator mit 50%iger Natronlauge neutralisiert und dabei gebildete Natriumhydroxid bei 90 °C über eine Drucknutsche abfiltriert. Man erhielt ein gelbes Polymer mit folgenden Eigenschaften:
Viskosität (75 °C) η = 1500 mPas
Löslichkeit: HFIP (= Hexafluorisopropanol), Wasser
Aminzahl: 757 mg KOH/g

### 1.2 Herstellung von hochverzweigten Melamin-Pentaethylenhexamin-Polymeren

2,8 mol Pentaethylenhexamin wurden vorgelegt, mit 0,65 mol Ammoniumchlorid als Katalysator versetzt, und ein leichter Stickstoffstrom wurde angelegt. 1 mol Melamin wurde in 4 Portionen von 0,25 mol zugegeben. Dabei wurde nach jeder Melaminzugabe das Reaktionsgemisch auf 200 °C erhitzt und gerührt, bis sich das Melamin aufgelöst hatte. Nach dem Auflösen wurde das Gemisch erst auf 100 °C abgekühlt, bevor die nächste Portion zugegeben wurde. Nach der Zugabe der letzten Portion wurde das Reaktionsgemisch so lange bei 200 °C gerührt, bis die Viskosität nicht weiter anstieg (ca. 20 000 mPas bei 75 °C). Nach dem Abkühlen wurde der Katalysator mit 50%iger Natronlauge neutralisiert und dabei gebildete Natriumhydroxid bei 90 °C über eine Drucknutsche abfiltriert. Man erhielt ein Polymer mit folgenden Eigenschaften:
Viskosität (75 °C) η = 3250 mPas
Mₙ = 6300
M_{w} = 24400
Löslichkeit: HFIP (= Hexafluorisopropanol), Wasser
Aminzahl: 665 mg KOH/g

### 2. Funktionalisierung von hochverzweigten Melamin-Polyamin-Polymeren

### 2.1 Funktionalisierung des Polymers aus Beispiel 1.1 durch Umsetzung mit Ölsäure

Das in Beispiel 1.1 erhaltene Polymer wurde in einem Kolben vorgelegt und mit 0,2 mol Ölsäure versetzt. Das Gemisch wurde auf 120 °C erhitzt und das entstehende Reaktionswasser destillativ entfernt. Die Temperatur wurde dabei schrittweise auf 180 °C erhöht. Nachdem kein weiteres Wasser mehr gebildet wurde, wurde noch eine Stunde bei 180 °C gerührt. Man erhielt ein dunkelgelbes, honigartig fließendes Polymer mit folgenden Eigenschaften:
Viskosität (75 °C) = 1500 mPas
Löslichkeit: HFIP (= Hexafluorisopropanol), Wasser
Das Produkt bildet in Wasser bereits bei geringen Konzentrationen von 0,5 % einen stabilen Schaum.
CMC-(critical micelle concentration)-Wert (25 °C): 0,12 g/l

### 2.2 Funktionalisierung des Polymers aus Beispiel 1.2 durch Umsetzung mit Ölsäure

Das in Beispiel 1.2 erhaltene Polymer wurde in einem Kolben vorgelegt und mit 0,2 mol Ölsäure versetzt. Das Gemisch wurde auf 120 °C erhitzt und das entstehende Reaktionswasser destillativ entfernt. Die Temperatur wurde dabei schrittweise auf 180 °C erhöht. Nachdem kein weiteres Wasser mehr gebildet wurde, wurde noch eine Stunde bei 180 °C gerührt. Man erhielt ein dunkelgelbes, honigartig fließendes Polymer mit folgenden Eigenschaften:
Viskosität (75 °C) η = 1000 mPas
Löslichkeit: HFIP (= Hexafluorisopropanol), Wasser
Das Produkt bildet in Wasser bereits bei geringen Konzentrationen von 0,05 % einen stabilen Schaum.
CMC-(critical micelle concentration)-Wert (25 °C): 0,11 g/l

### 2.3 Funktionalisierung des Polymers aus Beispiel 1.2 durch Umsetzung mit Laurinsäure

Das in Beispiel 1.2 erhaltene Polymer wurde in einem Kolben vorgelegt und mit 0,2 mol Laurinsäure versetzt. Das Gemisch wurde auf 120 °C erhitzt und das entstehende Reaktionswasser destillativ entfernt. Die Temperatur wurde dabei schrittweise auf 180 °C erhöht. Nachdem kein weiteres Wasser mehr gebildet wurde, wurde noch eine Stunde bei 180 °C gerührt. Man erhielt ein dunkelgelbes, honigartig fließendes Polymer mit folgenden Eigenschaften:
Viskosität (75 °C) η = 2500 mPas
Löslichkeit: HFIP (= Hexafluorisopropanol), Wasser
Das Produkt bildet in Wasser bereits bei geringen Konzentrationen von 0,05 % einen stabilen Schaum.
CMC-(critical micelle concentration)-Wert (25 °C): 0,7 g/l

### 2.4 Funktionalisierung des Polymers aus Beispiel 1.2 durch Umsetzung mit Polyisobutenyl-substituiertem Bernsteinsäureanhydrid (PIBSA; Mₙ des Polyisobutenylrestes: 550)

Das in Beispiel 1.2 erhaltene Polymer wurde in einem Kolben vorgelegt und mit 0,2 mol Polyisobutenyl-substituiertem Bernsteinsäureanhydrid (PIBSA; Mₙ des Polyisobutenylrestes: 550) versetzt. Das Gemisch wurde auf 120 °C erhitzt und das entstehende Reaktionswasser destillativ entfernt. Die Temperatur wurde dabei schrittweise auf 180 °C erhöht. Nachdem kein weiteres Wasser mehr gebildet wurde, wurde noch eine Stunde bei 180 °C gerührt. Man erhielt ein bräunliches, zähes Polymer mit folgenden Eigenschaften:
Viskosität (75 °C) η = 10800 mPas
Löslichkeit: HFIP (= Hexafluorisopropanol), Wasser
Das Produkt bildet in Wasser bereits bei geringen Konzentrationen von 0,05 % einen stabilen Schaum.
Mₙ = 3700
M_{w} = 9350
PD = 2,5

### 2.5 Funktionalisierung des Polymers aus Beispiel 1.1 durch Umsetzung mit Ethylenoxid und anschließend mit Propylenoxid

100 g eines analog zu Beispiel 1.1 erhaltenes Polymer aus Melamin und Tetraethylenpentamin (90,9 % in Wasser) wurden in einem Autoklaven bei 80 °C vorgelegt und das Reaktionsgefäß wurde mit Stickstoff inertisiert. Bei 110 °C wurden 42,1 g (0,96 mol) Ethylenoxid innerhalb von 10 min zudosiert und anschließend wurde 5 h nachgerührt. Nach Zugabe von 4,07 g KOH (50%ig in Wasser) wurde 2 h bei 120 °C und <10 mbar Vakuum entwässert. Dann wurde die Temperatur auf 140 °C gesteigert und 800 g Ethylenoxid (18,2 mol) wurden innerhalb von 16 h zudosiert. Nach Ende der Dosierung wurde noch 10 h bei 140 °C nachgerührt. Flüchtige Bestandteile wurden im Vakuum entfernt. Es wurden 947 g eines Melamin-Tetraethylenpentamin-Kondensats mit 20,3 Ethylenoxideinheiten pro NH-Funktion als dunkle, flüssige Substanz erhalten.
Mₙ = 3300
M_{w} = 125 000
Aminzahl: 84 mg KOH/g

300 g des mit Ethylenoxid funktionalisierten Polymers wurden in einem Autoklaven vorlegt. Nach Inertisierung mit Stickstoff wurde die Temperatur auf 140 °C gesteigert und 282 g (4,85 mol) Propylenoxid wurden innerhalb von 6 h massendosiert zugegeben. Anschließend wurde 7 h bei 140 °C nachgerührt. Nach Abkühlen wurden flüchtige Bestandteile im Vakuum entfernt. Es wurden 600 g eines Melamin-Tetraethylenpentamin-Kondensats mit 20,3 Ethylenoxideinheiten und 17,0 Propylenoxideinheiten pro NH-Funktion erhalten.
Mₙ = 1200
M_{w} = 260 000
Aminzahl: 41 mg KOH/g

### 2.6 Funktionalisierung des Polymers aus Beispiel 1.1 durch Umsetzung mit Propylenoxid

120 g eines analog zu Beispiel 1.1 erhaltenes Polymer aus Melamin und Tetraethylenpentamin (98 % in Wasser) wurden in einem Autoklaven bei 80 °C vorgelegt und das Reaktionsgefäß wurde mit Stickstoff inertisiert. Bei 100 °C wurden 86,0 g (1,47 mol) Propylenoxid innerhalb von 10 min zudosiert und anschließend wurde 18 h nachgerührt. Zu 133 g des erhaltenen Produkts wurden 3,8 g Kalium-tert-butylat gegeben, und die Temperatur wurde auf 130 °C erhöht. 675 g Propylenoxid (11,6 mol) wurden innerhalb von 6,5 h zudosiert. Nach Ende der Dosierung wurde noch 10 h bei 130 °C nachgerührt. Flüchtige Bestandteile wurden im Vakuum entfernt. Es wurden 818 g eines Melamin-Tetraethylenpentamin-Kondensats mit 10,0 Propylenoxideinheiten pro NH-Funktion als dunkle, flüssige Substanz erhalten.
Mₙ = 2020
M_{w} = 2940
Aminzahl: 89,6 mg KOH/g

## Patentansprüche

1. Verfahren zur Herstellung amphiphiler funktionalisierter hochverzweigter Melamin-Polyamin-Polymere, umfassend folgende Schritte:
Verfahren A:
(A-i) Kondensation von
(A-i.1) Melamin und gegebenenfalls wenigstens einem Melaminderivat mit
(A-i.2) wenigstens einem davon verschiedenen Amin mit wenigstens zwei primären Aminogruppen;
und gegebenenfalls außerdem noch mit
(A-i.3) Harnstoff und/oder wenigstens einem Harnstoffderivat; und/oder
(A-i.4) wenigstens einem wenigstens difunktionellen Di- oder Polyisocyanat; und/oder
(A-i.5) wenigstens einer Carbonsäure mit wenigstens zwei Carboxylgruppen oder wenigstens einem Derivat davon;
(A-ii) gegebenenfalls Quatemisierung eines Teils der Aminogruppen des in Schritt (A-i) erhaltenen Polymerabschnitts;
(A-iii) Umsetzung des in Schritt (A-i) oder (A-ii) erhaltenen Polymerabschnitts mit wenigstens einer Verbindung, die mit Aminogruppen eine Kondensations- oder Additionsreaktion eingehen kann und die zur Bildung eines hydrophoben Polymerabschnitts führt, wobei die Verbindung ausgewählt ist unter
- aliphatischen C₄-C₂₂-Monocarbonsäuren oder Derivaten davon;
- α,β-Dicarbonsäuren mit wenigstens 6 Kohlenstoffatomen oder Derivaten davon;
- aliphatischen, cycloaliphatischen oder aromatischen gegebenenfalls verkappten Isocyanaten mit wenigstens 6 Kohlenstoffatomen;
- aliphatischen Monoaminen mit wenigstens 6 Kohlenstoffatomen;
- aliphatischen Polyaminen, in denen alle Aminogruppen linear zueinander angeordnet sind, mit einem Verhältnis der Anzahl der im Polyamin enthaltenen Kohlenstoffatome zur Anzahl der enthaltenen Stickstoffatome von wenigstens 2,5:1;
- Alkylenoxiden mit wenigstens 3 Kohlenstoffatomen, die ausgewählt sind unter Propylenoxid, Butylenoxid, Pentylenoxid und Styroloxid;
- Polyetheraminen der Formel V
NH₂-[A⁴-O]ₚ-A⁴-NH₂ (V)
worin
jedes A⁴ unabhängig für lineares oder verzweigtes C₃-C₄-Alkylen steht; und
p für eine Zahl von 1 bis 5000 steht;
- Ketonen oder Aldehyden mit wenigstens 6 Kohlenstoffatomen; und
- Aldehyden in Kombination mit wenigstens einer CH-aciden Verbindung mit wenigstens 4 Kohlenstoffatomen oder mit wenigstens einem Hydroxyaromaten, der wenigstens einen aliphatischen Rest mit wenigstens 4 Kohlenstoffatomen als Substituenten trägt;
wobei für den Fall, dass die wenigstens eine in Schritt (A-iii) eingesetzte Verbindung ausgewählt ist unter Alkylenoxiden mit wenigstens 3 Kohlenstoffatomen, der Umsetzung mit diesem wenigstens einen Alkylenoxid eine Umsetzung mit Ethylenoxid vorausgehen kann; und
(A-iv) gegebenenfalls Quatemisierung wenigstens eines Teils der Aminogruppen des in Schritt (A-i) erhaltenen Polymerabschnitts;
wobei in Schritt (A-i), (A-ii) oder (A-iv) ein hydrophiler Polymerabschnitt erhalten wird.

2. Verfahren nach Anspruch 1, wobei das in Schritt (A-i) eingesetzte wenigstens eine von Melamin und dem Melaminderivat verschiedene Amin (A-i.2) ausgewählt ist unter
- 1,2-Ethylendiamin,
- 1,2-Propylendiamin,
- 1,3-Propylendiamin,
- Polyaminen mit zwei primären Aminogruppen und wenigstens einer sekundären oder tertiären Aminogruppe und/oder wenigstens einem Ether-Sauerstoffatom, in denen alle Aminogruppen und Ether-Sauerstoffatome linear zueinander angeordnet sind und in denen das Verhältnis der Anzahl der im Polyamin enthaltenen Kohlenstoffatome zur Anzahl der im Polyamin enthaltenen Stickstoffatome und gegebenenfalls enthaltenen Sauerstoffatome kleiner 2,5:1, vorzugsweise kleiner oder gleich 2:1 ist, und
- Polyaminen mit wenigstens zwei primären Aminogruppen, wenigstens einer weiteren primären oder sekundären Aminogruppe und gegebenenfalls wenigstens einer weiteren primären, sekundären oder tertiären Aminogruppe und/oder gegebenenfalls wenigstens einem Ether-Sauerstoffatom, in denen wenigstens drei Aminogruppen nicht linear zueinander angeordnet sind und in denen das Verhältnis der Anzahl der im Polyamin enthaltenen Kohlenstoffatome zur Anzahl der im Polyamin enthaltenen Stickstoffatome und gegebenenfalls enthaltenen Sauerstoffatome kleiner oder gleich 3:1, vorzugsweise kleiner oder gleich 2,5:1 ist.

3. Verfahren nach Anspruch 2, wobei das in Schritt (A-i) eingesetzte Amin (A-i.2) ausgewählt ist unter Aminen der Formel I.1
NH₂-⁅A¹-X¹⁆ₘ-A¹-NH₂ (I.1)
worin
jedes A¹ unabhängig für 1,2-Ethylen, 1,3-Propylen oder 1,2-Propylen steht, wobei für den Fall, dass m nicht für 0 steht, die Anzahl der in der Verbindung der Formel I enthaltenen 1,2-Ethyleneinheiten A¹ zur Gesamtzahl der in der Verbindung der Formel I enthaltenen 1,3- und 1,2-Propyleneinheiten A¹ wenigstens 1:1 beträgt;
jedes X¹ unabhängig für O oder NR^{a} steht;
Rₐ für H, C₁-C₄-Alkyl, C₂-C₄-Hydroxyalkyl oder C₁-C₄-Alkoxy steht; und
m für eine Zahl von 0 bis 100 steht.

4. Verfahren nach Anspruch 2, wobei das in Schritt (A-i) eingesetzte Amin (A-i.2) ausgewählt ist unter Aminen der Formel II.1 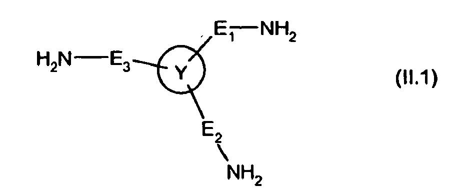 worin
Y für CR^{b}, N, oder einen 5- oder 6-gliedrigen, gesättigten, teilweise ungesättigten oder aromatischen heterocyclischen Ring mit 1, 2 oder 3 Heteroatomen als Ringgliedem steht, die ausgewählt sind unter N, O und S;
E₁, E₂ und E₃ unabhängig voneinander für eine Einfachbindung, eine Gruppe -⁅A²-X²⁆ₙ-A²-, -NR^{c}-A²- oder -O-A²- stehen, mit der Maßgabe, dass E₁, E₂ und E₃ nicht für eine Einfachbindung und nicht für -NR^{c}-A²- stehen, wenn Y für N steht;
jedes A² unabhängig für 1,2-Ethylen, 1,3-Propylen oder 1,2-Propylen steht;
jedes X² unabhängig für O oder NR^{d} steht
R^{b} für H, C₁-C₄-Alkyl, C₂-C₄-Hydroxyalkyl oder C₁-C₄-Alkoxy steht;
R^{c} und R^{d} unabhängig für H, C₁-C₄-Alkyl, C₂-C₄-Hydroxyalkyl oder C₁-C₄-Alkoxy stehen; und
n für eine Zahl von 0 bis 10 steht.

5. Verfahren nach einem der Ansprüche 2 bis 4, wobei das in Schritt (A-i) eingesetzte wenigstens eine von Melamin und dem Melaminderivat verschiedene Amin (A-i.2) ausgewählt ist unter 1,2-Ethylendiamin, 1,2-Propylendiamin, 1,3-Propylendiamin, Diethylentriamin, Triethylentetramin, Tetraethylenpentamin, Pentaethylenhexamin, Hexaethylenheptamin, Heptaethylenoctamin, Octaethylennonamin, Bis(3-aminopropyl)amin, Bis(3-aminopropyl)methylamin, N,N-Bis(3-aminopropyl)-ethylendiamin, N,N-Bis(3-aminopropyl)-propan-1,3-diamin, N,N-Bis(3-aminopropyl)-butan-1,4-diamin, Tris(2-aminoethyl)amin, Tris(2-aminopropyl)amin, Tris(3-aminopropyl)amin, Trisaminohexan, Verbindungen der Formel I.1, worin X¹ für NR^{a} steht, wobei wenigstens ein A¹ für 1,3-Propylen oder 1,2-Propylen steht und m für eine Zahl von 1 bis 100 steht, und Verbindungen der Formel I.1, worin X¹ für O steht und m für eine Zahl von 2 bis 100 steht; und vorzugsweise ausgewählt ist unter Diethylentriamin, Triethylentetramin, Tetraethylenpentamin, Pentaethylenhexamin, Hexaethylenheptamin, Heptaethylenoctamin und Octaethylennonamin.

6. Verfahren nach Anspruch 1, wobei das in Schritt (A-i) eingesetzte wenigstens eine von Melamin und dem Melaminderivat verschiedene Amin (A-i.2) unter Polyaminen gemäß der Definition in einem der Ansprüche 2 bis 7 und Polyaminen der Formel IV ausgewählt ist
NH₂-[A³-X³]ₒ-A³-NH₂ (IV)
worin
jedes A³ unabhängig für lineares oder verzweigtes C₃-C₁₀-Alkylen steht;
X³ für O oder NR^{e} steht;
R^{e} für H, C₁-C₄-Alkyl, C₂-C₄-Hydroxyalkyl oder C₁-C₄-Alkoxy steht; und
o für eine Zahl von 0 bis 100 steht;
mit der Maßgabe, dass A³ für C₄-C₁₀-Alkylen steht, wenn o für 0 steht;
und nach Schritt (A-i) in Schritt (A-ii) ein Teil der Aminogruppen quaternisiert wird, oder für den Fall, dass Schritt (A-ii) nicht durchgeführt wurde und in Schritt (A-iii) als Verbindungen, die mit Aminogruppen eine Kondensations- oder Additionsreaktion eingehen können, ausschließlich solche eingesetzt werden, die keine quatemisierbaren Gruppen aufweisen, nach Schritt (A-iii) in Schritt (A-iv) ein Teil der Aminogruppen quaternisiert wird.

7. Verfahren nach einem der vorhergehenden Ansprüche, wobei die wenigstens eine in Schritt (A-iii) eingesetzte Verbindung ausgewählt ist unter
- aliphatischen C₁₀-C₂₂-Monocarbonsäuren oder Derivaten davon;
- α,β-Dicarbonsäuren mit wenigstens 10 Kohlenstoffatomen; und
- Alkylenoxiden mit wenigstens 3 Kohlenstoffatomen, wobei der Umsetzung mit dem wenigstens einen Alkylenoxid mit wenigstens 3 Kohlenstoffatomen eine Umsetzung mit Ethylenoxid vorausgehen kann.

8. Verfahren zur Herstellung amphiphiler funktionalisierter hochverzweigter Melamin-Polyamin-Polymere, umfassend folgende Schritte:
Verfahren B:
(B-i) Kondensation von
(B-i.1) Melamin und gegebenenfalls wenigstens einem Melaminderivat mit
(B-i.2) wenigstens einem davon verschiedenen Amin mit wenigstens zwei primären Aminogruppen;
und gegebenenfalls außerdem noch mit
(B-i.3) Harnstoff und/oder wenigstens einem Hamstoffderivat; und/oder
(B-i.4) wenigstens einem wenigstens difunktionellen Di- oder Polyisocyanat; und/oder
(B-i.5) wenigstens einer Carbonsäure mit wenigstens zwei Carboxylgruppen oder wenigstens einem Derivat davon;
wobei in Schritt (B-i) ein hydrophober Polymerabschnitt erhalten wird; und
(B-iii) Umsetzung des in Schritt (B-i) erhaltenen hydrophoben Polymerabschnitts mit wenigstens einer Verbindung, die mit Aminogruppen eine Kondensations- oder Additionsreaktion eingehen kann und die zur Bildung eines hydrophilen Polymerabschnitts führt, wobei die Verbindung ausgewählt ist unter
- Polyaminen mit zwei primären Aminogruppen und wenigstens einer weiteren Aminogruppe und/oder wenigstens einem Ether-Sauerstoffatom, in denen das Verhältnis der Anzahl der im Polyamin enthaltenen Kohlenstoffatome zur Anzahl der enthaltenen Stickstoffatome und gegebenenfalls enthaltenen Sauerstoffatome kleiner 2,5:1 ist; und
- Ethylenoxid;
wobei für den Fall, dass die wenigstens eine in Schritt (B-iii) eingesetzte Verbindung Ethylenoxid ist, der Umsetzung mit Ethylenoxid eine Umsetzung mit wenigstens einen Alkylenoxid mit wenigstens 3 Kohlenstoffatomen, das ausgewählt ist unter Propylenoxid, Butylenoxid, Pentylenoxid und Styroloxid, vorausgehen kann.

9. Verfahren nach Anspruch 8, wobei das in Schritt (B-i) eingesetzte wenigstens eine von Melamin und dem Melaminderivat verschiedene Amin (B-i.2) ausgewählt ist unter
- Diaminen der Formel VI
NH₂-A⁵-NH₂ (VI)
worin A⁵ für einen zweiwertigen aliphatischen, alicyclischen, aliphatischalicyclischen, aromatischen oder araliphatischen Rest steht, wobei der aliphatische und der alicyclische Rest wenigstens 4 Kohlenstoffatome besitzen; und Polyaminen mit zwei primären Aminogruppen und wenigstens einer weiteren sekundären oder tertiären Aminogruppe und/oder wenigstens einem Ether-Sauerstoffatom, in denen alle Aminogruppen und Ether-Sauerstoffatome linear zueinander angeordnet sind und in denen das Verhältnis der Anzahl der im Polyamin enthaltenen Kohlenstoffatome zur Anzahl der enthaltenen Stickstoffatome und gegebenenfalls enthaltenen Sauerstoffatome wenigstens 2,5:1 beträgt.

10. Verfahren nach Anspruch 9, wobei das in Schritt (i) oder (B-i) eingesetzte Amin (B-i.2) ausgewählt ist unter
- Aminen der Formel (VI.1)
NH₂-A^{5a}-NH₂ (VI.1)
worin
A^{5a} für eine lineare oder verzweigte Alkylengruppe mit wenigstens 5, vorzugsweise wenigstens 6 Kohlenstoffatomen steht; und
- Polyetheraminen der Formel VII
NH₂-[A⁶-O]_{q}-A⁶-NH₂ (VII)
worin
jedes A⁶ unabhängig für lineares oder verzweigtes C₃-C₄-Alkylen steht; und
q für eine Zahl von 1 bis 5000 steht.

11. Verfahren nach einem der Ansprüche 8 bis 10, wobei für den Fall, dass in Schritt (B-iii) ein Diamin eingesetzt wurde, nach Umsetzung gemäß Schritt (B-iii) wenigstens ein Teil der im erhaltenen Polymer enthaltenen Aminogruppen quaternisiert wird und für den Fall, dass in Schritt (B-iii) kein Ethylenoxid eingesetzt wurde, das nach Umsetzung gemäß Schritt (B-iii) erhaltene Produkt mit Ethylenoxid umgesetzt wird.

12. Verfahren nach einem der Ansprüche 8 bis 10, wobei für den Fall, dass in Schritt (B-iii) ein Diamin eingesetzt wurde, nach Umsetzung gemäß Schritt (B-iii) wenigstens ein Teil der im erhaltenen Polymer enthaltenen Aminogruppen in eine Carbobetain-, Sulfobetain- und/oder Phosphobetaingruppe überführt wird.

13. Verfahren nach einem der Ansprüche 8 bis 10, wobei das nach Umsetzung gemäß Schritt (B-iii) mit Ethylenoxid erhaltene Polymer mit einer Sulfat- oder Phosphatgruppe terminiert wird.

14. Verfahren nach einem der vorhergehenden Ansprüche,
wobei in Schritt (A-i) das Molverhältnis von Amin (A-i.2) und Komponente (A-i.1) so gewählt wird, dass das Verhältnis der Anzahl der im Amin (A-i.2) enthaltenen primären Aminogruppen zur Anzahl der in Komponente (A-i.1) enthaltenen primären Aminogruppen wenigstens 1:1 beträgt;
bzw. wobei in Schritt (B-i) das Molverhältnis von Amin (B-i.2) und Komponente (B-i.1) so gewählt wird, dass das Verhältnis der Anzahl der im Amin (B-i.2) enthaltenen primären Aminogruppen zur Anzahl der in Komponente (B-i.1) enthaltenen primären Aminogruppen wenigstens 1:1 beträgt.

15. Verfahren nach einem der vorhergehenden Ansprüche, wobei die Quaternisierung durch Umsetzung mit einer Brönstedsäure und/oder mit einem Alkylierungsmittel erfolgt.

16. Funktionalisierte hochverzweigte Melamin-Polyamin-Polymere, erhältlich durch das Verfahren gemäß einem der vorhergehenden Ansprüche.

17. Polymere nach Anspruch 16, wobei die Polymere im Wesentlichen nicht vernetzt sind.

18. Polymere nach einem der Ansprüche 16 oder 17, mit einem zahlenmittleren Molekulargewicht Mₙ von 500 bis 200.000.

19. Verwendung von Polymeren gemäß einem der Ansprüche 16 bis 18 als oberflächenaktives Mittel.

20. Verwendung nach Anspruch 19, als Tensid, Detergens, Netzmittel, Emulgator, Demulgator, Dispergiermittel, Schutzkolloid, Haftvermittler, Schaumbildner, Rheologiemodifiziermittel, Verdicker, Schmelzviskositätserniedriger für Polymere, Verflüssiger für Klebstoffe, Haftstoffe oder Harze, Dispersionsverflüssiger, Bindemittel für Klebstoffe, Haftstoffe und Harze, Bindemittel für Textilien, Vernetzer, Solubilisator, Verkapselungsmittel, Nachgerbungsmittel, Hydrophobierungsmittel oder Hydrophilisierungsmittel.

## Claims

1. A process for the preparation of amphiphilic functionalized highly branched melamine-polyamine polymers, comprising the following steps:
Process A:
(A-i) condensation of
(A-i.1) melamine and optionally at least one melamine derivative with
(A-i.2) at least one amine different therefrom having at least two primary amino groups;
and optionally moreover also with
(A-i.3) urea and/or at least one urea derivative; and/or
(A-i.4) at least one at least difunctional di- or polyisocyanate; and/or
(A-i.5) at least one carboxylic acid having at least two carboxyl groups or at least one derivative thereof;
(A-ii) optionally quaternization of some of the amino groups of the polymer segment obtained in step (A-i);
(A-iii) reaction of the polymer segment obtained in step (A-i) or (A-ii) with at least one compound which can enter into a condensation reaction or addition reaction with amino groups and which leads to the formation of a hydrophobic polymer segment, the compound being selected from
- aliphatic C₄-C₂₂-monocarboxylic acids or derivatives thereof;
- a,β-dicarboxylic acids having at least 6 carbon atoms or derivatives thereof;
- aliphatic, cycloaliphatic or aromatic optionally capped isocyanates having at least 6 carbon atoms;
- aliphatic monoamines having at least 6 carbon atoms;
- aliphatic polyamines in which all amino groups are arranged linearly relative to one another, with a ratio of the number of carbon atoms present in the polyamine to the number of nitrogen atoms present of at least 2.5:1;
- alkylene oxides having at least 3 carbon atoms selected from propylene oxide, butylene oxide, pentylene oxide and styrene oxide;
- polyetheramines of the formula V
NH₂-[A⁴-O]ₚ-A⁴-NH₂ (V)
in which
each A⁴, independently, is linear or branched C₃-C₄-alkylene; and
p is a number from 1 to 5000;
- ketones or aldehydes having at least 6 carbon atoms; and
- aldehydes in combination with at least one CH-acidic compound having at least 4 carbon atoms or with at least one hydroxyaromatic which carries at least one aliphatic radical having at least 4 carbon atoms as substituent;
where if the at least one compound used in step (A-iii) is selected from alkylene oxides having at least 3 carbon atoms, a reaction with ethylene oxide can precede the reaction with this at least one alkylene oxide; and
(A-iv) optionally quaternization of at least some of the amino groups in the polymer segment obtained in step (A-i);
where a hydrophilic polymer segment is obtained in step (A-i), (A-ii) or (A-iv).

2. The process according to claim 1, where the at least one amine (A-i.2) different from melamine or the melamine derivative and used in step (A-i) is selected from
- 1,2-ethylenediamine,
- 1,2-propylenediamine,
- 1,3-propylenediamine,
- polyamines with two primary amino groups and at least one secondary or tertiary amino group and/or at least one ether oxygen atom, in which all amino groups and ether oxygen atoms are arranged linearly relative to one another and in which the ratio of the number of carbon atoms present in the polyamine to the number of nitrogen atoms present in the polyamine and optionally present oxygen atoms is less than 2.5:1, preferably less than or equal to 2:1, and
- polyamines with at least two primary amino groups, at least one further primary or secondary amino group and optionally at least one further primary, secondary or tertiary amino group and/or optionally at least one ether oxygen atom, in which at least three amino groups are not arranged linearly relative to one another and in which the ratio of the number of carbon atoms present in the polyamine to the number of nitrogen atoms present in the polyamine and optionally present oxygen atoms is less than or equal to 3:1, preferably less than or equal to 2.5:1.

3. The process according to claim 2, where the amine (A-i.2) used in step (A-i) is selected from amines of the formula I.1
NH₂-⁅A¹-X¹⁆ₘ-A¹-NH₂ (I.1)
in which
each A¹, independently, is 1,2-ethylene, 1,3-propylene or 1,2-propylene, where if m is not 0, the number of 1,2-ethylene units A¹ present in the compound of the formula I to the total number of 1,3- and 1,2-propylene units A¹ present in the compound of the formula I is at least 1:1;
each X¹, independently, is O or NR^{a};
R^{a} is H, C₁-C₄-alkyl, C₂-C₄-hydroxyalkyl or C₁-C₄-alkoxy; and
m is a number from 0 to 100.

4. The process according to claim 2, where the amine (A-i.2) used in step (A-i) is selected from amines of the formula II.1 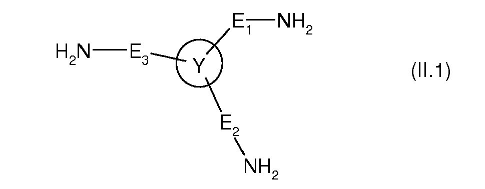 in which
Y is CR^{b}, N, or a 5- or 6-membered, saturated, partially unsaturated or aromatic heterocyclic ring having 1, 2 or 3 heteroatoms as ring members which are selected from N, O and S;
E₁, E₂ and E₃, independently of one another, are a single bond, a group -⁅A²-X²⁆ₙ-A²-, -NR^{c}-A²- or -O-A²-, with the proviso that E₁, E₂ and E₃ are not a single bond and not -NR^{c}-A²- when Y is N;
each A², independently, is 1,2-ethylene, 1,3-propylene or 1,2-propylene;
each X², independently, is O or NR^{d};
R^{b} is H, C₁-C₄-alkyl, C₂-C₄-hydroxyalkyl or C₁-C₄-alkoxy;
R^{c} and R^{d}, independently, are H, C₁-C₄-alkyl, C₂-C₄-hydroxyalkyl or C₁-C₄-alkoxy; and
n is a number from 0 to 10.

5. The process according to any one of claims 2 to 4, where the at least one amine (A-i.2) different from melamine or the melamine derivative and used in step (A-i) is selected from 1,2-ethylenediamine, 1,2-propylenediamine, 1,3-propylenediamine, diethylenetriamine, triethylenetetramine, tetraethylenepentamine, pentaethylenehexamine, hexaethyleneheptamine, heptaethyleneoctamine, octaethylenenonamine, bis(3-aminopropyl)amine, bis(3-aminopropyl)methylamine, N,N-bis(3-aminopropyl)ethylenediamine, N,N-bis(3-aminopropyl)propane-1,3-diamine, N,N-bis(3-aminopropyl)butane-1,4-diamine, tris(2-aminoethyl)amine, tris(2-aminopropyl)amine, tris(3-aminopropyl)amine, trisaminohexane, compounds of the formula I.1, in which X¹ is NR^{a}, where at least one A¹ is 1,3-propylene or 1,2-propylene, and m is a number from 1 to 100, and compounds of the formula I.1, in which X¹ is O and m is a number from 2 to 100; and is preferably selected from diethylenetriamine, triethylenetetramine, tetraethylenepentamine, pentaethylenehexamine, hexaethyleneheptamine, heptaethyleneoctamine and octaethylenenonamine.

6. The process according to claim 1, where the at least one amine (A-i.2) different from melamine or the melamine derivative and used in step (A-i) is selected among polyamines according to the definition in one of claims 2 to 7 and polyamines of the formula IV
NH₂-[A³-X³]ₒ-A³-NH₂ (IV)
in which
each A³, independently, is a linear or branched C₃-C₁₀-alkylene;
X³ is O or NR^{e};
R^{e} is H, C₁-C₄-alkyl, C₂-C₄-hydroxyalkyl or C₁-C₄-alkoxy; and
o is a number from 0 to 100;
with the proviso that A³ is C₄-C₁₀-alkylene when o is 0;
and after step (A-i), in step (A-ii), some of the amino groups are quaternized, or if step (A-ii) has not been carried out and in step (A-iii) the compounds which can enter into a condensation reaction or addition reaction with amino groups that are used are exclusively those which have no quaternizable groups, after step (A-iii), in step (A-iv), some of the amino groups are quaternized.

7. The process according to any one of the preceding claims, where the at least one compound used in step (A-iii) is selected from
- aliphatic C₁₀-C₂₂-monocarboxylic acids or derivatives thereof;
- α,β-dicarboxylic acids having at least 10 carbon atoms; and
- alkylene oxides having at least 3 carbon atoms, where a reaction with ethylene oxide can precede the reaction with the at least one alkylene oxide having at least 3 carbon atoms.

8. A process for the preparation of amphiphilic functionalized highly branched melamine-polyamine polymers, comprising the following steps:
Process B:
(B-i) condensation of
(B-i.1) melamine and optionally at least one melamine derivative with
(B-i.2) at least one amine different therefrom having at least two primary amino groups;
and optionally moreover also with
(B-i.3) urea and/or at least one urea derivative; and/or
(B-i.4) at least one at least difunctional di- or polyisocyanate; and/or
(B-i.5) at least one carboxylic acid having at least two carboxyl groups or at least one derivative thereof;
where a hydrophobic polymer segment is obtained in step (B-i); and
(B-iii) reaction of the hydrophobic polymer segment obtained in step (B-i) with at least one compound which can enter into a condensation reaction or addition reaction with amino groups and which leads to the formation of a hydrophilic polymer segment, the compound being selected from
- polyamines having two primary amino groups and at least one further amino group and/or at least one ether oxygen atom, in which the ratio of the number of carbon atoms present in the polyamine to the number of nitrogen atoms present and optionally present oxygen atoms is less than 2.5:1; and
- ethylene oxide;
where if the at least one compound used in step (B-iii) is ethylene oxide, a reaction with at least one alkylene oxide having at least three carbon atoms selected from propylene oxide, butylene oxide, pentylene oxide and styrene oxide can precede the reaction with ethylene oxide.

9. The process according to claim 8, where the at least one amine (B-i.2) different from melamine or the melamine derivative and used in step (B-i) is selected from
- diamines of the formula VI
NH₂-A⁵-NH₂ (VI)
in which A⁵ is a divalent aliphatic, alicyclic, aliphatic-alicyclic, aromatic or araliphatic radical, where the aliphatic and the alicyclic radical have at least 4 carbon atoms; and polyamines having two primary amino groups and at least one further secondary or tertiary amino group and/or at least one ether oxygen atom, in which all amino groups and ether oxygen atoms are arranged linearly relative to one another and in which the ratio of the number of carbon atoms present in the polyamine to the number of nitrogen atoms present and optionally present oxygen atoms is at least 2.5:1.

10. The process according to claim 9, where the amine (B-i.2) used in step (i) or (B-i) is selected from
- amines of the formula (VI.1)
NH₂-A^{5a}-NH₂ (VI.1)
in which
A^{5a} is a linear or branched alkylene group having at least 5, preferably at least 6, carbon atoms; and
- polyetheramines of the formula VII
NH₂-[A⁶-O]_{q}-A⁶-NH₂ (VII)
in which
each A⁶, independently, is linear or branched C₃-C₄-alkylene; and
q is a number from 1 to 5000.

11. The process according to any one of claims 8 to 10, where if, in step (B-iii), a diamine has been used, following reaction according to step (B-iii), at least some of the amino groups present in the polymer obtained are quaternized, and if, in step (B-iii), no ethylene oxide has been used, the product obtained following reaction according to step (B-iii) is reacted with ethylene oxide.

12. The process according to any one of claims 8 to 10, where if, in step (B-iii), a diamine has been used, following the reaction according to step (B-iii), at least some of the amino groups present in the polymer obtained are converted to a carbobetaine group, sulfobetaine group and/or phosphobetaine group.

13. The process according to any one of claims 8 to 10, where the polymer obtained following the reaction according to step (B-iii) with ethylene oxide is terminated with a sulfate group or phosphate group.

14. The process according to any one of the preceding claims, where,
in step (A-i), the molar ratio of amine (A-i.2) and component (A-i.1) is selected such that the ratio of the number of primary amino groups present in the amine (A-i.2) to the number of primary amino groups present in component (A-i.1) is at least 1:1;
or where, in step (B-i), the molar ratio of amine (B-i.2) and component (B-i.1) is selected such that the ratio of the number of primary amino groups present in the amine (B-i.2) to the number of primary amino groups present in component (B-i.1) is at least 1:1.

15. The process according to any one of the preceding claims, where the quaternization takes place through reaction with a Brönsted acid and/or with an alkylating agent.

16. A functionalized highly branched melamine-polyamine polymer obtainable by the process according to any one of the preceding claims.

17. The polymer according to claim 16, where the polymer is essentially non-crosslinked.

18. The polymer according to any one of claims 16 or 17 having a number-average molecular weight Mₙ of from 500 to 200 000.

19. The use of polymers according to any one of claims 16 to 18 as surface-active agent.

20. The use according to claim 19 as surfactant, detergent, wetting agent, emulsifier, demulsifier, dispersant, protective colloid, adhesion promoter, foam former, rheology modifier, thickener, melt viscosity lowerer for polymers, liquefier for adhesives or resins, dispersion liquefier, binder for adhesives and resins, binder for textiles, crosslinker, solubilizer, encapsulation agent, retanning agent, hydrophobicizing agent or hydrophilicizing agent.

## Revendications

1. Procédé de fabrication de polymères mélamine-polyamine amphiphiles, fonctionnalisés et hautement ramifiés, comprenant les étapes suivantes :
procédé A :
(A-i) la condensation de
(A-i.1) mélamine et éventuellement d'au moins un dérivé de mélamine avec
(A-i.2) au moins une amine différente de ceux-ci contenant au moins deux groupes amino primaires ;
et éventuellement également avec
(A-i.3) de l'urée et/ou au moins un dérivé d'urée ; et/ou
(A-i.4) au moins un di- ou polyisocyanate au moins bifonctionnel ; et/ou
(A-i.5) au moins un acide carboxylique contenant au moins deux groupes carboxyle ou au moins un dérivé de celui-ci ;
(A-ii) éventuellement la quaternisation d'une partie des groupes amino de la section de polymère obtenue à l'étape (A-i) ;
(A-iii) la mise en réaction de la section de polymère obtenue à l'étape (A-i) ou (A-ii) avec au moins un composé, qui peut réaliser une réaction de condensation ou d'addition avec des groupes amino et qui conduit à la formation d'une section de polymère hydrophobe, le composé étant choisi parmi :
- les acides monocarboxyliques aliphatiques en C₄-C₂₂ ou leurs dérivés ;
- les acides α,β-dicarboxyliques contenant au moins 6 atomes de carbone ou leurs dérivés ;
- les isocyanates aliphatiques, cycloaliphatiques ou aromatiques, éventuellement bloqués, contenant au moins 6 atomes de carbone ;
- les monoamines aliphatiques contenant au moins 6 atomes de carbone ;
- les polyamines aliphatiques, dans lesquelles tous les groupes amino sont agencés linéairement les uns par rapport aux autres, avec un rapport entre le nombre d'atomes de carbone contenus dans la polyamine et le nombre d'atomes d'azote contenus d'au moins 2,5:1 ;
- les oxydes d'alkylène contenant au moins 3 atomes de carbone, qui sont choisis parmi l'oxyde de propylène, l'oxyde de butylène, l'oxyde de pentylène et l'oxyde de styrène ;
- les polyéther-amines de formule V
NH₂- [A⁴-O]ₚ-A⁴-NH₂ (V)
dans laquelle
chaque A⁴ représente indépendamment un alkylène en C₃-C₄ linéaire ou ramifié ; et
p représente un nombre de 1 à 5 000 ;
- les cétones ou les aldéhydes contenant au moins 6 atomes de carbone ; et
- les aldéhydes en combinaison avec au moins un composé CH-acide contenant au moins 4 atomes de carbone ou avec au moins un composé hydroxy-aromatique, qui porte au moins un radical aliphatique contenant au moins 4 atomes de carbone en tant que substituant ;
dans le cas où le ou les composés utilisés à l'étape (A-iii) sont choisis parmi les oxydes d'alkylène contenant au moins 3 atomes de carbone, la réaction avec ce ou ces oxydes d'alkylène pouvant précéder une réaction avec de l'oxyde d'éthylène ; et
(A-iv) éventuellement la quaternisation d'au moins une partie des groupes amino de la section de polymère obtenue à l'étape (A-i) ;
une section de polymère hydrophile étant obtenue à l'étape (A-i), (A-ii) ou (A-iv).

2. Procédé selon la revendication 1, dans lequel la ou les amines (A-i.2) différentes de la mélamine et du dérivé de mélamine utilisées à l'étape (A-i) sont choisies parmi :
- la 1,2-éthylène-diamine,
- la 1,2-propylène-diamine,
- la 1,3-propylène-diamine,
- les polyamines contenant deux groupes amino primaires et au moins un groupe amino secondaire ou tertiaire et/ou au moins un atome d'oxygène éthéré, dans lesquelles tous les groupes amino et les atomes d'oxygène éthérés sont agencés linéairement les uns par rapport aux autres et dans lesquelles le rapport entre le nombre d'atomes de carbone contenus dans la polyamine et le nombre d'atomes d'azote contenus dans la polyamine et éventuellement d'atomes d'oxygène contenus est inférieur à 2,5:1, de préférence inférieur ou égal à 2:1, et
- les polyamines contenant au moins deux groupes amino primaires, au moins un groupe amino primaire ou secondaire supplémentaire et éventuellement au moins un groupe amino primaire, secondaire ou tertiaire supplémentaire, et/ou éventuellement au moins un atome d'oxygène éthéré, dans lesquelles au moins trois groupes amino ne sont pas agencés linéairement les uns par rapport aux autres et dans lesquelles le rapport entre le nombre d'atomes de carbone contenus dans la polyamine et le nombre d'atomes d'azote contenus dans la polyamine et éventuellement d'atomes d'oxygène contenus est inférieur ou égal à 3:1, de préférence inférieur ou égal à 2,5:1.

3. Procédé selon la revendication 2, dans lequel l'amine (A-i.2) utilisée à l'étape (A-i) est choisie parmi les amines de formule I.1
NH₂- [A¹-X¹]ₘ,-A¹-NH₂ (I.1)
dans laquelle
chaque A¹ représente indépendamment 1,2-éthylène, 1,3-propylène ou 1,2-propylène ; lorsque m ne représente pas 0, le nombre d'unités 1,2-éthylène A¹ contenues dans le composé de formule I par rapport au nombre total d'unités 1,3- et 1,2-propylène A¹ contenues dans le composé de formule I étant d'au moins 1:1 ;
chaque X¹ représente indépendamment O ou NR^{a};
R^{a} représente H, alkyle en C₁-C₄, hydroxyalkyle en C₂-C₄ ou alcoxy en C₁-C₄ ; et
m représente un nombre de 0 à 100.

4. Procédé selon la revendication 2, dans lequel l'amine (A-i.2) utilisée à l'étape (A-i) est choisie parmi les amines de formule II.1 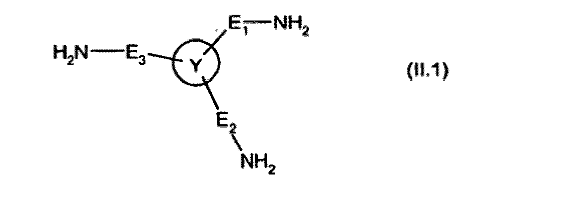 dans laquelle
Y représente CR^{b}, N ou un cycle hétérocyclique saturé, partiellement insaturé ou aromatique, à 5 ou 6 éléments, contenant 1, 2 ou 3 hétéroatomes en tant qu'éléments de cycle, qui sont choisis parmi N, O et S ;
E₁, E₂ et E₃ représentent indépendamment les uns des autres une simple liaison, un groupe -[A²X²]ₙ-A²-, -NR^{c}-A²- ou -O-A²-, à condition qu'E₁, E₂ et E₃ ne représentent pas une simple liaison et ne représentent pas -NR^{c}-A²- lorsqu'Y représente N ;
chaque A² représente indépendamment 1,2-éthylène, 1,3-propylène ou 1,2-propylène ;
chaque X² représente indépendamment O ou NR^{d};
R^{b} représente H, alkyle en C₁-C₄, hydroxyalkyle en C₂-C₄ ou alcoxy en C₁-C₄ ;
R^{c} et R^{d} représentent indépendamment H, alkyle en C₁-C₄, hydroxyalkyle en C₂-C₄ ou alcoxy en C₁-C₄ ; et
n représente un nombre de 0 à 10.

5. Procédé selon l'une quelconque des revendications 2 à 4, dans lequel la ou les amines (Ai.2) différentes de la mélamine et du dérivé de mélamine utilisées à l'étape (A-i) sont choisies parmi la 1,2-éthylène-diamine, la 1,2-propylène-diamine, la 1,3-propylène-diamine, la diéthylène-triamine, la triéthylène-tétramine, la tétraéthylène-pentamine, la pentaéthylène-hexamine, l'hexaéthylène-heptamine, l'heptaéthylène-octamine, l'octaéthylène-nonamine, la bis(3-aminopropyl)amine, la bis(3-aminopropyl)méthylamine, la N,N-bis(3-aminopropyl)-éthylène-diamine, la N,N-bis(3-aminopropyl)-propane-1,3-diamine, la N,N-bis(3-aminopropyl)-butane-1,4-diamine, la tris(2-aminoéthyl)amine, la tris(2-aminopropyl)amine, la tris(3-aminopropyl)amine, le trisaminohexane, les composés de formule I.1, dans laquelle X¹ représente NR^{a}, au moins un A¹ représentant 1,3-propylène ou 1,2-propylène et m représentant un nombre de 1 bis à 100, et les composés de formule I.1, dans laquelle X¹ représente O et m représente un nombre de 2 à 100 ; et sont de préférence choisies parmi la diéthylène-triamine, la triéthylène-tétramine, la tétraéthylène-pentamine, la pentaéthylène-hexamine, l'hexaéthylène-heptamine, l'heptaéthylène-octamine et l'octaéthylène-nonamine.

6. Procédé selon la revendication 1, dans lequel la ou les amines (A-i.2) différentes de la mélamine et du dérivé de mélamine utilisées à l'étape (A-i) sont choisies parmi les polyamines selon la définition dans l'une quelconque des revendications 2 à 7 et les polyamines de formule IV
NH₂-[A³-X³]ₒ-A³-NH₂ (IV)
dans laquelle
chaque A³ représente indépendamment un alkylène en C₃-C₁₀ linéaire ou ramifié ;
X³ représente O ou NR^{e} ;
R^{e} représente H, alkyle en C₁-C₄, hydroxyalkyle en C₂-C₄ ou alcoxy en C₁-C₄ ; et
o représente un nombre de 0 à 100 ;
à condition qu'A³ représente alkylène en C₄-C₁₀ lorsqu'o représente 0 ;
et après l'étape (A-i), à l'étape (A-ii), une partie des groupes amino sont quaternisés ou, lorsque l'étape (A-ii) n'est pas réalisée et que des composés ne comprenant pas de groupes quaternisables sont utilisés exclusivement à l'étape (A-iii) en tant que composés pouvant réaliser une réaction de condensation ou d'addition avec des groupes amino, une partie des groupes amino sont quaternisés à l'étape (A-iv) après l'étape (A-iii).

7. Procédé selon l'une quelconque des revendications précédentes, dans lequel le ou les composés utilisés à l'étape (A-iii) sont choisis parmi
- les acides monocarboxyliques aliphatiques en C₁₀-C₂₂ ou leurs dérivés ;
- les acides α,β-dicarboxyliques contenant au moins 10 atomes de carbone ; et
- les oxydes d'alkylène contenant au moins 3 atomes de carbone, la réaction avec le ou les oxydes d'alkylène contenant au moins 3 atomes de carbone pouvant précéder une réaction avec de l'oxyde d'éthylène.

8. Procédé de fabrication de polymères mélamine-polyamine amphiphiles, fonctionnalisés et hautement ramifiés, comprenant les étapes suivantes :
procédé B :
(B-i) la condensation de
(B-i.1) mélamine et d'éventuellement au moins un dérivé de mélamine avec
(B-i.2) au moins une amine différente de ceux-ci contenant au moins deux groupes amino primaires ;
et éventuellement également avec
(B-i.3) de l'urée et/ou au moins un dérivé d'urée ; et/ou
(B-i.4) au moins un di- ou polyisocyanate au moins bifonctionnel ; et/ou
(B-i.5) au moins un acide carboxylique contenant au moins deux groupes carboxyle ou au moins un dérivé de celui-ci ;
une section de polymère hydrophobe étant obtenue à l'étape (B-i) ; et
(B-iii) la mise en réaction de la section de polymère hydrophobe obtenue à l'étape (B-i) avec au moins un composé, qui peut réaliser une réaction de condensation ou d'addition avec des groupes amino et qui conduit à la formation d'une section de polymère hydrophobe, le composé étant choisi parmi :
- les polyamines contenant deux groupes amino primaires et au moins un groupe amino supplémentaire et/ou au moins un atome d'oxygène éthéré, dans lesquelles le rapport entre le nombre d'atomes de carbone contenus dans la polyamine et le nombre d'atomes d'azote contenus et éventuellement d'atomes d'oxygène contenus est inférieur à 2,5:1 ; et
- l'oxyde d'éthylène ;
dans le cas où le ou les composés utilisés à l'étape (B-iii) sont l'oxyde d'éthylène, la réaction avec l'oxyde d'éthylène pouvant précéder une réaction avec au moins un oxyde d'alkylène contenant au moins 3 atomes de carbone, qui est choisi parmi l'oxyde de propylène, l'oxyde de butylène, l'oxyde de pentylène et l'oxyde de styrène.

9. Procédé selon la revendication 8, dans lequel la ou les amines (B-i.2) différentes de la mélamine et du dérivé de mélamine utilisées à l'étape (B-i) sont choisies parmi
- les diamines de formule VI
NH₂-A⁵-NH₂ (VI)
dans laquelle A⁵ représente un radical bivalent aliphatique, alicyclique, aliphatique-alicyclique, aromatique ou araliphatique, le radical aliphatique et le radical alicyclique comprenant au moins 4 atomes de carbone ; et
- les polyamines contenant deux groupes amino primaires et au moins un groupe amino secondaire ou tertiaire supplémentaire et/ou au moins un atome d'oxygène éthéré, dans lesquelles tous les groupes amino et les atomes d'oxygène éthérés sont agencés linéairement les uns par rapport aux autres et dans lesquelles le rapport entre le nombre d'atomes de carbone contenus dans la polyamine et le nombre d'atomes d'azote contenus et éventuellement d'atomes d'oxygène contenus est d'au moins 2,5:1.

10. Procédé selon la revendication 9, dans lequel l'amine (B-i.2) utilisée à l'étape (i) ou (B-i) est choisie parmi
- les amines de formule (VI.1)
NH₂-A5a-NH₂ (VI.1)
dans laquelle
A^{5a} représente un groupe alkylène linéaire ou ramifié contenant au moins 5, de préférence au moins 6 atomes de carbone ; et
- les polyéther-amines de formule VII
NH₂- [A6-0]_{q}-A⁶-NH₂ (VII)
dans laquelle
chaque A⁶ représente indépendamment un alkylène en C₃-C₄ linéaire ou ramifié ; et
q représente un nombre de 1 à 5 000.

11. Procédé selon l'une quelconque des revendications 8 à 10, dans lequel, lorsqu'une diamine est utilisée à l'étape (B-iii), après la réaction selon l'étape (B-iii), au moins une partie des groupes amino contenus dans le polymère obtenu sont quaternisés et, lorsque de l'oxyde d'éthylène n'est pas utilisé à l'étape (B-iii), le produit obtenu après la réaction selon l'étape (B-iii) est mis en réaction avec de l'oxyde d'éthylène.

12. Procédé selon l'une quelconque des revendications 8 à 10, dans lequel, lorsqu'une diamine est utilisée à l'étape (B-iii), après la réaction selon l'étape (B-iii), au moins une partie des groupes amino contenus dans le polymère obtenu sont transformés en un groupe carbobétaïne, sulfobétaïne et/ou phosphobétaïne.

13. Procédé selon l'une quelconque des revendications 8 à 10, dans lequel le polymère obtenu après la réaction selon l'étape (B-iii) avec de l'oxyde d'éthylène est terminé avec un groupe sulfate ou phosphate.

14. Procédé selon l'une quelconque des revendications précédentes, dans lequel, à l'étape (A-i), le rapport en moles entre l'amine (A-i.2) et le composant (A-i.1) est choisi de manière à ce que le rapport entre le nombre de groupes amino primaires contenus dans l'amine (A-i.2) et le nombre de groupes amino primaires contenus dans le composant (A-i.1) soit d'au moins 1:1 ;
ou dans lequel, à l'étape (B-i), le rapport en moles entre l'amine (B-i.2) et le composant (B-i.1) est choisi de manière à ce que le rapport entre le nombre de groupes amino primaires contenus dans l'amine (B-i.2) et le nombre de groupes amino primaires contenus dans le composant (B-i.1) soit d'au moins 1:1.

15. Procédé selon l'une quelconque des revendications précédentes, dans lequel la quaternisation a lieu par mise en réaction avec un acide de Bronsted et/ou avec un agent d'alkylation.

16. Polymères mélamine-polyamine fonctionnalisés et hautement ramifiés, pouvant être obtenus par le procédé selon l'une quelconque des revendications précédentes.

17. Polymères selon la revendication 16, dans lesquels les polymères ne sont essentiellement pas réticulés.

18. Polymères selon l'une quelconque des revendications 16 ou 17, ayant un poids moléculaire moyen en nombre Mₙ de 500 à 200 000.

19. Utilisation de polymères selon l'une quelconque des revendications 16 à 18 en tant qu'agents de surface.

20. Utilisation selon la revendication 19 en tant que tensioactifs, détergents, agents mouillants, émulsifiants, désémulsifiants, agents dispersants, colloïdes protecteurs, promoteurs d'adhésion, agents moussants, modificateurs de rhéologie, épaississants, réducteurs de la viscosité à l'état fondu pour polymères, agents liquéfiants pour adhésifs, agents collants ou résines, agents liquéfiants pour dispersions, liants pour adhésifs, agents collants et résines, liants pour textiles, agents de réticulation, solubilisants, agents d'encapsulation, agents de retannage, agents hydrophobants ou agents hydrophilisants.
